(19) Europäisches Patentamt
European Patent Office
Office européen des brevets

(11) EP 3 712 006 A1

(12) EUROPEAN PATENT APPLICATION

(43) Date of publication:
23.09.2020 Bulletin 2020/39

(51) Int Cl.:
B60L 53/00 (2019.01)       B60W 10/06 (2006.01)
B60W 10/08 (2006.01)       B60W 20/12 (2016.01)
B60W 50/00 (2006.01)

(21) Application number: 20163360.9

(22) Date of filing: 16.03.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 22.03.2019 JP 2019055544

(71) Applicant: TOYOTA JIDOSHA KABUSHIKI
KAISHA
Toyota-shi, Aichi-ken 471-8571 (JP)

(72) Inventor: KURIHASHI, Sui
Aichi-ken, 471-8571 (JP)

(74) Representative: J A Kemp LLP
14 South Square
Gray's Inn
London WC1R 5JJ (GB)

(54) **VEHICLE CONTROL SYSTEM, SERVER, HYBRID VEHICLE, AND NON-TRANSITORY STORAGE MEDIUM**

(57)     A vehicle control system (1) includes a hybrid vehicle (2) including an in-vehicle communication device (90) and an in-vehicle control device (200), and a server (3) including a communication circuit (301) configured to wirelessly communicate with the in-vehicle communication device (90), and a control circuit (303). The in-vehicle control device (200) transmits traveling data of the hybrid vehicle (2) to the communication circuit (301) at a predetermined time. The control circuit (303) includes a learning data creation circuit, a destination prediction circuit, and a prediction result transmission circuit. The learning data creation circuit creates predetermined learning data based on the traveling data received from the in-vehicle communication device (90). The destination prediction circuit sequentially predicts a first destination until the first destination becomes a predetermined specific destination. The prediction result transmission circuit transmits a first prediction result to the in-vehicle communication device (90) via the communication circuit (301).

**FIG. 1**

**Description**

BACKGROUND OF THE INVENTION

1. Field of the Invention

The present invention relates to a vehicle control system, a server, a hybrid vehicle, and a non-transitory storage medium.

2. Description of Related Art

Japanese Unexamined Patent Application Publication No. 2008-238972 (JP 2008-238972 A) discloses a vehicle control device configured to predict a destination based on a past traveling history of a vehicle when a destination is not set.

SUMMARY OF THE INVENTION

However, the vehicle control device disclosed in JP 2008-238972 A predicts a destination of a current trip during the current trip (a period from the time when a start switch of the vehicle is turned on to the time when the start switch is turned off), but cannot predict a destination of each subsequent trip after a first trip when the current trip is set as the first trip.

The present invention can predict a destination of each subsequent trip after a first trip.

A first aspect of the present invention is a vehicle control system. The vehicle control system includes a hybrid vehicle and a server. The hybrid vehicle includes an internal combustion engine and a rotating electric machine configured to be driven by electric power of a battery, an in-vehicle communication device, and an in-vehicle control device. The hybrid vehicle is configured to travel by an output from at least one of the internal combustion engine and the rotating electric machine. The server includes a communication circuit configured to wirelessly communicate with the in-vehicle communication device, and a control circuit. The in-vehicle control device is configured to transmit traveling data of the hybrid vehicle to the communication circuit via the in-vehicle communication device at a predetermined time. The control circuit includes a learning data creation circuit, a destination prediction circuit, and a prediction result transmission circuit. The learning data creation circuit is configured to create predetermined learning data based on the traveling data of the hybrid vehicle, which is received from the in-vehicle communication device via the communication circuit. The destination prediction circuit is configured to sequentially predict, based on the learning data, a first destination until the first destination becomes a predetermined specific destination. The first destination is a destination of each subsequent trip after a first trip having a known place as a departure point. The prediction result transmission circuit is configured to transmit a first prediction result including information on the predicted destination of each subsequent trip after the first trip to the in-vehicle communication device via the communication circuit.

With the above configuration, it is possible to predict a destination of each subsequent trip after a first trip.

In the first aspect, the destination prediction circuit may be configured to calculate, based on the learning data, a conditional probability of each known destination when an explanatory variable is given, using the departure point of a second trip as at least the explanatory variable and to set a destination having a highest conditional probability as the predicted destination of the second trip.

In the first aspect, the destination prediction circuit may be configured to set the predicted destination of the second trip as the departure point of a next trip of the second trip.

In the first aspect, the destination prediction circuit may be configured to use a departure day of a week of the second trip and a departure time range of the second trip as the explanatory variables.

In the first aspect, the in-vehicle control device may be configured to create, based on the first prediction result received via the in-vehicle communication device, a traveling plan that sets which traveling mode of an electric vehicle mode and a charge sustaining mode is used for the hybrid vehicle to travel in each traveling section on an expected route of each subsequent trip after the first trip. The electric vehicle mode may cause the hybrid vehicle to travel by controlling the output from the rotating electric machine. The charge sustaining mode may cause the hybrid vehicle to travel by controlling the output from the internal combustion engine and the output from the rotating electric machine. The in-vehicle control device may be configured to cause the hybrid vehicle to travel while switching the traveling mode according to the traveling plan.

In the first aspect, the in-vehicle control device may be configured to determine, when an end trip is ended, whether an actual destination of the end trip matches a predicted destination which is set as the destination of the end trip in the traveling plan. The end trip may be a trip in which the in-vehicle control device is causing the hybrid vehicle to travel while switching the traveling mode according to the traveling plan. The in-vehicle control device may be configured to determine, when the actual destination of the end trip does not match the predicted destination of the end trip, whether the actual destination of the end trip is a known destination that has been visited at least once. The in-vehicle control device may be configured to request, when the actual destination of the end trip is the known destination, the server via the in-vehicle communication device to transmit a second prediction result, and create a new traveling plan based on the second prediction result received via the in-vehicle communication device. The second prediction result may be a prediction result of the destination of each subsequent trip after a next trip of the end trip. The in-vehicle control device may be configured to cause the hybrid vehicle to travel while switching the traveling mode according to the new traveling plan from the next trip of the end trip.

In the first aspect, the in-vehicle control device may be configured to, when the actual destination of the end trip is not the known destination, cause the hybrid vehicle to travel in the next trip of the end trip by performing a regular traveling control of setting the traveling mode to the electric vehicle mode until a battery charge amount is lower than or equal to a predetermined switching charge amount, and to the charge sustaining mode after the battery charge amount is lower than or equal to the predetermined switching charge amount without using the traveling plan.

In the first aspect, the in-vehicle control device may be configured to determine, when a regular trip is ended, whether the actual destination of the ended regular trip is the known destination. The regular trip is a trip in which the in-vehicle control device is causing the hybrid vehicle to travel by performing the regular traveling control without using the traveling plan. The in-vehicle control device may be configured to request, when the actual destination of the regular trip is the known destination, the server via the in-vehicle communication device to transmit a third prediction result, and create the new traveling plan based on the third prediction result received via the in-vehicle communication device. The third prediction result may be a prediction result of the destination of each subsequent trip after a next trip of the regular trip. The in-vehicle control device may be configured to cause the hybrid vehicle to travel while switching the traveling mode according to the new traveling plan from the next trip of the regular trip.

In the first aspect, the in-vehicle control device may be configured to, when the actual destination of the regular trip is not the known destination, cause the hybrid vehicle to travel in the next trip of the regular trip by performing the regular traveling control without using the traveling plan.

In the first aspect, the in-vehicle control device may be configured to determine, when the actual destination of the end trip matches the predicted destination of the end trip, whether the predicted destination of the end trip is the specific destination. The in-vehicle control device may be configured to request, when the predicted destination of the end trip is the specific destination, the server via the in-vehicle communication device to transmit the second prediction result, and create the new traveling plan based on the second prediction result received via the in-vehicle communication device. The in-vehicle control device may be configured to cause the hybrid vehicle to travel while switching the traveling mode according to the newly created traveling plan from the next trip of the end trip.

In the first aspect, the in-vehicle control device may be configured to, when the predicted destination of the end trip is not the specific destination, continuously cause the hybrid vehicle to travel in the next trip of the end trip while switching the traveling mode according to the traveling plan which has been used in the end trip.

In the first aspect, the hybrid vehicle may be a plug-in hybrid vehicle chargeable from an outside. The specific destination may be a place where plug-in charging is available.

A second aspect of the present invention is a server. The server includes a communication circuit configured to communicate with an in-vehicle communication device mounted on a hybrid vehicle, and a control circuit. The control circuit includes a learning data creation circuit, a destination prediction circuit, and a prediction result transmission circuit. The learning data creation circuit is configured to create predetermined learning data based on traveling data of the hybrid vehicle, which is received from the in-vehicle communication device via the communication circuit. The destination prediction circuit is configured to sequentially predict, based on the learning data, a destination of each subsequent trip after a first trip having a known place as a departure point until the destination of each subsequent trip after the first trip becomes a predetermined specific destination. The prediction result transmission circuit is configured to transmit, to the in-vehicle communication device via the communication circuit, a destination prediction result including information on the predicted destination of each subsequent trip after the first trip.

With the above configuration, it is possible to predict a destination of each subsequent trip after a first trip.

A third aspect of the present invention is a hybrid vehicle. The hybrid vehicle includes an internal combustion engine, a rotating electric machine driven by electric power of a battery, an in-vehicle communication device configured to communicate with a server, and an in-vehicle control device. The in-vehicle control device includes a receiver configured to receive, from the server via the in-vehicle communication device, a prediction result of a destination of each subsequent trip after a first trip having a known place as a departure point, and a transmitter configured to transmit, to the server via the in-vehicle communication device at a predetermined time, traveling data of the hybrid vehicle required for predicting the destination of each subsequent trip after the first trip on the server.

With the above configuration, it is possible to predict a destination of each subsequent trip after a first trip.

A fourth aspect of the present invention is a non-transitory storage medium. The non-transitory storage medium stores instructions that are executable by one or more processors and that cause the one or more processors to perform functions including: creating predetermined learning data based on traveling data of a hybrid vehicle, which is received via a communication circuit configured to communicate with an in-vehicle communication device mounted on the hybrid vehicle; sequentially predicting, based on the learning data, a destination of each subsequent trip after a first trip having a known place as a departure point until the destination of each subsequent trip after the first trip becomes a predetermined specific destination, and transmitting, to the in-vehicle communication device via the communication circuit, a destination prediction result including information on the predicted destination of each subsequent trip after the first trip.

With the above configuration, it is possible to predict a destination of each subsequent trip after a first trip.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is an overall schematic configuration diagram of a vehicle control system according to an embodiment of the present invention;

FIG. 2 is a graph illustrating a relationship between a battery charge amount and a switching load;

FIG. 3 is a diagram illustrating an example of a traveling plan;

FIG. 4A is a diagram illustrating an example of a traveling plan in which an expected route of each trip is individually optimized;

FIG. 4B is a diagram illustrating an example of a traveling plan in which an entire expected route of a plurality of trips is optimized;

FIG. 5A is a table illustrating learning data (probability distributions of a departure point);

FIG. 5B is a table illustrating learning data (probability distributions of a departure day of the week);

FIG. 5C is a table illustrating learning data (probability distributions of a departure time range);

FIG. 5D is a table illustrating learning data (probability distributions of a destination);

FIG. 5E is a table illustrating learning data (probability distributions of a departure day of the week of a next trip);

FIG. 5F is a table illustrating learning data (probability distributions of a departure time range of a next trip);

FIG. 6A is a table illustrating learning data (conditional probability distributions of the departure point when the destination is given);

FIG. 6B is a table illustrating learning data (conditional probability distributions of the departure day of the week when the destination is given);

FIG. 6C is a table illustrating learning data (conditional probability distributions of the departure time range when the destination is given);

FIG. 7A is a table illustrating learning data (conditional probability distributions of the departure point when the departure day of the week of the next trip is given);

FIG. 7B is a table illustrating learning data (conditional probability distributions of the departure day of the week when the departure day of the week of the next trip is given);

FIG. 7C is a table illustrating learning data (conditional probability distributions of the departure time range when the departure day of the week of the next trip is given);

FIG. 8A is a table illustrating learning data (conditional probability distributions of the departure point when the departure time range of the next trip is given);

FIG. 8B is a table illustrating learning data (conditional probability distributions of the departure day of the week when the departure time range of the next trip is given);

FIG. 8C is a table illustrating learning data (conditional probability distributions of the departure time range when the departure time range of the next trip is given);

FIG. 9 is a flowchart describing control performed by an electronic control unit at the start of a trip;

FIG. 10 is a flowchart describing control performed by the electronic control unit at the end of the trip;

FIG. 11 is a flowchart describing control of learning data creation, performed by a server;

FIG. 12 is a flowchart describing control of destination prediction, performed by the server;

FIGS. 13A and 13B are flowcharts describing creation of a traveling plan according to an embodiment of the present invention;

FIGS. 14A to 14C are diagrams describing creation of a first traveling plan in which an expected route of each trip is individually optimized without consideration of fuel consumption for catalyst warm-up;

FIGS. 15A to 15G are diagrams describing creation of a second traveling plan in which the entire expected route of the plurality of trips is optimized in consideration of the fuel consumption for catalyst warm-up; and

FIG. 16A is a diagram describing creation of a second traveling plan, according to a modified example of the present invention, in which the entire expected route of the plurality of trips is optimized in consideration of the fuel consumption for catalyst warm-up.

FIG. 16B is a diagram describing creation of the second traveling plan, according to a modified example of the present invention, in which the entire expected route of the plurality of trips is optimized in consideration of the fuel amount consumed for catalyst warm-up (a second sorting process).

FIG. 16C is a diagram describing creation of the second traveling plan, according to a modified example of the present invention, in which the entire expected route of the plurality of trips is optimized in consideration of the fuel amount consumed for catalyst warm-up (a third sorting process).

FIGS. 16D is a diagram describing creation of the second traveling plan, according to a modified example of the present invention, in which the entire expected route of the plurality of trips is optimized in consideration of the fuel amount consumed for catalyst warm-up.

FIG. 16E is a diagram describing creation of another second traveling plan, according to a modified example of the present invention, in which the entire expected route of the plurality of trips is optimized in consideration of the fuel amount consumed for catalyst warm-up.

FIG. 16F is a diagram describing creation of another second traveling plan, according to a modified example of the present invention, in which the entire expected route of the plurality of trips is optimized in consideration of the fuel amount consumed for catalyst warm-up.

DETAILED DESCRIPTION OF EMBODIMENTS

Hereinafter, embodiments of the present invention will be described in detail with reference to the drawings. Moreover, in the description hereinbelow, similar components are denoted by the same reference numerals.

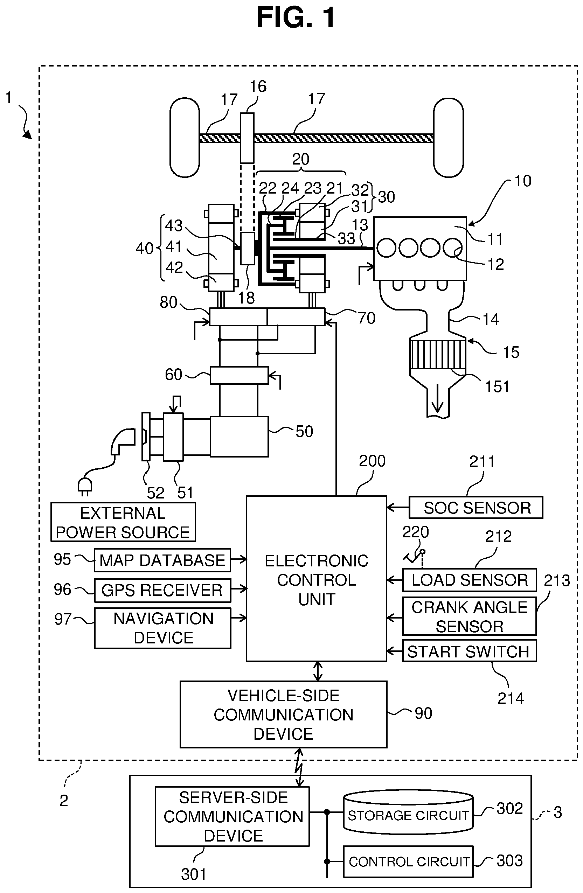

FIG. 1 is an overall schematic configuration diagram of a vehicle control system 1 according to an embodiment of the present invention.

The vehicle control system 1 includes a vehicle 2 and a server 3.

The vehicle 2 and the server 3 are configured to transmit and receive various pieces of information to and from each other. The vehicle 2 transmits, to the server 3, traveling data of the vehicle 2, such as a current position of the vehicle 2, at a predetermined time. The server 3 accumulates the traveling data received from the vehicle 2 and performs various calculations, or the like, based on the accumulated traveling data. Then, the server 3 transmits, to the vehicle 2, information obtained from the calculation result in response to a request from the vehicle 2. Next, detailed hardware configurations of the vehicle 2 and the server 3 will be described.

The vehicle 2 is a hybrid vehicle including an internal combustion engine 10, a power split device 20, a first rotating electric machine 30, a second rotating electric machine 40, a battery 50, a boost converter 60, a first inverter 70, a second inverter 80, a vehicle-side communication device 90, and an electronic control unit 200. The vehicle 2 is configured to transfer power from one or both of the internal combustion engine 10 and the second rotating electric machine 40 to a wheel drive shaft 17 through a final reduction gear 16. In addition to the above components, such as the internal combustion engine 10, the vehicle 2 includes a map database 95, a GPS receiver 96, and a navigation device 97.

The internal combustion engine 10 generates power for rotating an output shaft 13 connected to a crankshaft by burning fuel inside each cylinder 12 formed in an engine body 11. Exhaust gas discharged from each cylinder 12 to the exhaust passage 14 flows through the exhaust passage 14 and is discharged into the atmosphere. The exhaust passage 14 is provided with a catalyst device 15 that purifies harmful substances in the exhaust. The catalyst device 15 includes a honeycomb-shaped substrate 151. On the surface of the honeycomb-shaped substrate 151, a catalyst having an exhaust purification function (an exhaust purification catalyst), such as an oxidation catalyst and a three-way catalyst, is supported.

The power split device 20 is a planetary gear that splits power from the internal combustion engine 10 into two types of power for rotating the wheel drive shaft 17 and power for regeneratively driving the first rotating electric machine 30. The power split device 20 includes a sun gear 21, a ring gear 22, a pinion gear 23, and a planetary carrier 24.

The sun gear 21 is an external tooth gear and is disposed at the center of the power split device 20. The sun gear 21 is connected to a rotating shaft 33 of the first rotating electric machine 30.

The ring gear 22 is an internal tooth gear and is disposed around the sun gear 21 so as to be placed on a circle concentric with the sun gear 21. The ring gear 22 is connected to a rotating shaft 43 of the second rotating electric machine 40. In addition, a drive gear 18 that transfers rotation of the ring gear 22 to the wheel drive shaft 17 through the final reduction gear 16 is integrally attached to the ring gear 22.

The pinion gear 23 is an external tooth gear, and a plurality of pinion gears 23 is disposed between the sun gear 21 and the ring gear 22 so as to mesh with them.

The planetary carrier 24 is connected to the output shaft 13 of the internal combustion engine 10 and rotates around the output shaft 13. Moreover, the planetary carrier 24 is also connected to each pinion gear 23 so that each pinion gear 23 can rotate (revolve) around the sun gear 21 while rotating on its axis when the planetary carrier 24 rotates.

The first rotating electric machine 30 may be, for example, a three-phase alternating current synchronous motor generator. The first rotating electric machine 30 includes a rotor 31 which is attached to the outer periphery of a rotating shaft 33 connected to the sun gear 21 and in which a plurality of permanent magnets are embedded in the outer peripheral part, and a stator 32 around which an excitation coil that generates a rotating magnetic field is wound. The first rotating electric machine 30 can function as an electric motor driven by electric power supplied from the battery 50, and function as a generator regeneratively driven by power supplied from the internal combustion engine 10.

In the present embodiment, the first rotating electric machine 30 is mainly used as a generator. The first rotating electric machine 30 is used as an electric motor when cranking the internal combustion engine 10 by rotating the output shaft 13 at start of the internal combustion engine 10 and serves as a starter.

The second rotating electric machine 40 may be, for example, a three-phase alternating current synchronous motor generator. The second rotating electric machine 40 includes a rotor 41 which is attached to the outer periphery of a rotating shaft 43 connected to the ring gear 22 and in which a plurality of permanent magnets are embedded in the outer peripheral part, and a stator 42 around which an excitation coil that generates a rotating magnetic field is wound. The second rotating electric machine 40 can function as an electric motor driven by electric power supplied from the battery 50, and function as a generator regeneratively driven by power supplied from the wheel drive shaft 17, for example, at the time of deceleration of the vehicle.

The battery 50 is a chargeable and dischargeable secondary battery, such as a nickel and cadmium storage battery, a nickel and hydrogen storage battery, and a lithium ion battery. In the present embodiment, a lithium ion secondary battery with a rated voltage of approximately 200V is used as the battery 50. The battery 50 is electrically connected to the first rotating electric machine 30 and the second rotating electric machine 40 through the boost converter 60, and the like, so that the electric power charged in the battery 50 can be supplied to the first rotating electric machine 30 and the second rotating electric machine 40 in order to drive them, and that the electric power generated from the first rotating electric machine 30 and the second rotating electric machine 40 can be charged in the battery 50.

In the present embodiment, the battery 50 is configured to be electrically connected to an external power source through a charging control circuit 51 and a charging lid 52 so that the battery 50 can be charged from an external power source, such as a household outlet. In other words, the vehicle 2 according to the present embodiment may be a so-called plug-in hybrid vehicle. The charging control circuit 51 is an electric circuit that can convert alternating current supplied from the external power source into direct current, boost input voltage up to battery voltage, and supply the electric power of the external power source to the battery 50, based on a control signal from the electronic control unit 200.

The boost converter 60 includes an electric circuit that can boost voltage between primary-side terminals and output the boosted voltage from secondary-side terminals based on the control signal from the electronic control unit 200, and conversely, step down the voltage between the secondary-side terminals and output the stepped-down voltage from the primary-side terminals based on the control signal from the electronic control unit 200. The primary-side terminals of the boost converter 60 are connected to an output terminal of the battery 50 and the secondary-side terminals of the boost converter 60 are connected to respective direct current-side terminals of the first inverter 70 and the second inverter 80.

Both the first inverter 70 and the second inverter 80 include an electric circuit that can convert the direct current input from the direct current-side terminals into alternating current (three-phase alternating current in the present embodiment) and output the converted alternating current from the alternating current-side terminal based on the control signal from the electronic control unit 200, and conversely, convert the alternating current input from the alternating current-side terminal into direct current and output the converted direct current from the direct current-side terminals based on the control signal from the electronic control unit 200. The direct current-side terminal of the first inverter 70 is connected to a secondary-side terminal of the boost converter 60 and the alternating current-side terminal of the first inverter 70 is connected to an input and output terminal of the first rotating electric machine 30. The direct current-side terminal of the second inverter 80 is connected to the secondary-side terminal of the boost converter 60 and the alternating current-side terminal of the second inverter 80 is connected to an input and output terminal of the second rotating electric machine 40.

The vehicle-side communication device 90 is configured to perform wireless communication with a server-side communication device 301 of the server 3. The vehicle-side communication device 90 transmits, to the server 3, the traveling data of the vehicle 2 which is transmitted from the electronic control unit 200, and transmits various pieces of information received from the server 3 to the electronic control unit 200.

The map database 95 is a database for map information. The map database 95 is stored in, for example, a hard disk drive (HDD) installed in the vehicle 2. The map information includes various pieces of road information, such as road location information, road shape information (for example, a gradient, a type of a curve and a straight line, a curvature of a curve, and the like), location information of an intersection and a branch point, a road type, and a speed limit.

The GPS receiver 96 detects the current position of the vehicle 2 by receiving signals from three or more GPS satellites and specifying the latitude and longitude of the vehicle 2. The GPS receiver 96 transmits information on the detected current position of the vehicle 2 to the electronic control unit 200.

The navigation device 97 sets an expected route of the vehicle 2 based on information on the current position of the vehicle 2 detected by the GPS receiver 96, the map information from the map database 95, a destination set by a driver, and the like, and transmits information on the set expected route as navigation information to the electronic control unit 200.

The electronic control unit 200 is a microcomputer including a central processing unit (CPU), a read-only memory (ROM), a random access memory (RAM), an input port, and an output port that are connected to each other via a bidirectional bus.

Output signals from various sensors are input to the electronic control unit 200. Examples of the output signals include an SOC sensor 211 that detects a battery charge amount, a load sensor 212 that generates output voltage proportional to a degree of depression of an accelerator pedal 220, a crank angle sensor 213 that generates an output pulse as a signal for calculating engine rotation speed, and the like, every time the crankshaft of the engine body 11 rotates, for example, 15°, and a start switch 214 that determines the start and stop of the vehicle 2.

The electronic control unit 200 controls the vehicle 2 by driving each control component based on, for example, the output signals of various sensors input thereto.

The server 3 includes the server-side communication device 301, a storage circuit 302, and a control circuit 303. The server-side communication device 301, the storage circuit 302, and the control circuit 303 are connected to one another via signal lines.

The server-side communication device 301 is configured to wirelessly communicate with the vehicle-side communication device 90 of the vehicle 2. The server-side communication device 301 transmits, to the vehicle 2, the various pieces of information transmitted from the control circuit 303 in response to the request from the vehicle 2, and transmits, to the control circuit 303, the traveling data received from the vehicle 2.

The storage circuit 302 includes a storage medium, such as an HDD, an optical recording medium, and a semiconductor memory, and stores a computer program executed by the control circuit 303. In addition, the storage circuit 302 stores data generated by the control circuit 303, the traveling data, and the like, received by the control circuit 303 from the vehicle 2.

The control circuit 303 includes one or more processors that execute computer programs which perform control and calculation on the server 3, and peripheral circuits thereof.

Hereinafter, various types of control performed by the electronic control unit 200 according to the present embodiment and various types of control performed accordingly by the server 3 (more particularly, the control circuit 303 of the server 3) will be described.

First, the content of basic traveling control of the vehicle performed by the electronic control unit 200, and, more particularly, the content of basic switching control of a traveling mode will be described.

The electronic control unit 200 causes the vehicle 2 to travel by switching the traveling mode to one of an electric vehicle (EV) mode and a charge sustaining (CS) mode.

The EV mode causes the vehicle 2 to travel by driving the second rotating electric machine 40, preferentially using electric power charged in the battery 50, and transferring at least power from the second rotating electric machine 40 to the wheel drive shaft 17.

When the traveling mode is the EV mode, the electronic control unit 200 causes the vehicle 2 to travel by driving the second rotating electric machine 40 with electric power charged in the battery 50, in a state in which the internal combustion engine 10 is stopped, and by rotating the wheel drive shaft 17 only with power from the second rotating electric machine 40. In other words, when the traveling mode is the EV mode, the electronic control unit 200 causes the vehicle 2 to travel by controlling the output of the second rotating electric machine 40 based on the traveling load so that the required output corresponding to the traveling load can be obtained in the state in which the internal combustion engine 10 is stopped.

On the other hand, the CS mode causes the vehicle 2 to travel in such a way that the battery charge amount can be maintained at the same amount as the battery charge amount (hereinafter referred to as a "maintaining charge amount") at the time when the traveling mode is switched to the CS mode.

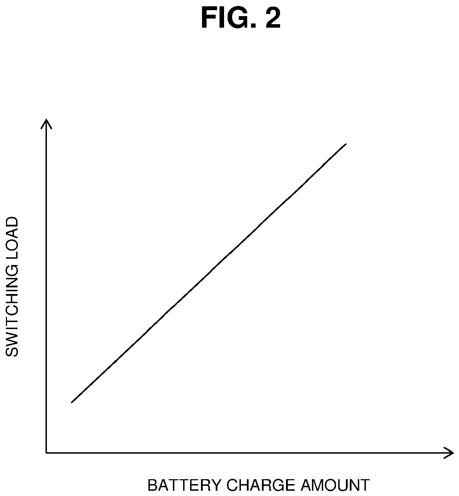

When the traveling mode is the CS mode, the electronic control unit 200 causes the vehicle 2 to travel by switching the traveling mode to one of the above-described EV mode and a hybrid vehicle (HV) mode. Specifically, when the traveling mode is the CS mode, the electronic control unit 200 sets the traveling mode to the EV mode when the traveling load is less than the switching load, and sets the traveling mode to the HV mode when the traveling load is larger than or equal to the switching load. As illustrated in FIG. 2, the electronic control unit 200 changes the switching load according to the battery charge amount such that the lower the battery charge amount is, the smaller the switching load becomes.

The HV mode causes the vehicle 2 to travel by driving the internal combustion engine 10 and driving the second rotating electric machine 40, preferentially using electric power generated from the first rotating electric machine 30, and by transferring power from both of the internal combustion engine 10 and the second rotating electric machine 40 to the wheel drive shaft 17. When the traveling mode becomes the HV mode during the CS mode, the electronic control unit 200 splits power from the internal combustion engine 10 into two types using the power split device 20, and transfers one side of the power split from the internal combustion engine 10 to the wheel drive shaft 17 and at the same time regeneratively drives the first rotating electric machine 30 using the other side of the split power. The electronic control unit 200 causes the vehicle 2 to travel by basically driving the second rotating electric machine 40 using electric power generated from the first rotating electric machine 30 and by transferring, to the wheel drive shaft 17, power from the second rotating electric machine 40 in addition to the one side of the power split from the internal combustion engine 10.

When the traveling mode is the CS mode and the battery charge amount is less than the maintaining charge amount while the vehicle 2 is stopped, the electronic control unit 200 charges the battery using electric power generated from the first rotating electric machine 30 by regeneratively driving the first rotating electric machine 30 using power from the internal combustion engine 10 so that the battery charge amount can become larger than or equal to the maintaining charge amount.

As described above, when the traveling mode is the CS mode, the electronic control unit 200 causes the vehicle 2 to travel by controlling the output of the internal combustion engine 10 and the second rotating electric machine 40 based on the battery charge amount and the traveling load so that the required output corresponding to the traveling load can be obtained.

As described above, in a case of a hybrid vehicle in which the traveling mode can be switched between the EV mode and the CS mode, the EV mode may be preferentially set as the traveling mode while the battery charge amount is sufficient so as to reduce fuel consumption.

On the other hand, the internal combustion engine 10 tends to have lower thermal efficiency as the engine load is lower. Therefore, the electronic control unit 200 may cause the vehicle 2 to travel by setting the traveling mode to the EV mode in a traveling section where start and stop are frequently repeated or low-speed traveling is continued, such as a traveling section with many traffic lights or a traveling section where traffic is heavy and traffic congestion easily occurs.

The electronic control unit 200 may cause the vehicle 2 to travel in a state in which traveling in the HV mode is possible by setting the traveling mode to the CS mode in a traveling section where traveling in an engine load region having high thermal efficiency is possible, such as a traveling section where steady traveling can be continued while maintaining a vehicle speed in a certain level or more.

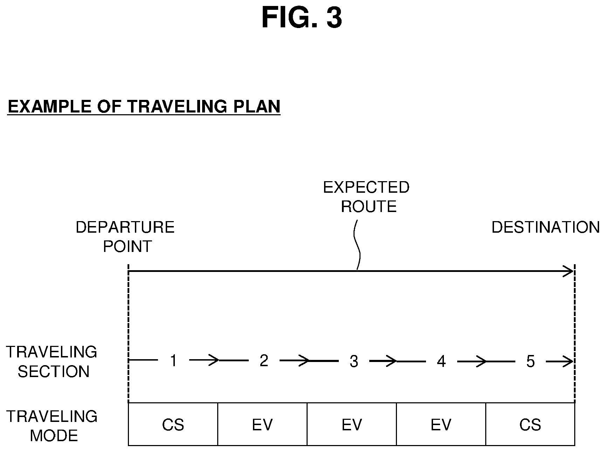

Therefore, in the case of a hybrid vehicle in which the traveling mode can be switched between the EV mode or the CS mode, for example, as illustrated in FIG. 3, an efficient way to reduce fuel consumption may be, to create a traveling plan that shows which section to travel in the EV mode and which section to travel in the CS mode on the expected route from a departure point to a destination and cause the vehicle 2 to travel while switching the traveling mode according to the traveling plan.

Here, as a result of the inventors' thorough research, it has been found that there are cases in which a fuel amount required for traveling can be reduced by creating a traveling plan that optimizes traveling of the entire traveling route consisting of a plurality of trips, such as a round trip between a home and a workplace, or a circle trip traveling around a plurality of destinations (via points) and returning to the original departure point, such as the home (the round trip consists of two trips: an outbound trip and a return trip, and the circle trip may consist of, for example, three trips where there are two destinations (via points)), rather than creating a traveling plan that optimizes traveling of one trip from the departure point to the destination. In the present embodiment, one trip is defined as a period from the time when the start switch 214 of the vehicle 2 is turned on to the time when it is turned off, but the present invention is not limited thereto, and one trip may be defined as a period from the time when the start switch 214 is turned on to the time when a shift lever is shifted from a drive range (a D range) to a parking range (a P range) by operation.

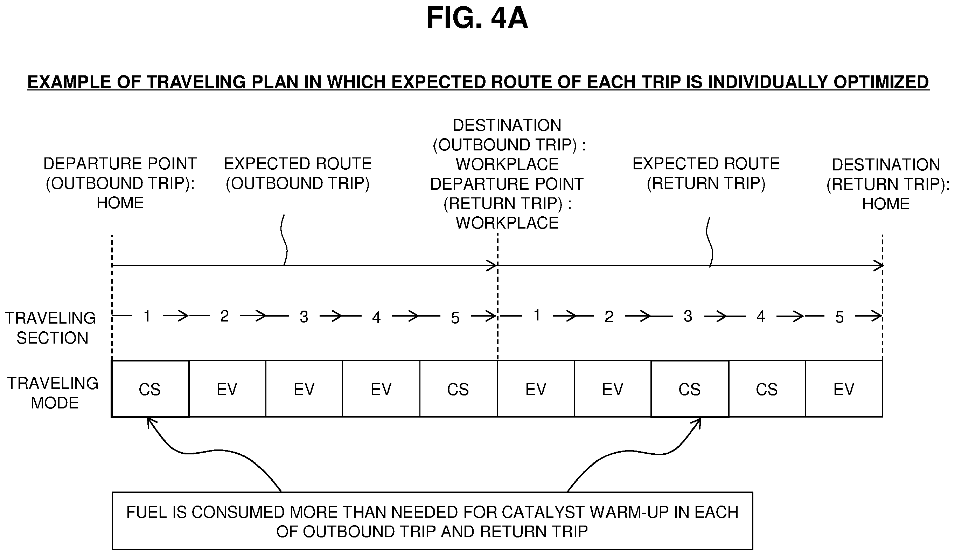

For example, assuming the round trip between the home and the workplace, as illustrated in FIG. 4A, in the case of the traveling plan in which traveling of each of the outbound and the return trips is optimized respectively, CS sections (traveling sections where the traveling mode is set to the CS mode) may be set on the expected route of both the outbound and the return trips. In the CS sections, when the traveling load becomes larger than or equal to the switching load, the HV mode is set and the internal combustion engine 10 is started. When the internal combustion engine 10 is started at the start of each trip, it is necessary to facilitate catalyst warm-up in order to secure the exhaust performance, such that the fuel is consumed more than needed for catalyst warm-up. Therefore, in the case of the traveling plan in which traveling of each of the outbound and the return trips is optimized, the fuel is consumed more than needed for catalyst warm-up at least once at each of the outbound and the return trips.

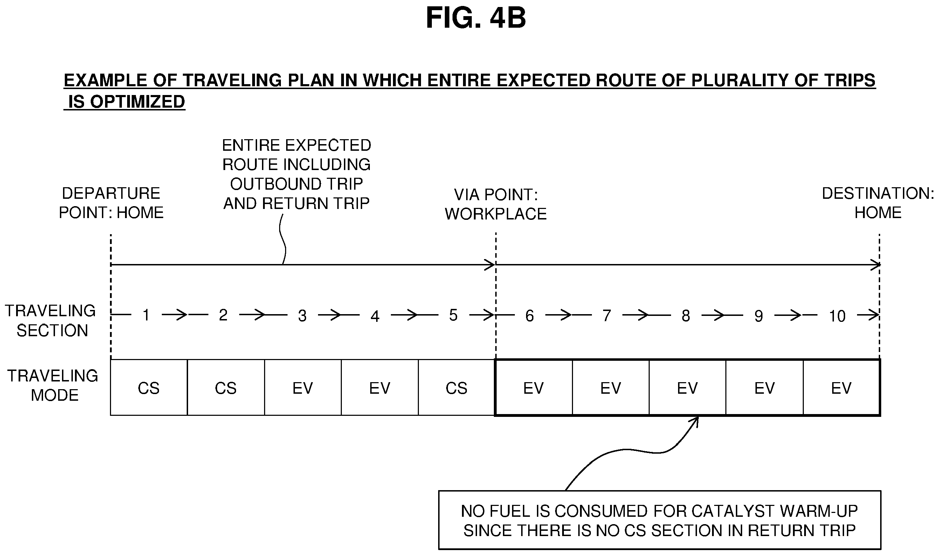

On the other hand, as illustrated in FIG. 4B, when the traveling plan for traveling in one of the outbound and the return trips entirely in the EV mode can be created by optimizing traveling of the entire traveling route consisting of two trips, that is, the outbound and the return trips, having the workplace as a via point, the catalyst warm-up can be achieved only once, such that fuel consumption for catalyst warm-up can be reduced. As a result, in the round trip between the home and the work place, the fuel consumption for catalyst warm-up is reduced by creating the traveling plan in which traveling of the entire traveling route is optimized rather than creating the traveling plan in which traveling of each of the outbound and the return trips is optimized, such that the total fuel consumption can be reduced.

Therefore, when a traveling plan in which traveling of the entire traveling route consisting of a plurality of trips is optimized can be created, there is a possibility that the fuel consumption of the hybrid vehicle can be further reduced. However, there are following shortcomings in creating a traveling plan in which traveling of a plurality of trips is optimized.

In other words, for creating a traveling plan, information on a destination is essential, and for creating a traveling plan in which traveling of a plurality of trips is optimized, at the start of the first trip among the plurality of trips to be optimized, information on the destination of each future trip to be performed after the first trip is required in addition to information on the destination of the first trip. Furthermore, information on whether the destination of each subsequent trip is a via point or a final destination is also required.

For example, as illustrated in FIG. 4B, for creation of the traveling plan that optimizes two trips, that is, the outbound and the return trips, between the home and the workplace, at the start of the outbound trip, information indicating that the destination of the outbound trip is the workplace and the destination of the return trip to be performed after the outbound trip is the home is required. Furthermore, information indicating that the workplace, which is the destination of the outbound trip, is a via point, and the home, which is the destination of the return trip, is the final destination is required.

However, the information on the destination cannot be acquired unless the driver sets the destination by operating, for example, the navigation device 97. In addition, even when the driver sets the destination at the start of the first trip, the set destination is usually the destination of the first trip. Therefore, the information on the destination of each future trip to be performed after the first trip cannot be acquired.

Thus, in the present embodiment, at the start of a trip having a known place that has been visited at least once as a departure point (hereinafter referred to as a "first trip"), the destination (a trip end point) of each subsequent trip after the first trip can be predicted sequentially until the destination of each subsequent trip after the first trip becomes a specific destination set in advance. The specific destination may be a main storage location for the vehicle 2, such as a parking lot at home. Further, when the vehicle 2 is a plug-in hybrid vehicle as in the present embodiment, the specific destination can be a place where plug-in charging is possible.

Specifically, in the present embodiment, a "departure point B", a "departure day of week C", a "departure time range D", and a "destination A" of each subsequent trip are acquired in every trip as traveling data for creation of learning data for predicting the destination of each subsequent trip after the first trip, using Bayesian inference, which is a type of machine learning. Based on the learning data created based on the traveling data, the destination of each subsequent trip after the first trip is predicted using the Bayesian inference that uses the departure point B, the departure day of the week C, and the departure time range D as explanatory variables.

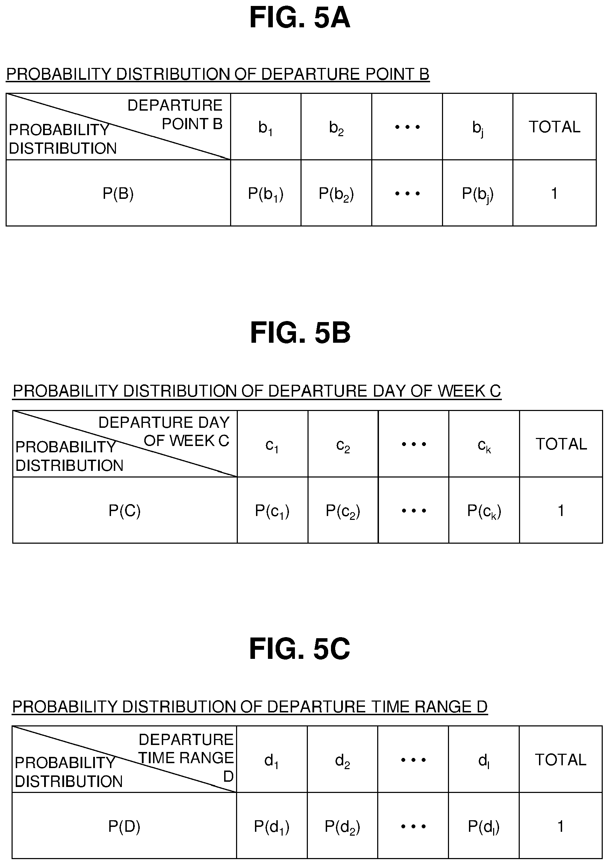

Hereinafter, first, learning data required for predicting the destination of each subsequent trip after the first trip using Bayesian inference will be described with reference to FIGS. 5A to 8C.

In the present embodiment, at the end of each subsequent trip, a departure point B, a departure day of the week C, a departure time range D, and a destination A of the trip are acquired. In the present embodiment, the current position acquired by the GPS receiver 96 at the start of each subsequent trip is acquired as the departure point B, and the current position acquired by the GPS receiver 96 at the end of each subsequent trip is acquired as the destination A.

In addition, at the start of each subsequent trip from a second subsequent trip after a first acquisition of the departure point B, the departure day of the week C, the departure time range D, and the destination A, the departure day of the week C, and the departure time range D of each subsequent trip after the first acquisition are acquired as a next-trip departure day of the week CZ and a next-trip departure time range of DZ respectively. Further, the next-trip departure day of the week CZ refers to the departure day of the week of the next trip that starts at the destination (that is, a departure point of the next trip) of a certain trip after arrival at the destination of the certain trip. The next-trip departure time range DZ refers to the departure time range of the next trip that starts at the destination (that is, a departure point of the next trip) of a certain trip after arrival at the destination of the certain trip.

Moreover, in the description hereinbelow, the departure points B at which the trips have started so far are denoted as $b_1$, $b_2$, ..., $b_j$ respectively. "j" is the number of known departure points at which the trips have started. Further, the departure day of the week C from Sunday to Saturday are denoted as $c_1$, $c_2$, ... , $c_k$ (k = 7) respectively, and the next-trip departure day of the week CZ from Sunday to Saturday are denoted as $cz_1$, $cz_2$, ... , $cz_k$ (k = 7) respectively. In addition, the departure time ranges D from 0 o'clock to 23 o'clock are denoted as $d_1$, $d_2$, ... , $d_1$ (l = 24) respectively, and the next-trip departure time ranges DZ from 00 o'clock to 23 o'clock are denoted as $dz_1$, $dz_2$, ... , $dz_1$ (1 = 24) respectively. Moreover, the destinations A that have been visited so far are denoted as ai, $a_2$, ... , $a_i$ respectively. "i" is the number of known destinations that have been visited so far.

In the present embodiment, based on the acquired traveling data, such as the departure point B, probability distributions P(B), P(C), P(D), P(A), P(CZ), and P(DZ) of the departure point B, the departure day of the week C, the departure time range D, the destination A, the next-trip departure day of the week CZ, and the next-trip departure time range DZ are created respectively as the learning data, as illustrated in FIGS. 5A to 5F.

FIG. 5A is a table illustrating the probability distribution P(B) of the departure point B.

As illustrated in FIG. 5A, the probability distribution P(B) of the departure point B represents the distribution of each of the probabilities $P(b_1)$, $P(b_2)$, ... , $P(b_j)$ in which the departure point B becomes each of the departure points $b_1$, $b_2$, ... , $b_j$, and the sum of the probabilities $P(b_1)$, $P(b_2)$, ..., $P(b_j)$ is 1.

In the present embodiment, for creation of the probability distribution P(B) of the departure point B, the number of trips that have started at each of the departure points $b_1$, $b_2$, ... , $b_j$ is counted individually for each departure point among the past trips, and accumulated as the traveling data. The probability distribution P(B) of the departure point B is created based on the accumulated traveling data. For example, when the number of the trips that have started at the departure point $b_1$ is 30 among the past 100 trips, the probability $P(b_1)$ is 0.3. The probability distribution P(B) of the departure point B is updated every time the departure point B is acquired at the end of each trip.

FIG. 5B is a table illustrating the probability distribution P(C) of the departure day of the week C.

As illustrated in FIG. 5B, the probability distribution P(C) of the departure day of the week C represents the distribution of each of the probabilities $P(c_1)$, $P(c_2)$, ... , $P(c_k)$ in which the departure day of the week C becomes each of the departure day of the week $c_1, c_2, ..., c_k$, and the sum of the probabilities $P(c_1)$, $P(c_2)$, ..., $P(c_k)$ is 1.

In the present embodiment, for creation of the probability distribution P(C) of the departure day of the week C, the number of trips that have started on each of the departure day of the week $c_1, c_2, ... , c_k$ is counted individually for each departure day of the week among the past trips, and accumulated as the traveling data. The probability distribution P(C) of the departure day of the week C is created based on the accumulated traveling data. For example, when the number of the trips that have started on the departure day of the week $c_1$ is 30 among the past 100 trips, the probability $P(c_1)$ is 0.3. The probability distribution P(C) of the departure day of the week C is updated every time the departure day of the week C is acquired at the end of each trip.

FIG. 5C is a table illustrating the probability distribution P(D) of the departure time range D.

As illustrated in FIG. 5C, the probability distribution P(D) of the departure time range D represents the distribution of each of the probabilities $P(d_1)$, $P(d_2)$, ... , $P(d_1)$ in which the departure time range D becomes each of the departure time ranges $d_1, d_2, ... , d_1$, and the sum of the probabilities $P(d_1)$, $P(d_2)$, ..., $P(d_1)$ is 1.

In the present embodiment, for creation of the probability distribution P(D) of the departure time range D, the number of trips that have started in each of the departure time ranges $d_1, d_2, ... , d_1$ is counted individually for each departure time range among the past trips, and accumulated as the traveling data. The probability distribution P(D) of the departure time range D is created based on the accumulated traveling data. For example, when the number of the trips that have started in the departure time range $d_1$ is 30 among the past 100 trips, the probability $P(d_1)$ is 0.3. The probability distribution P(D) of the departure time range D is updated every time the departure time range D is acquired at the end of each trip.

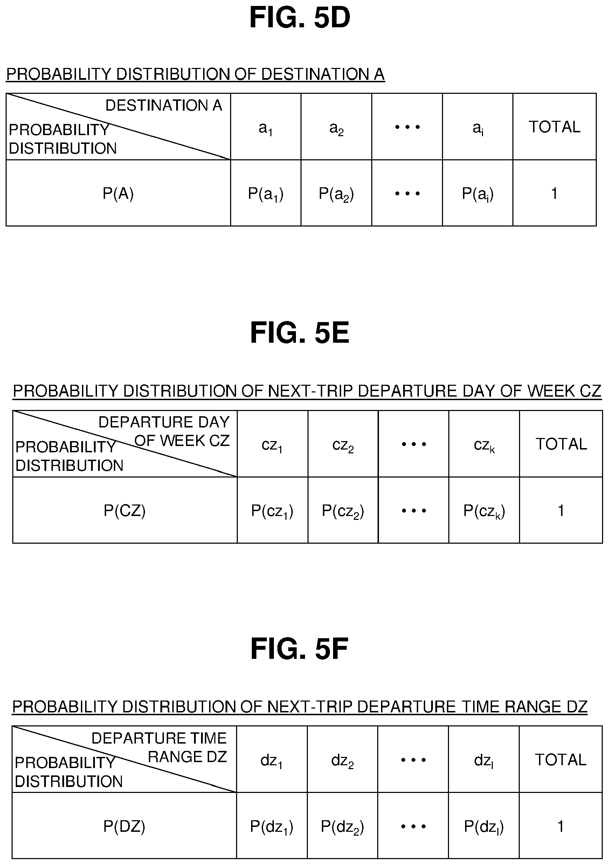

FIG. 5D is a table illustrating the probability distribution P(A) of the destination A.

As illustrated in FIG. 5D, the probability distribution P(A) of the destination A represents the distribution of each of the probabilities $P(a_1)$, $P(a_2)$, ... , $P(a_i)$ in which the destination A becomes each of the destinations $a_1, a_2, ... , a_i$, and the sum of the probabilities $P(a_1)$, $P(a_2)$, ..., $P(a_i)$ is 1.

In the present embodiment, for creation of the probability distribution P(A) of the destination A, the number of trips where the destination A becomes each of the destinations $a_1, a_2, ... , a_i$ is counted individually for each destination among the past trips, and accumulated as the traveling data. The probability distribution P(A) of the destination A is created based on the accumulated traveling data. For example, when the number of the trips where the destination A becomes the destination $a_1$ is 30 among the past 100 trips, the probability $P(a_1)$ is 0.3. The probability distribution P(A) of the destination A is updated every time the destination A is acquired at the end of each trip.

FIG. 5E is a table illustrating the probability distribution P(CZ) of the next-trip departure day of the week CZ.

As illustrated in FIG. 5E, the probability distribution P(CZ) of the next-trip departure day of the week CZ represents the distribution of each of the probabilities $P(cz_1)$, $P(cz_2)$, ... , $P(cz_k)$ in which the next-trip departure day of the week CZ becomes each of the next-trip departure day of the week $cz_1, cz_2, ... , cz_k$, and the sum of the probabilities $P(cz_1)$, $P(cz_2)$, ..., $P(cz_k)$ is 1.

In the present embodiment, for creation of the probability distribution P(CZ) of the next-trip departure day of the week CZ, the number of trips where the next-trip departure day of the week CZ becomes each of the departure day of the week $cz_1, cz_2, ... , cz_k$ is counted individually for each departure day of the week among the past trips, and accumulated as the traveling data. The probability distribution P(CZ) of the next-trip departure day of the week CZ is created based on the accumulated traveling data. For example, when the number of the trips where the next-trip departure day of the week CZ is the departure day of the week $cz_1$ is 30 among the past 100 trips, the probability $P(cz_1)$ is 0.3. The probability distribution P(CZ) of the next-trip departure day of the week CZ is updated every time the departure day of the week C of a started trip is acquired as the next-trip departure day of the week CZ at the start of each trip.

FIG. 5F is a table illustrating the probability distribution P(DZ) of the next-trip departure time range DZ.

As illustrated in FIG. 5F, the probability distribution P(DZ) of the next-trip departure time range DZ represents the distribution of each of the probabilities $P(dzi)$, $P(dz_2)$, ... , $P(dz_1)$ in which the next-trip departure time range DZ becomes each of the departure time ranges $dz_1, dz_2, ..., dz_1$, and the sum of the probabilities $P(dz_1)$, $P(dz_2)$, ... , $P(dz_1)$ is 1.

In the present embodiment, for creation of the probability distribution P(DZ) of the next-trip departure time range DZ, the number of trips where the next-trip departure time range DZ becomes each of the time ranges $dz_1, dz_2, ... , dz_1$ is counted individually for each departure time range among the past trips, and accumulated as the traveling data. The probability distribution P(DZ) of the next-trip departure time range DZ is created based on the accumulated traveling data. For example, when the number of the trips where the next-trip departure time range DZ of each trip is the time

range $dz_1$ is 30 among the past 100 trips, the probability $P(dz_1)$ is 0.3. The probability distribution $P(DZ)$ of the next-trip departure time range $DZ$ is updated every time the departure time range $D$ of a started trip is acquired as the next-trip departure time range $DZ$ at the start of each trip.

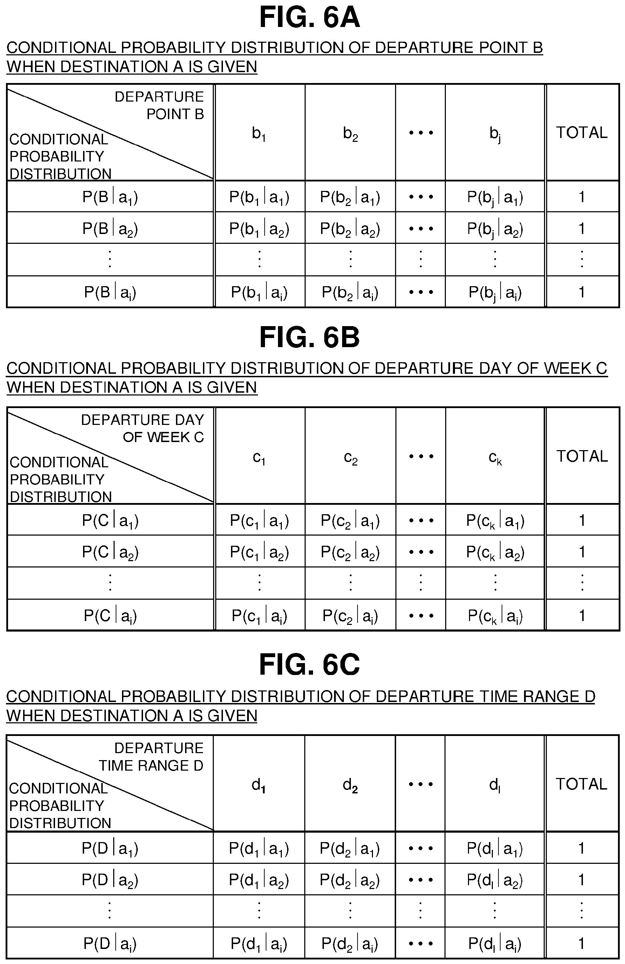

Moreover, in the present embodiment, based on the acquired traveling data, such as the departure point B, as illustrated in FIGS. 6A to 6C, the conditional probability distributions $P(B \mid a_1)$, $P(B \mid a_2)$, ... , $P(B \mid a_i)$ of the departure point B for each destination when the destination A is given, the conditional probability distributions $P(C \mid a_1)$, $P(C \mid a_2)$, ... , $P(C \mid a_i)$ of the departure day of the week C for each destination when the destination A is given, and the conditional probability distributions $P(D \mid a_1)$, $P(D \mid a_2)$, ... , $P(D \mid a_i)$ of the departure time range D for each destination when the destination A is given, are created as the learning data.

FIG. 6A is a table illustrating the conditional probability distributions $P(B \mid a_1)$, $P(B \mid a_2)$, ... , $P(B \mid a_i)$ of the departure point B for each destination when the destination A is given.

As illustrated in FIG. 6A, when the destination $a_1$ is given as the destination A, the conditional probability distribution $P(B \mid a_1)$ of the departure point B represents the distribution of each of the probabilities $P(b_1 \mid a_1)$, $P(b_2 \mid a_1)$, ... , $P(bj \mid a_1)$ in which the departure point B becomes each of the departure points $b_1$, $b_2$, ... , $b_j$ in a trip where the destination A is the destination ai, and the sum of the probabilities $P(b_1 \mid a_1)$, $P(b_2 \mid a_1)$, ..., $P(b_j \mid a_1)$ is 1.

Further, when the destination $a_2$ is given as the destination A, the conditional probability distribution $P(B \mid a_2)$ of the departure point B represents the distribution of each of the probabilities $P(b_1 \mid a_2)$, $P(b_2 \mid a_2)$, ... , $P(b_j \mid a_2)$ in which the departure point B becomes each of the departure points $b_1$, $b_2$, ... , $b_j$ in the trip where the destination A is the destination $a_2$. In addition, when the destination $a_i$ is given as the destination A, the conditional probability distribution $P(B \mid a_i)$ of the departure point B represents the distribution of each of the probabilities $P(b_1 \mid a_i)$, $P(b_2 \mid a_i)$, ... , $P(b_j \mid a_i)$ in which the departure point B becomes each of the departure points $b_1$, $b_2$, ... , $b_j$ in the trip where the destination A is the destination $a_i$.

In the present embodiment, for creation of the conditional probability distribution $P(B \mid a_1)$, the number of trips that have started at each of the departure points $b_1$, $b_2$, ... , $b_j$ is counted individually for each departure point among the past trips where the destination A is the destination ai, and accumulated as the traveling data. The conditional probability distribution $P(B \mid a_1)$ is created based on the accumulated traveling data. For example, when the number of trips where the destination A is the destination $a_1$ is 100 among the past trips and the number of trips where the departure point B is the departure point $b_1$ is 30 among the 100 trips, the probability $P(b_1 \mid a_1)$ is 0.3.

In the same manner as the above, for creation of the other conditional probability distributions $P(B \mid a_2)$, ... , $P(B \mid a_i)$, the number of trips that have started at each of the departure points $b_1$, $b_2$, ... , $b_j$ is counted individually for each departure point among the respective past trips where the destinations A are the respective destinations $a_2$, ... , $a_i$, and accumulated as the traveling data. Each of the conditional probability distributions $P(B \mid a_1)$, $P(B \mid a_2)$, ... , $P(B \mid a_i)$ is updated every time the departure point B and the destination A are acquired at the end of the respective trip.

FIG. 6B is a table illustrating the conditional probability distributions $P(C \mid a_i)$, $P(C \mid a_2)$, ... , $P(C \mid a_i)$ of the departure day of the week C for each destination when the destination A is given.

As illustrated in FIG. 6B, when the destination $a_1$ is given as the destination A, the conditional probability distribution $P(C \mid a_1)$ of the departure day of the week C represents the distribution of each of the probabilities $P(c_1 \mid a_1)$, $P(c_2 \mid a_1)$, ... , $P(c_k \mid a_1)$ in which the departure day of the week C becomes each of the departure day of the week $c_1$, $c_2$, ... , $c_k$ in a trip where the destination A is the destination ai, and the sum of the probabilities $P(c_1 \mid a_1)$, $P(c_2 \mid a_1)$, ..., $P(c_k \mid a_1)$ is 1.

Further, when the destination $a_2$ is given as the destination A, the conditional probability distribution $P(C \mid a_2)$ of the departure day of the week C represents the distribution of each of the probabilities $P(c_1 \mid a_2)$, $P(c_2 \mid a_2)$, ... , $P(c_k \mid a_2)$ in which the departure day of the week C becomes each of the departure day of the week $c_1$, $c_2$, ... , $c_k$ in the trip where the destination A is the destination $a_2$. In addition, when the destination $a_i$ is given as the destination A, the conditional probability distribution $P(C \mid a_i)$ of the departure day of the week C represents each of the distribution of probabilities $P(c_1 \mid a_i)$, $P(c_2 \mid a_i)$, ... , $P(c_k \mid a_i)$ in which the departure day of the week C becomes each of the departure day of the week $c_1$, $c_2$, ... , $c_k$ in the trip where the destination A is the destination $a_i$.

In the present embodiment, for creation of the conditional probability distribution $P(C \mid a_1)$, the number of trips that have started on each of the departure day of the week $c_1$, $c_2$, ... , $c_k$ is counted individually for each departure day of the week among the past trips where the destination A is the destination ai, and accumulated as the traveling data. The conditional probability distribution $P(C \mid a_1)$ is created based on the accumulated traveling data. For example, when the number of trips where the destination A is the destination $a_1$ is 100 among the past trips and the number of trips where the departure day of the week C is the departure day of the week $c_1$ is 30 among the 100 trips, the probability $P(c_1 \mid a_1)$ is 0.3.

In the same manner as the above, for creation of the other conditional probability distributions $P(C \mid a_2)$, ... , $P(C \mid a_i)$, the number of trips that have started on each of the departure day of the week $c_1$, $c_2$, ... , $c_k$ is counted individually for each departure day of the week among the respective past trips where destinations A are the respective destinations $a_2$, ... , ai, and accumulated as the traveling data. Each of the conditional probability distributions $P(C \mid a_1)$, $P(C \mid a_2)$,

... , P(C | $a_i$) is updated every time the departure day of the week C and the destination A are acquired at the end of the respective trip.

FIG. 6C is a table illustrating the conditional probability distributions P(D | $a_1$), P(D | $a_2$), ... , P(D | $a_i$) of the departure time range D for each destination when the destination A is given.

As illustrated in FIG. 6C, when the destination $a_1$ is given as the destination A, the conditional probability distribution P(D | $a_1$) of the departure time range D represents the distribution of each of the probabilities P($d_1$ | $a_1$), P($d_2$ | $a_1$), ... , P($d_1$ | $a_1$) in which the departure time range D becomes each of the departure time ranges $d_1$, $d_2$, ... , $d_1$ in the trip where the destination A is the destination ai, and the sum of the probabilities P($d_1$ | $a_1$), P($d_2$ | $a_1$), ..., P($d_1$ | $a_1$) is 1.

Further, when the destination $a_2$ is given as the destination A, the conditional probability distribution P(D | $a_2$) of the departure time range D represents the distribution of each of the probabilities P($d_1$ | $a_2$), P($d_2$ | $a_2$), ... , P($d_1$ | $a_2$) in which the departure time range D becomes each of the departure time ranges $d_1$, $d_2$, ... , $d_1$ in the trip where the destination A is the destination $a_2$. In addition, when the destination $a_i$ is given as the destination A, the conditional probability distribution P(D | $a_i$) of the departure time range D represents the distribution of the probabilities P($d_1$ | $a_i$), P($d_2$ | $a_i$), ... , P($d_1$ | $a_i$) in which the departure time range D becomes each of the departure ranges $d_1$, $d_2$, ... , $d_1$ in the trip where the destination A is the destination $a_i$.

In the present embodiment, for creation of the conditional probability distribution P(D | $a_1$), the number of trips that have started in each of the departure time ranges $d_1$, $d_2$, ... , $d_1$ is counted individually for each departure time range among the past trips where the destination A is the destination ai, and accumulated as the traveling data. The conditional probability distribution P(D | $a_1$) is created based on the accumulated traveling data. For example, when the number of trips where the destination A is the destination $a_1$ is 100 among the past trips and the number of trips where the departure time range D is the departure time range $d_1$ is 30 among the 100 trips, the probability P($d_1$ | $a_1$) is 0.3.

In the same manner as the above, for creation of the other conditional probability distributions P(D | $a_2$), ... , P(D | $a_i$), the number of trips that have started in each of the departure time ranges $d_1$, $d_2$, ... , $d_1$ is counted individually for each departure time range among the respective past trips where destinations A are the respective destinations $a_2$, ... , ai, and accumulated as the traveling data. Each of the conditional probability distributions P(D | $a_1$), P(D | $a_2$), ... , P(D | $a_i$) is updated every time the departure time range D and the destination A are acquired at the end of the respective trip.

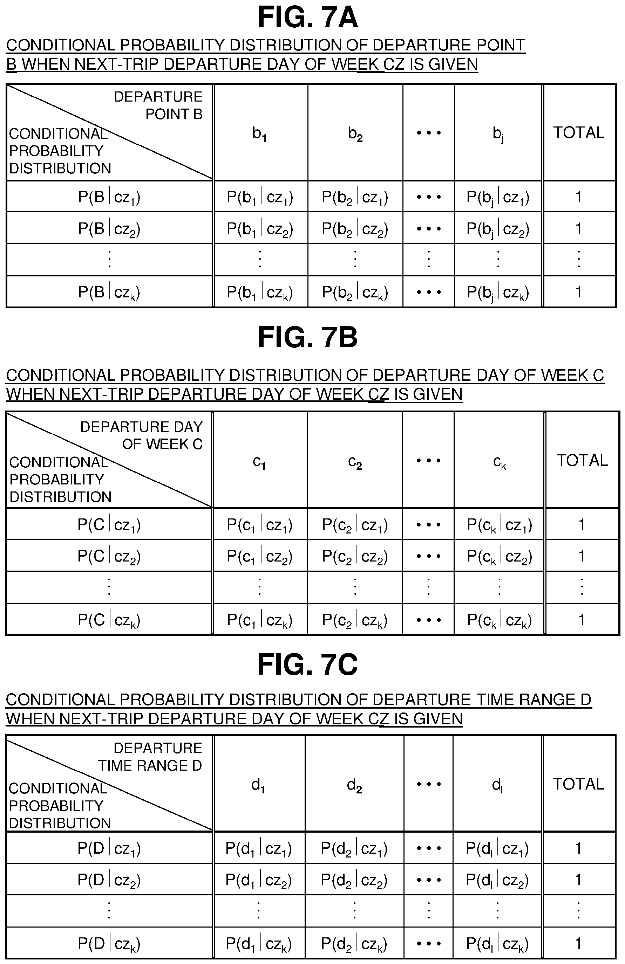

Moreover, in the present embodiment, based on the acquired traveling data, such as the departure point B, as illustrated in FIGS. 7A to 7C, the conditional probability distributions P(B | $cz_1$), P(B | $cz_2$), ... , P(B | $cz_k$) of the departure point B for each departure day of the week of the next trip when the next-trip departure day of the week CZ is given, the conditional probability distributions P(C | $cz_1$), P(C | $cz_2$), ..., P(C | $cz_k$) of the departure day of the week C for each departure day of the week of the next trip when the next-trip departure day of the week CZ is given, and the conditional probability distributions P(D | $cz_1$), P(D | $cz_2$), ... , P(D | $cz_k$) of the departure time range D for each departure day of the week of the next trip when the next-trip departure day of the week CZ is given, are created as the learning data.

FIG. 7A is a table illustrating the conditional probability distributions P(B | $cz_1$), P(B | $cz_2$), ... , P(B | $cz_k$) of the departure point B for each departure day of the week of the next trip when the next-trip departure day of the week CZ is given.

As illustrated in FIG. 7A, when the departure day of the week $cz_1$ is given as the next-trip departure day of the week CZ, the conditional probability distribution P(B | $cz_1$) of the departure point B represents the distribution of each of the probabilities P($b_1$ | $cz_1$), P($b_2$ | $cz_1$), ... , P($b_j$ | $cz_1$) in which the departure point B becomes each of the departure points $b_1$, $b_2$, ..., $b_j$ in a trip where the next-trip departure day of the week CZ is the departure day of the week $cz_1$, and the sum of the probabilities P($b_1$ | $cz_1$), P($b_2$ | $cz_1$), ..., P($bj$ | $cz_1$) is 1.

Further, when the departure day of the week $cz_2$ is given as the next-trip departure day of the week CZ, the conditional probability distribution P(B | $cz_2$) of the departure point B represents the distribution of each of the probabilities P($b_1$ | $cz_2$), P($b_2$ | $cz_2$), ... , P($b_j$ | $cz_2$) in which the departure point B becomes each of the departure points $b_1$, $b_2$, ... , $b_j$ in a trip where the next-trip departure day of the week CZ is the departure day of the week $cz_2$. In addition, when a departure day of the week $cz_k$ is given as the next-trip departure day of the week CZ, the conditional probability distribution P(B | $cz_k$) of the departure point B represents the distribution of each of the probabilities P($b_1$ | $cz_k$), P($b_2$ | $cz_k$), ... , P($b_j$ | $cz_k$) in which the departure point B becomes each of the departure points $b_1$, $b_2$, ... , $b_j$ in the trip where the next-trip departure day of the week CZ is the departure day of the week $cz_k$.

In the present embodiment, for creation of the conditional probability distribution P(B | $cz_1$), the number of trips that have started at each of the departure points $b_1$, $b_2$, ... , $b_j$ is counted individually for each departure point among the past trips where the next-trip departure day of the week CZ is the departure day of the week $cz_1$, and accumulated as the traveling data. The conditional probability distribution P(B | $cz_1$) is created based on the accumulated traveling data. For example, when the number of trips where the next-trip departure day of the week CZ is the departure day of the week $cz_1$ is 100 among the past trips and the number of trips where the departure point B is the departure point $b_1$ is 30 among the 100 trips, the probability P($b_1$ | $cz_1$) is 0.3.

In the same manner as the above, for creation of the other conditional probability distributions P(B | $cz_2$), ... ,

$P(B \mid cz_k)$, the number of trips that have started at each of the departure points $b_1$, $b_2$, ... , $b_j$ is counted individually for each departure point among the respective past trips where the next-trip departure day of the week CZ are the respective departure day of the week $cz_2$, ... , $cz_k$, and accumulated as the traveling data. Each of the conditional probability distributions $P(B \mid cz_1)$, $P(B \mid cz_2)$, ... , $P(B \mid cz_k)$ is updated every time the departure point B is acquired at the end of the respective trip and then the next-trip departure day of the week CZ is acquired at the start of the next trip of the respective trip.

FIG. 7B is a table illustrating the conditional probability distributions $P(C \mid cz_1)$, $P(C \mid cz_2)$, ... , $P(C \mid cz_k)$ of the departure day of the week C for each departure day of the week of the next trip when the next-trip departure day of the week CZ is given.

As illustrated in FIG. 7B, when the departure day of the week $cz_1$ is given as the next-trip departure day of the week CZ, the conditional probability distribution $P(C \mid cz_1)$ of the departure day of the week C represents the distribution of each of the probabilities $P(c_1 \mid cz_1)$, $P(c_2 \mid cz_1)$, ... , $P(c_k \mid cz_1)$ in which the departure day of the week C becomes each of the departure day of the week $c_1$, $c_2$, ... , $c_k$ in the trip where the next-trip departure day of the week CZ is the departure day of the week $cz_1$, and the sum of the probabilities $P(c_1 \mid cz_1)$, $P(c_2 \mid cz_1)$, ..., $P(c_k \mid cz_1)$ is 1.

Further, when the departure day of the week $cz_2$ is given as the next-trip departure day of the week CZ, the conditional probability distribution $P(C \mid cz_2)$ of the departure day of the week C represents the distribution of each of the probabilities $P(c_1 \mid cz_2)$, $P(c_{21} cz_2)$, ... , $P(c_k \mid cz_2)$ in which the departure day of the week C becomes each of the departure day of the week $c_1$, $c_2$, ... , $c_k$ in the trip where the next-trip departure day of the week CZ is the departure day of the week $cz_2$. In addition, when the departure day of the week $cz_k$ is given as the next-trip departure day of the week CZ, the conditional probability distribution $P(C \mid cz_k)$ of the departure day of the week C represents the distribution of each of the probabilities $P(c_1 \mid cz_k)$, $P(c_2 \mid cz_k)$, ... , $P(c_k \mid cz_k)$ in which the departure day of the week C becomes each of the departure day of the week $c_1$, $c_2$, ..., $c_k$ in a trip where the next-trip departure day of the week CZ is the departure day of the week $cz_k$.

In the present embodiment, for creation of the conditional probability distribution $P(C \mid cz_1)$, the number of trips that have started on each of the departure day of the week $c_1$, $c_2$, ... , $c_k$ is counted individually for each departure day of the week among the past trips where the next-trip departure day of the week CZ is the departure day of the week $cz_1$, and accumulated as the traveling data. The conditional probability distribution $P(C \mid cz_1)$ is created based on the accumulated traveling data. For example, when the number of trips where the next-trip departure day of the week CZ is the departure day of the week $cz_1$ is 100 among the past trips and the number of trips where the departure day of the week C is the departure day of the week $c_1$ is 30 among the 100 trips, the probability $P(c_1 \mid cz_1)$ is 0.3.

In the same manner as the above, for creation of the other conditional probability distributions $P(C \mid cz_2)$, ... , $P(C \mid cz_k)$, the number of trips that have started on each of the departure day of the week $c_1$, $c_2$, ... , $c_k$ is counted individually for each departure day of the week among the respective past trips where the next-trip departure day of the week CZ are the respective departure day of the week $cz_2$, ..., $cz_k$, and accumulated as the traveling data. Each of the conditional probability distributions $P(C \mid cz_1)$, $P(C \mid cz_2)$, ..., $P(C \mid cz_k)$ is updated every time the departure day of the week C is acquired at the end of the respective trip and then the next-trip departure day of the week CZ is acquired at the start of the next trip of the respective trip.

FIG. 7C is a table illustrating the conditional probability distributions $P(D \mid cz_1)$, $P(D \mid cz_2)$, ... , $P(D \mid cz_k)$ of the departure time range D for each departure day of the week of the next trip when the next-trip departure day of the week CZ is given.

As illustrated in FIG. 7C, when the departure day of the week $cz_1$ is given as the next-trip departure day of the week CZ, the conditional probability distribution $P(D \mid cz_1)$ of the departure time range D represents the distribution of each of the probabilities $P(d_1 \mid cz_1)$, $P(d_2 \mid cz_1)$, ... , $P(d_1 \mid cz_1)$ in which the departure time range D becomes each of the departure time ranges $d_1$, $d_2$, ... , $d_1$ in the trip where the next-trip departure day of the week CZ is the departure day of the week $cz_1$, and the sum of the probabilities $P(d_1 \mid cz_1)$, $P(d_2 \mid cz_1)$, ... , $P(d_1 \mid cz_1)$ is 1.

Further, when the departure day of the week $cz_2$ is given as the next-trip departure day of the week CZ, the conditional probability distribution $P(D \mid cz_2)$ of the departure time range D represents the distribution of each of the probabilities $P(d_1 \mid cz_2)$, $P(d_2 \mid cz_2)$, ... , $P(d_1 \mid cz_2)$ in which the departure time range D becomes each of the departure time ranges $d_1$, $d_2$, ... , $d_1$ in the trip where the next-trip departure day of the week CZ is the departure day of the week $cz_2$. In addition, when the departure day of the week $cz_k$ is given as the next-trip departure day of the week CZ, the conditional probability distribution $P(D \mid cz_k)$ of the departure time range D represents the distribution of each of the probabilities $P(d_1 \mid cz_k)$, $P(d_2 \mid cz_k)$, ... , $P(d_1 \mid cz_k)$ in which the departure time range D becomes each of the departure time ranges $d_1$, $d_2$, ... , $d_1$ in the trip where the next-trip departure day of the week CZ is the departure day of the week $cz_k$.

In the present embodiment, for creation of the conditional probability distribution $P(D \mid cz_1)$, the number of trips that have started in each of the departure time ranges $d_1$, $d_2$, ... , $d_1$ is counted individually for each departure time range among the past trips where the next-trip departure day of the week CZ is the departure day of the week $cz_1$, and accumulated as the traveling data. The conditional probability distribution $P(D \mid cz_1)$ is created based on the accumulated traveling data. For example, when the number of trips where the next-trip departure day of the week CZ is the departure day of the week $cz_1$ is 100 among the past trips and the number of trips where the departure time range D is the departure time range $d_1$ is 30 among the 100 trips, the probability $P(d_1 \mid cz_1)$ is 0.3.

In the same manner as the above, for creation of the other conditional probability distributions $P(D \mid cz_2)$, ... , $P(D \mid cz_k)$, the number of trips that have started in each of the departure time ranges $d_1$, $d_2$, ... , $d_1$ is counted individually for each departure time range among the respective past trips where the next-trip departure day of the week CZ are the respective departure day of the week $cz_2$, ... , $cz_k$, and accumulated as the traveling data. Each of the conditional probability distributions $P(D \mid cz_1)$, $P(D \mid cz_2)$, ... , $P(D \mid cz_k)$ is updated every time the departure time range D is acquired at the end of the respective trip and then the next-trip departure day of the week CZ is acquired at the start of the next trip of the respective trip.

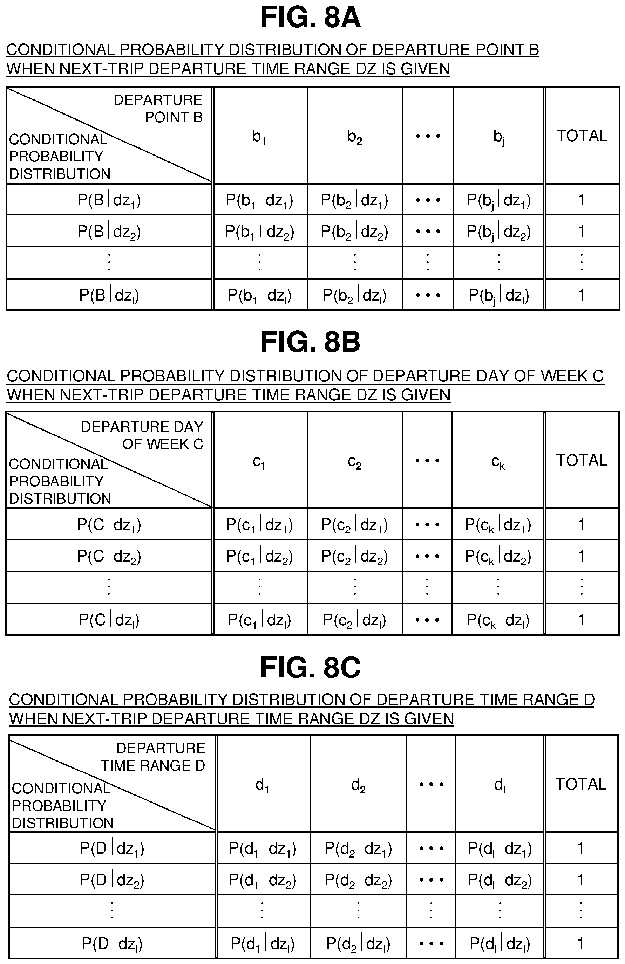

Moreover, in the present embodiment, based on the acquired traveling data, such as the departure point B, as illustrated in FIGS. 8A to 8C, the conditional probability distributions $P(B \mid dz_1)$, $P(B \mid dz_2)$, ... , $P(B \mid dz_1)$ of the departure point B for each departure time range of the next trip when the next-trip departure time range DZ is given, the conditional probability distributions $P(C \mid dz_1)$, $P(C \mid dz_2)$, ... , $P(C \mid dz_1)$ of the departure day of the week C for each departure time range of the next trip when the next-trip departure time range DZ is given, and the conditional probability distributions $P(D \mid dz_1)$, $P(D \mid dz_2)$, ... , $P(D \mid dz_1)$ of the departure time range D for each departure time range of the next trip when the next-trip departure time range DZ is given, are created as the learning data.

FIG. 8A is a table illustrating the conditional probability distributions $P(B \mid dz_1)$, $P(B \mid dz_2)$, ... , $P(B \mid dz_1)$ of the departure point B for each departure time range of the next trip when the next-trip departure time range DZ is given.

As illustrated in FIG. 8A, when a departure time range $dz_1$ is given as the next-trip departure time range DZ, the conditional probability distribution $P(B \mid dz_1)$ of the departure point B represents the distribution of each of the probabilities $P(b_1 \mid dz_1)$, $P(b_2 \mid dz_1)$, ... , $P(b_j \mid dz_1)$ in which the departure point B becomes each of the departure points $b_1$, $b_2$, ... , $b_j$ in a trip where the next-trip departure time range DZ is the departure time range $dz_1$, and the sum of the probabilities $P(b_1 \mid dz_1)$, $P(b_2 \mid dz_1)$, ..., $P(b_j \mid dz_1)$ is 1.

Further, when a departure time range $dz_2$ is given as the next-trip departure time range DZ, the conditional probability distribution $P(B \mid dz_2)$ of the departure point B represents the distribution of each of the probabilities $P(b_1 \mid dz_2)$, $P(b_2 \mid dz_2)$, ... , $P(b_j \mid dz_2)$ in which the departure point B becomes each of the departure points $b_1$, $b_2$, ... , $b_j$ in a trip where the next-trip departure time range DZ is the departure time range $dz_2$. In addition, when the departure time range $dz_1$ is given as the next-trip departure time range DZ, the conditional probability distribution $P(B \mid dz_1)$ of the departure point B represents the distribution of each of the probabilities $P(b_1 \mid dz_1)$, $P(b_2 \mid dz_1)$, ... , $P(b_j \mid dz_1)$ in which the departure point B becomes each of the departure points $b_1$, $b_2$, ... , $b_j$ in a trip in which the next-trip departure time range DZ is a departure time range $dz_1$.

In the present embodiment, for creation of the conditional probability distribution $P(B \mid dz_1)$, the number of trips that have started at each of the departure points $b_1$, $b_2$, ... , $b_j$ is counted individually for each departure point among the past trips where the next-trip departure time range DZ is the departure time range $dz_1$, and accumulated as the traveling data. The conditional probability distribution $P(B \mid dz_1)$ is created based on the accumulated traveling data. For example, when the number of trips where the next-trip departure time range DZ is the departure time range $dz_1$ is 100 among the past trips and the number of trips where the departure point B is the departure point $b_1$ is 30 among the 100 trips, the probability $P(b_1 \mid dz_1)$ is 0.3.

In the same manner as the above, for creation of the other conditional probability distributions $P(B \mid dz_2)$, ... , $P(B \mid dz_1)$, the number of trips that have started at each of the departure points $b_1$, $b_2$, ... , $b_j$ is counted individually for each departure point among the respective past trips where the next-trip departure time ranges DZ are the respective departure time ranges $dz_2$, ... , $dz_1$, and accumulated as the traveling data. Each of the conditional probability distributions $P(B \mid dz_1)$, $P(B \mid dz_2)$, ... , $P(B \mid dz_1)$ is updated every time the departure point B is acquired at the end of the respective trip and then the next-trip departure time range DZ is acquired at the start of the next trip of the respective trip.

FIG. 8B is a table illustrating the conditional probability distributions $P(C \mid dz_1)$, $P(C \mid dz_2)$, ... , $P(C \mid dz_1)$ of the departure day of the week C for each departure time range of the next trip when the next-trip departure time range DZ is given.

As illustrated in FIG. 8B, when the departure time range $dz_1$ is given as the next-trip departure time range DZ, the conditional probability distribution $P(C \mid dz_1)$ of the departure day of the week C represents the distribution of each of the probabilities $P(c_1 \mid dz_1)$, $P(c_2 \mid dz_1)$, ... , $P(c_k \mid dz_1)$ in which the departure day of the week C becomes each of the departure day of the week $c_1$, $c_2$, ... , $c_k$ in the trip where the next-trip departure time range DZ is the departure time range $dz_1$, and the sum of the probabilities $P(c_1 \mid dz_1)$, $P(c_2 \mid dz_1)$, ..., $P(c_k \mid dz_1)$ is 1.

Further, when the departure time range $dz_2$ is given as the next-trip departure time range DZ, the conditional probability distribution $P(C \mid dz_2)$ of the departure day of the week C represents the distribution of each of the probabilities $P(c_1 \mid dz_2)$, $P(c_2 \mid dz_2)$, ... , $P(c_k \mid dz_2)$ in which the departure day of the week C becomes each of the departure day of the week $c_1$, $c_2$, ... , $c_k$, in a trip where the next-trip departure time range DZ is the departure time range $dz_2$. In addition, when the departure time range $dz_1$ is given as the next-trip departure time range DZ, the conditional probability distribution $P(C \mid dz_1)$ of the departure day of the week C represents the distribution of each of the probabilities $P(c_1 \mid dz_1)$, $P(c_2 \mid$

$dz_1$), ... , $P(c_k \mid dz_1)$ in which the departure day of the week C becomes each of the departure day of the week $c_1$, $c_2$, ... , $c_k$ in the trip where the next-trip departure time range DZ is the departure time range $dz_1$.

In the present embodiment, for creation of the conditional probability distribution $P(C \mid dz_1)$, the number of trips that have started on each of the departure day of the week $c_1$, $c_2$, ... , $c_k$ is counted individually for each departure day among the past trips where the next-trip departure time range DZ is the departure time range $dz_1$, and accumulated as the traveling data. The conditional probability distribution $P(C \mid dz_1)$ is created based on the accumulated traveling data. For example, when the number of trips where the next-trip departure time range DZ is the departure time range $dz_1$ is 100 among the past trips and the number of trips where the departure day C is the departure day $c_1$ is 30 among the 100 trips, the probability $P(c_1 \mid dz_1)$ is 0.3.

In the same manner as the above, for creation of the other conditional probability distributions $P(C \mid dz_2)$, ... , $P(C \mid dz_1)$, the number of trips that have started on each of the departure day of the week $c_1$, $c_2$, ... , $c_k$ is counted individually for each departure day among the respective past trips where the next-trip departure time ranges DZ are the respective departure time ranges $dz_2$, ..., $dz_1$, and accumulated as the traveling data. Each of the conditional probability distributions $P(C \mid dz_1)$, $P(C \mid dz_2)$, ... , $P(C \mid dz_1)$ is updated every time the departure day C is acquired at the end of the respective trip and then the next-trip departure time range DZ is acquired at the start of the next trip of the respective trip.

FIG. 8C is a table illustrating the conditional probability distributions $P(D \mid dz_1)$, $P(D \mid dz_2)$, ... , $P(D \mid dz_1)$ of the departure time range D for each departure time range of the next trip when the next-trip departure time range DZ is given.

As illustrated in FIG. 8C, when the departure time range $dz_1$ is given as the next-trip departure time range DZ, the conditional probability distribution $P(D \mid dz_1)$ of the departure time range D represents the distribution of each of the probabilities $P(d_1 \mid dz_1)$, $P(d_2 \mid dz_1)$, ... , $P(d_1 \mid dz_1)$ in which the departure time range D becomes each of the departure time ranges $d_1$, $d_2$, ... , $d_1$ in the trip where the next-trip departure time range DZ is the departure time range $dz_1$, and the sum of the probabilities $P(d_1 \mid dz_1)$, $P(d_2 \mid dz_1)$, ... , $P(d_1 \mid dz_1)$ is 1.

Further, when the departure time range $dz_2$ is given as the next-trip departure time range DZ, the conditional probability distribution $P(D \mid dz_2)$ of the departure time range D represents the distribution of each of the probabilities $P(d_1 \mid dz_2)$, $P(d_2 \mid dz_2)$, ... , $P(d_1 \mid dz_2)$ in which the departure time range D becomes each of the departure time ranges $d_1$, $d_2$, ... , $d_1$ in the trip where the next-trip departure time range DZ is the departure time range $dz_2$. In addition, when the departure time range $dz_1$ is given as the next-trip departure time range DZ, the conditional probability distribution $P(D \mid dz_1)$ of the departure time range D represents the distribution of each of the probabilities $P(d_1 \mid dz_1)$, $P(d_2 \mid dz_1)$, ... , $P(d_1 \mid dz_1)$ in which the departure time range D becomes each of the departure time ranges $d_1$, $d_2$, ... , $d_1$ in the trip where the next-trip departure time range DZ is the departure time range $dz_1$.

In the present embodiment, for creation of the conditional probability distribution $P(D \mid dz_1)$, the number of trips that have started in each of the departure time ranges $d_1$, $d_2$, ... , $d_1$ is counted individually for each departure time range among the past trips where the next-trip departure time range DZ is the departure time range $dz_1$, and accumulated as the traveling data. The conditional probability distribution $P(D \mid dz_1)$ is created based on the accumulated traveling data. For example, when the number of trips where the next-trip departure time range DZ is the departure time range $dz_1$ is 100 among the past trips and the number of trips where the departure time range D is the departure time range $d_1$ is 30 among the 100 trips, the probability $P(d_1 \mid dz_1)$ is 0.3.

In the same manner as the above, for creation of the other conditional probability distributions $P(D \mid dz_2)$, ... , $P(D \mid dz_1)$, the number of trips that have started in each of the departure time ranges $d_1$, $d_2$, ... , $d_1$ is counted individually for each departure time range among the respective past trips where the next-trip departure time range DZ are the respective departure day of the week $dz_2$, ... , $dz_1$, and accumulated as the traveling data. Each of the conditional probability distributions $P(D \mid dz_1)$, $P(D \mid dz_2)$, ... , $P(D \mid dz_1)$ is updated every time the departure time range D is acquired at the end of the respective trip and then the next-trip departure day of the week DZ is acquired at the start of the next trip of the respective trip.

Next, a method of predicting the destination of each subsequent trip after the first trip based on the above-described learning data will be described.

In the present embodiment, based on the above-described learning data, the conditional probability of each known destination that has been visited so far is calculated when information that is identified at the start of the first trip, that is, 3 pieces of information, such as the departure point, the departure day of the week, and the departure time range of the first trip, is given, and the destination having the highest one among the calculated conditional probabilities is set as a predicted destination of the first trip.

For example, it is assumed that the departure point B is $b_1$, the departure day of the week C is $c_1$, the departure time range D is $d_1$ in the first trip and the known destinations A that have been visited so far are $a_1$, $a_2$, ... , ai, when the departure point $b_1$, the departure day of the week $c_1$, and the departure time range $d_1$ of the first trip are given, the conditional probabilities $P(a_1 \mid b_1, c_1, d_1)$, $P(a_2 \mid b_1, c_1, d_1)$, ... , $P(a_i \mid b_1, c_1, d_1)$ of the respective destinations $a_1$, $a_2$, ... , $a_i$ are expressed as the following equations (1) to (3) based on Bayesian inference:

$$P\left(a_1 \mid b_1, c_1, d_1\right) = \frac{P(a_1)P(b_1 \mid a_1)P(c_1 \mid a_1)P(d_1 \mid a_1)}{P(b_1, c_1, d_1)} \ldots (1)$$

$$P\left(a_2 \mid b_1, c_1, d_1\right) = \frac{P(a_2)P(b_1 \mid a_2)P(c_1 \mid a_2)P(d_1 \mid a_2)}{P(b_1, c_1, d_1)} \ldots (2)$$

$$\vdots$$

$$P\left(a_i \mid b_1, c_1, d_1\right) = \frac{P(a_i)P(b_1 \mid a_i)P(c_1 \mid a_i)P(d_1 \mid a_i)}{P(b_1, c_1, d_1)} \ldots (3)$$

As expressed in the equations (1) to (3), since the denominators of the respective conditional probabilities $P(a_1 \mid b_1, c_1, d_1)$, $P(a_2 \mid b_1, c_1, d_1)\ldots$ , $P(a_i \mid b_1, c_1, d_1)$ are the same, the following equation (4) is obtained when the proportion of the respective conditional probabilities $P(a_1 \mid b_1, c_1, d_1)$, $P(a_2 \mid b_1, c_1, d_1)\ldots$ , $P(a_i \mid b_1, c_1, d_1)$ is taken:

$$P\left(a_1 \mid b_1, c_1, d_1\right): \ldots : P\left(a_i \mid b_1, c_1, d_1\right)$$
$$= P(a_1)P\left(b_1 \mid a_1\right)P\left(c_1 \mid a_1\right)P\left(d_1 \mid a_1\right): \ldots :$$
$$P(a_i)P\left(b_1 \mid a_i\right)P\left(c_1 \mid a_i\right)P\left(d_1 \mid a_i\right) \ldots (4)$$

Therefore, the respective conditional probabilities $P(a_1 \mid b_1, c_1, d_1)$, $P(a_2 \mid b_1, c_1, d_1)$, ... , $P(a_i \mid b_1, c_1, d_1)$ can be re-expressed as the following equations (5) to (7):

$$P\left(a_1 \mid b_1, c_1, d_1\right) = \frac{P(a_1)P(b_1 \mid a_1)P(c_1 \mid a_1)P(d_1 \mid a_1)}{P(a_1)P(b_1 \mid a_1)P(c_1 \mid a_1)P(d_1 \mid a_1) + \ldots + P(a_i)P(b_1 \mid a_i)P(c_1 \mid a_i)P(d_1 \mid a_i)} \ldots (5)$$

$$P\left(a_2 \mid b_1, c_1, d_1\right) = \frac{P(a_2)P(b_1 \mid a_2)P(c_1 \mid a_2)P(d_1 \mid a_2)}{P(a_1)P(b_1 \mid a_1)P(c_1 \mid a_1)P(d_1 \mid a_1) + \ldots + P(a_i)P(b_1 \mid a_i)P(c_1 \mid a_i)P(d_1 \mid a_i)} \ldots (6)$$

$$\vdots$$

$$P\left(a_i \mid b_1, c_1, d_1\right) = \frac{P(a_i)P(b_1 \mid a_i)P(c_1 \mid a_i)P(d_1 \mid a_i)}{P(a_1)P(b_1 \mid a_1)P(c_1 \mid a_1)P(d_1 \mid a_1) + \ldots + P(a_i)P(b_1 \mid a_i)P(c_1 \mid a_i)P(d_1 \mid a_i)} \ldots (7)$$

All of the parameters on the right sides of the equations (5) to (7), that is, the probability $P(a_1)$, the conditional probability $P(b_1 \mid a_1)$, or the like, can be obtained from the above-described learning data, that is, the probability distribution $P(A)$ of the destination A, the probability distribution $P(B \mid a_1)$ of the departure point B when the destination $a_1$ is given as the destination A, or the like. Therefore, the respective conditional probabilities $P(a_1 \mid b_1, c_1, d_1)$, $P(a_2 \mid b_1, c_1, d_1)$, ... , $P(a_i \mid b_1, c_1, d_1)$ can be calculated based on the above-described learning data.

Further, since the joint probability $P(b_1, c_1, d_1)$ that is the denominator of the equations (1) to (3) is the probability in which the departure point B is $b_1$, the departure day of the week C is $c_1$, and the departure time range D is $d_1$, the joint probability $P(b_1, c_1, d_1)$ can be re-expressed as the following equation (8):

$$P(b_1, c_1, d_1) = P(b_1)P(c_1)P(d_1) \ldots (8)$$

All of the probability $P(b_1)$, the probability $P(c_1)$, and the probability $P(d_1)$ can be obtained from the above-described learning data, that is, the probability distribution $P(B)$ of the departure point B, the probability distribution $P(C)$ of the departure day of the week C, and the probability distribution $P(D)$ of the departure time range D, respectively. Therefore, the respective conditional probabilities $P(a_1 \mid b_1, c_1, d_1)$, $P(a_2 \mid b_1, c_1, d_1)$, ... , $P(a_i \mid b_1, c_1, d_1)$ may be calculated

by substituting the equation (8) for the equations (1) to (3).

As described above, in the present embodiment, the destination having the highest probability among the conditional probabilities $P(a_1 | b_1, c_1, d_1)$, $P(a_2 | b_1, c_1, d_1)$, ... , $P(a_i | b_1, c_1, d_1)$ that are calculated as the above is set as the predicted destination of the first trip. For example, when $P(a_1 | b_1, c_1, d_1)$ is the highest one among the conditional probabilities $P(a_1 | b_1, c_1, d_1)$, $P(a_2 | b_1, c_1, d_1)$, ... , $P(a_i | b_1, c_1, d_1)$, the destination $a_1$ is set as the predicted destination of the first trip.

Here, when the destination $a_1$ set as the predicted destination of the first trip is a specific destination, the destination $a_1$ that is the predicted destination of the first trip is set as the final destination, and the destination prediction is ended without setting a via point.

On the other hand, when the destination $a_1$ set as the predicted destination of the first trip is not a specific destination, the destination $a_1$ that is the predicted destination of the first trip is set as both a departure point of the next trip (the second trip) and a via point.

In a manner similar to the prediction of the destination of the first trip, the conditional probability of each known destination that has been visited so far is calculated when the departure point, the departure day of the week, and the departure time range of the second trip are given, and the destination having the highest one among the calculated conditional probabilities is set as a predicted destination of the second trip. Here, the departure point of the second trip is set as the predicted destination of the first trip as described above, but the information on the departure day of the week and the departure time range of the second trip is not identified.

Therefore, in the present embodiment, when the predicted destination of the first trip is not a specific destination, the conditional probability for each departure day of the week of the next trip is additionally calculated when the departure point, the departure day of the week, and the departure time range of the first trip are given, and the departure day of the week having the highest one among the calculated conditional probabilities is set as the departure day of the week of the next trip (the departure day of the week of the second trip). Further, the conditional probability for each departure time range of the next trip is calculated when the departure point, the departure day of the week, and the departure time range of the first trip are given, and the departure time range having the highest one among the calculated conditional probabilities is set as the departure time range of the next trip (the departure time range of the second trip). As such, the conditional probability of each known destination that has been visited so far can be calculated when the departure point, the departure day of the week, and the departure time range of the second trip are given.

Moreover, when the departure point $b_1$, the departure day of the week $c_1$, and the departure time range $d_1$ of the first trip are given, the conditional probabilities $P(cz_1 | b_1, c_1, d_1)$, $P(cz_2 | b_1, c_1, d_1)$, ... , $P(cz_k | b_1, c_1, d_1)$ of the respective next-trip departure day of the week $cz_1$, $cz_2$, ... , $cz_k$ are expressed as the following equations (9) to (11) based on Bayesian inference:

$$P\left(cz_1 \mid b_1, c_1, d_1\right) = \frac{P(cz_1)P(b_1 \mid cz_1)P(c_1 \mid cz_1)P(d_1 \mid cz_1)}{P(b_1, c_1, d_1)} \cdots (9)$$

$$P\left(cz_2 \mid b_1, c_1, d_1\right) = \frac{P(cz_2)P(b_1 \mid cz_2)P(c_1 \mid cz_2)P(d_1 \mid cz_2)}{P(b_1, c_1, d_1)} \cdots (10)$$

$$\vdots$$

$$P\left(cz_k \mid b_1, c_1, d_1\right) = \frac{P(cz_k)P(b_1 \mid cz_k)P(c_1 \mid cz_k)P(d_1 \mid cz_k)}{P(b_1, c_1, d_1)} \cdots (11)$$

Therefore, in a manner similar to the respective conditional probabilities $P(a_1 | b_1, c_1, d_1)$, $P(a_2 | b_1, c_1, d_1)$, ... , $P(a_i | b_1, c_1, d_1)$ that are described above, the respective conditional probabilities $P(cz_1 | b_1, c_1, d_1)$, $P(cz_2 | b_1, c_1, d_1)$, ... , $P(cz_k | b_1, c_1, d_1)$ can be re-expressed as the following equations (12) to (14):

$$P\left(cz_1 \mid b_1, c_1, d_1\right)$$

$$= \frac{P(cz_1)P(b_1 \mid cz_1)P(c_1 \mid cz_1)P(d_1 \mid cz_1)}{P(cz_1)P(b_1 \mid cz_1)P(c_1 \mid cz_1)P(d_1 \mid cz_1) + \ldots + P(cz_k)P(b_1 \mid cz_k)P(c_1 \mid cz_k)P(d_1 \mid cz_k)} \cdots (12)$$

$$\mathrm{P}\!\left(cz_2 \mid b_1, c_1, d_1\right)$$

$$= \frac{P(cz_2)P(b_1 \mid cz_2)P(c_1 \mid cz_2)P(d_1 \mid cz_2)}{P(cz_1)P(b_1 \mid cz_1)P(c_1 \mid cz_1)P(d_1 \mid cz_1)+\ldots+ P(cz_k)P(b_1 \mid cz_k)P(c_1 \mid cz_k)P(d_1 \mid cz_k)} \ldots (13)$$

$$\vdots$$

$$\mathrm{P}\!\left(cz_k \mid b_1, c_1, d_1\right)$$

$$= \frac{P(cz_k)P(b_1 \mid cz_k)P(c_1 \mid cz_k)P(d_1 \mid cz_k)}{P(cz_1)P(b_1 \mid cz_1)P(c_1 \mid cz_1)P(d_1 \mid cz_1)+\ldots+ P(cz_k)P(b_1 \mid cz_k)P(c_1 \mid cz_k)P(d_1 \mid cz_k)} \ldots (14)$$

All of the parameters on the right sides of the equations (12) to (14), that is, the probability $P(cz_1)$, the conditional probability $P(b_1 \mid cz_1)$, or the like, can be obtained from the above-described learning data, that is, the probability distribution $P(CZ)$ of the next-trip departure day of the week CZ, the probability distribution $P(B \mid cz_1)$ of the departure point B when the departure day of the week $cz_1$ is given as the next-trip departure day of the week CZ, or the like. Therefore, the respective conditional probabilities $P(cz_1 \mid b_1, c_1, d_1)$, $P(cz_2 \mid b_1, c_1, d_1)$, ... , $P(cz_k \mid b_1, c_1, d_1)$ can be calculated based on the above-described learning data. Alternatively, as described above, the respective conditional probabilities $P(cz_1 \mid b_1, c_1, d_1)$, $P(cz_2 \mid b_1, c_1, d_1)$, ... , $P(cz_k \mid b_1, c_1, d_1)$ can be calculated by substituting the equation (8) for the equations (9) to (11).

Then, the next-trip departure day of the week having the highest one among the conditional probabilities $P(cz_1 \mid b_1, c_1, d_1)$, $P(cz_2 \mid b_1, c_1, d_1)$, ... , $P(cz_k \mid b_1, c_1, d_1)$ that are calculated as the above is set as the predicted departure day of the week of the next trip after the first trip (the departure day of the week of the second trip). For example, when the conditional probability $P(cz_1 \mid b_1, c_1, d_1)$ is the highest one among the conditional probabilities $P(cz_1 \mid b_1, c_1, d_1)$, $P(cz_2 \mid b_1, c_1, d_1)$, ... , $P(cz_k \mid b_1, c_1, d_1)$, the departure day of the week $cz_1$ (the departure day of the week $c_1$) is set as the departure day of the week of the second trip.

Further, the respective conditional probabilities $P(dz_1 \mid b_1, c_1, d_1)$, $P(dz_2 \mid b_1, c_1, d_1)$, ... , $P(dz_1 \mid b_1, c_1, d_1)$ of the next-trip departure time ranges $dz_1$, $dz_2$, ... , $dz_1$ when the departure point $b_1$, the departure day of the week $c_1$, and the departure time range $d_1$ of the first trip are given, are expressed as the following equations (15) to (17) based on Bayesian inference:

$$\mathrm{P}\!\left(dz_1 \mid b_1, c_1, d_1\right) = \frac{P(dz_1)P(b_1 \mid dz_1)P(c_1 \mid dz_1)P(d_1 \mid dz_1)}{P(b_1,c_1,d_1)} \ldots (15)$$

$$\mathrm{P}\!\left(dz_2 \mid b_1, c_1, d_1\right) = \frac{P(dz_2)P(b_1 \mid dz_2)P(c_1 \mid dz_2)P(d_1 \mid dz_2)}{P(b_1,c_1,d_1)} \ldots (16)$$

$$\vdots$$

$$\mathrm{P}\!\left(dz_l \mid b_1, c_1, d_1\right) = \frac{P(dz_l)P(b_1 \mid dz_l)P(c_1 \mid dz_l)P(d_1 \mid dz_l)}{P(b_1,c_1,d_1)} \ldots (17)$$

Therefore, in a manner similar to the respective conditional probabilities $P(a_1 \mid b_1, c_1, d_1)$, $P(a_2 \mid b_1, c_1, d_1)$, ... , $P(a_i \mid b_1, c_1, d_1)$ that are described above, the respective conditional probabilities $P(dz_1 \mid b_1, c_1, d_1)$, $P(dz_2 \mid b_1, c_1, d_1)$, ... , $P(dz_1 \mid b_1, c_1, d_1)$ can be re-expressed as the following equations (18) to (20):

$$P\left(dz_1 \mid b_1, c_1, d_1\right)$$

$$= \frac{P(dz_1)P(b_1 \mid dz_1)P(c_1 \mid dz_1)P(d_1 \mid dz_1)}{P(dz_1)P(b_1 \mid dz_1)P(c_1 \mid dz_1)P(d_1 \mid dz_1)+\ldots+ P(dz_l)P(b_1 \mid dz_l)P(c_1 \mid dz_l)P(d_1 \mid dz_l)} \ldots (18)$$

$$P\left(dz_2 \mid b_1, c_1, d_1\right)$$

$$= \frac{P(dz_2)P(b_1 \mid dz_2)P(c_1 \mid dz_2)P(d_1 \mid dz_2)}{P(dz_1)P(b_1 \mid dz_1)P(c_1 \mid dz_1)P(d_1 \mid dz_1)+\ldots+ P(dz_l)P(b_1 \mid dz_l)P(c_1 \mid dz_l)P(d_1 \mid dz_l)} \ldots (19)$$

$$\vdots$$

$$P\left(dz_l \mid b_1, c_1, d_1\right)$$

$$= \frac{P(dz_l)P(b_1 \mid dz_l)P(c_1 \mid dz_l)P(d_1 \mid dz_l)}{P(dz_1)P(b_1 \mid dz_1)P(c_1 \mid dz_1)P(d_1 \mid dz_1)+\ldots+ P(dz_l)P(b_1 \mid dz_l)P(c_1 \mid dz_l)P(d_1 \mid dz_l)} \ldots (20)$$

All of the parameters on the right sides of the equations (18) to (20), that is, the probability $P(dz_1)$, the conditional probability $P(b_1 \mid dz_1)$, or the like, can be obtained from the above-described learning data, that is, the probability distribution $P(DZ)$ of the next-trip departure time range $DZ$, the probability distribution $P(B \mid dz_1)$ of the departure point $B$ when the departure time range $dz_1$ is given as the next-trip departure time range $DZ$. Therefore, the respective conditional probabilities $P(dz_1 \mid b_1, c_1, d_1)$, $P(dz_2 \mid b_1, c_1, d_1)$, ... , $P(dz_1 \mid b_1, c_1, d_1)$ can be calculated based on the above-described learning data. Alternatively, the respective conditional probabilities $P(dz_1 \mid b_1, c_1, d_1)$, $P(dz_2 \mid b_1, c_1, d_1)$, ... , $P(dz_1 \mid b_1, c_1, d_1)$ can be calculated by substituting the equation (8) for the equations (15) to (17).

The next-trip departure time range having the highest one among the conditional probabilities $P(dz_1 \mid b_1, c_1, d_1)$, $P(dz_2 \mid b_1, c_1, d_1)$, ... , $P(dz_1 \mid b_1, c_1, d_1)$ that are calculated as the above is set as the predicted departure time range of the next trip after the first trip (the departure time range of the second trip). For example, when $P(dz_1 \mid b_1, c_1, d_1)$ is the highest one among the conditional probabilities $P(dz_1 \mid b_1, c_1, d_1)$, $P(dz_2 \mid b_1, c_1, d_1)$, ... , $P(dz_1 \mid b_1, c_1, d_1)$, the departure time range $dz_1$ (the departure time range $d_1$) is set as the departure day of the week of the second trip.

As described above, in the present embodiment, first, the destination of the first trip is predicted based on the departure point, the departure day of the week, and the departure time range of the first trip that are identified at the start of the first trip.

As a result, when the predicted destination of the first trip becomes a specific destination, the predicted destination of the first trip is set as the final destination, and the destination prediction is ended. On the other hand, when the predicted destination of the first trip does not become a specific destination, the predicted destination of the first trip is set as a via point and the departure day of the week and the departure time range of the next trip after the first trip are predicted based on the departure point, the departure day of the week, and the departure time range of the first trip that are identified at the start of the first trip.

Then, the predicted destination of the first trip, the predicted departure day of the week of the next trip after the first trip, and the predicted departure time range of the next trip after the first trip are respectively set as the departure point, the departure day of the week, and the departure time range of the second trip. Thereafter, the destination of the second trip is predicted based on the departure point, the departure day of the week, and departure time range of the second trip.

As a result, when the predicted destination of the second trip becomes a specific destination, the predicted destination of the second trip is set as the final destination, and the destination prediction is ended. On the other hand, when the predicted destination of the second trip does not become a specific destination, the predicted destination of the second trip is set as a via point, and the departure day of the week and the departure time range of the next trip of the second trip are predicted based on the departure point, the departure day of the week, and the departure time range of the second trip.

Then, the predicted destination of the second trip, the predicted departure day of the week of the next trip after the second trip, and the predicted departure time range of the next trip after the second trip are respectively set as the departure point, the departure day of the week, and the departure time range of a third trip. Thereafter, the destination of the third trip is predicted based on the departure point, the departure day of the week, and the departure time range of the third trip.

In this way, a destination of each subsequent trip after the first trip is predicted and a via point and a final destination are set until the predicted destination of each subsequent trip after the first trip becomes a specific destination.

Flowchart of Creation of Learning Data and Prediction of Destination

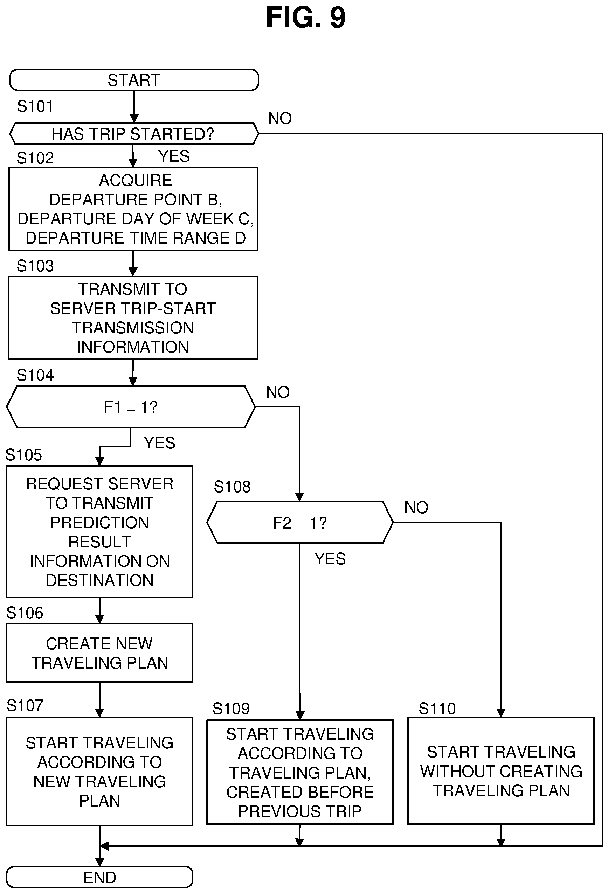

Hereinafter, flowcharts on various controls for predicting a destination of each subsequent trip after the first trip will be described with reference to FIGS. 9 to 12. The controls are performed by the electronic control unit 200 of the vehicle 2 and the control circuit 303 of the server 3.

FIG. 9 is a flowchart describing control performed by the electronic control unit 200 of the vehicle 2 when the start switch 214 of the vehicle 2 has been turned on, that is, at the start of a trip.

In step S101, the electronic control unit 200 determines whether the start switch 214 of the vehicle 2 has been turned on, that is, whether the vehicle 2 has started the trip. When the vehicle 2 has started the trip, the electronic control unit 200 proceeds to a process of step S102. On the other hand, when the vehicle 2 has not started the trip, the electronic control unit 200 ends the current process.

In step S102, the electronic control unit 200 acquires the current position acquired by the GPS receiver 96 as a departure point B of the current trip. In addition, the electronic control unit 200 acquires the current day as a departure day of the week C of the current trip, and acquires a departure time range D of the current trip based on the current time.

In step S103, the electronic control unit 200 transmits, to the server 3 via the vehicle-side communication device 90, the departure day of the week C and the departure time range D of the current trip as trip-start transmission information.

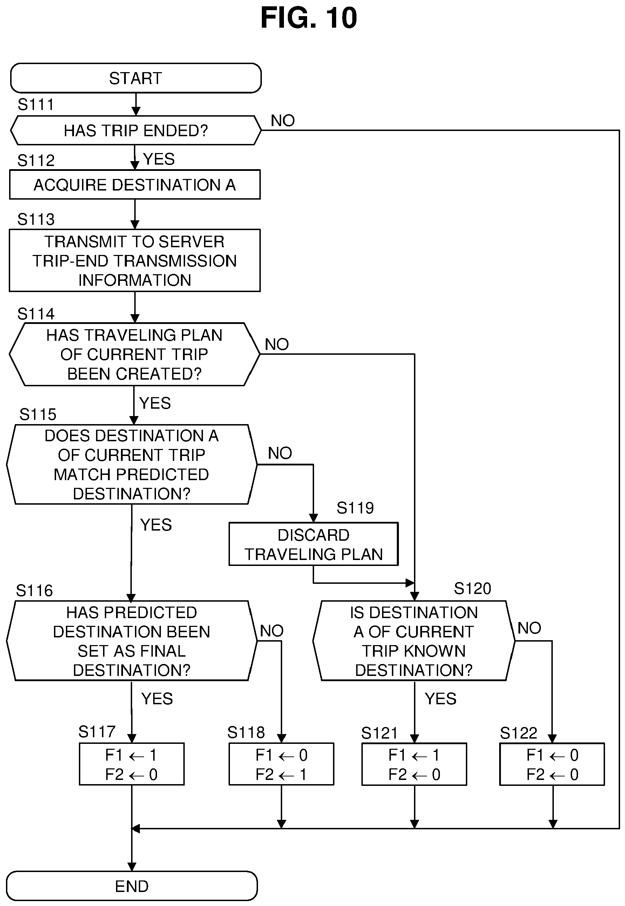

In step S104, the electronic control unit 200 determines whether there is a request for creating a traveling plan by predicting the destination of each subsequent trip after the current trip (hereinafter referred to as a "traveling plan creation request"). In the present embodiment, when a traveling plan creation request flag F1 (to be described below with reference to FIG. 10) is set to 1, the electronic control unit 200 determines that there is a traveling plan creation request and proceeds to a process of step S105. On the other hand, when the traveling plan creation request flag F1 is set to zero, the electronic control unit 200 determines that there is no traveling plan creation request and proceeds to a process of step S108.

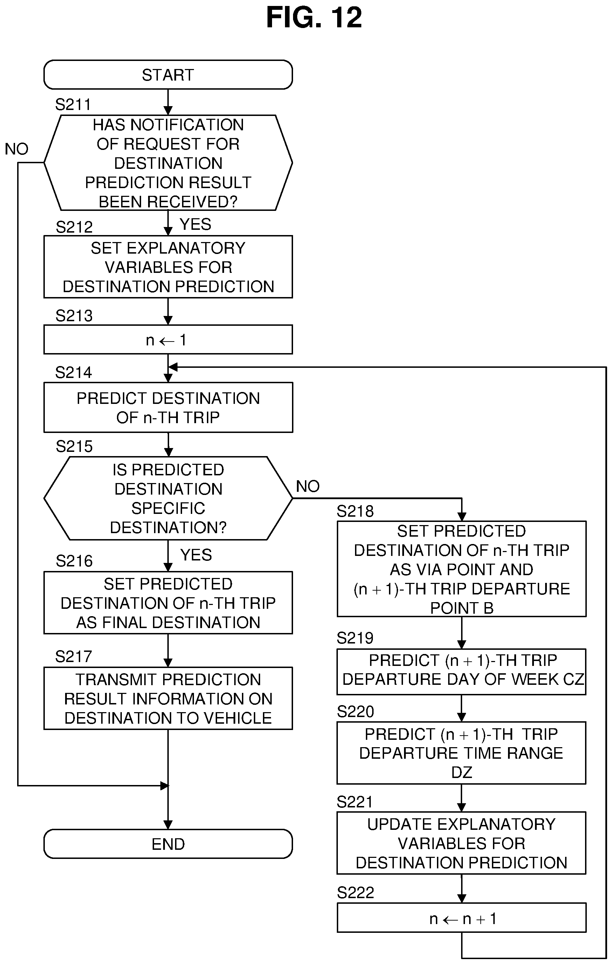

In step S105, the electronic control unit 200 requests the server 3 to transmit prediction result information on the destination (to be described below with reference to FIG. 12) of each subsequent trip after the current trip. In the present embodiment, the electronic control unit 200 requests the server 3 to transmit the prediction result information on the destination of each subsequent trip after the current trip by transmitting, to the server 3 via the vehicle-side communication device 90, a notification of a request for a destination prediction result, together with information on the departure point B, the departure day of the week C, and the departure time range D of the current trip.

In addition, the prediction result information on the destination of each subsequent trip after the current trip transmitted from the server 3 includes the information on the predicted destination of each subsequent trip after the current trip and the information on whether the predicted destination of each subsequent trip is a via point or a final destination.

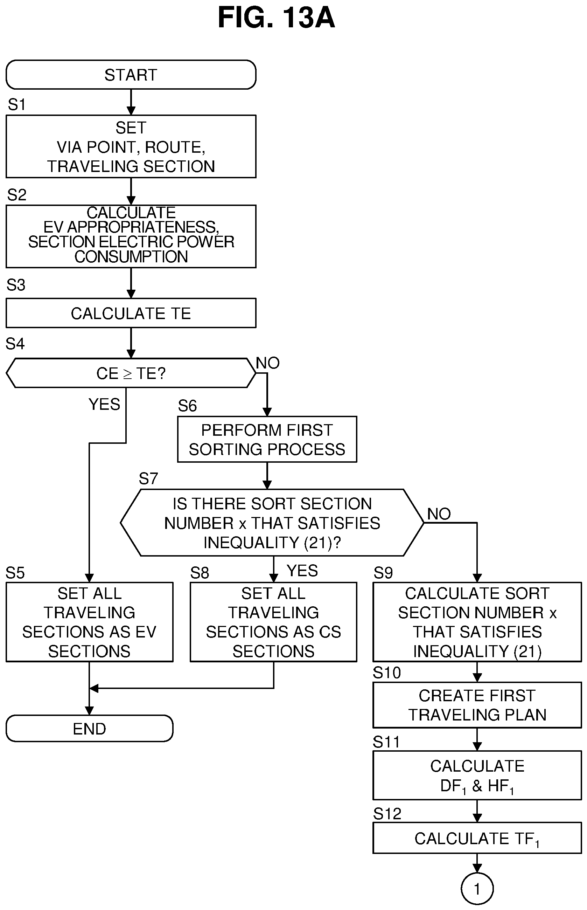

In step S106, the electronic control unit 200 creates a new traveling plan in which the current trip is the first trip based on the prediction result information on the destination of each subsequent trip after the current trip which is received from the server 3 via the vehicle-side communication device 90. A detailed method of creating the traveling plan will be described below with reference to FIGS. 13A to 15G.

In step S107, the electronic control unit 200 starts traveling according to the new traveling plan.

In step S108, the electronic control unit 200 determines whether a maintaining traveling plan flag F2 (to be described below with reference to FIG. 10) is set to 1. When the maintaining traveling plan flag F2 is set to 1, the electronic control unit 200 proceeds to a process of step S109. On the other hand, when the maintaining traveling plan flag F2 is set to zero, the electronic control unit 200 proceeds to a process of step S110.

In step S109, the electronic control unit 200 uses the traveling plan that was created before the previous trip and starts traveling according to the traveling plan.

In step S110, the electronic control unit 200 starts traveling of the vehicle 2 without creating a traveling plan. In this case, the electronic control unit 200 causes the vehicle 2 to travel by performing a regular traveling control of setting the traveling mode to the EV mode until the battery charge amount is lower than or equal to a predetermined switching charge amount, and to the CS mode after the battery charge amount is lower than or equal to the predetermined switching charge amount.

FIG. 10 is a flowchart describing control performed by the electronic control unit 200 of the vehicle 2 when the start switch 214 of the vehicle 2 has been turned off, that is, at the end of the trip.

In step S111, the electronic control unit 200 determines whether the start switch 214 of the vehicle 2 has been turned off, that is, whether the vehicle 2 has ended the trip. When the vehicle 2 has ended the trip, the electronic control unit 200 proceeds to a process of step S112. On the other hand, when the vehicle 2 has not ended the trip, the electronic control unit 200 ends the current process.

In step S 112, the electronic control unit 200 acquires the current position acquired by the GPS receiver 96 as the destination A of the current trip.

In step S 113, the electronic control unit 200 transmits, to the server 3 via the vehicle-side communication device 90, the departure point B, the departure day of the week C, and the departure time range D of the current trip, which were acquired at the start of the current trip, and the destination A, which is acquired in step S112, as trip-end transmission information.

In step S114, the electronic control unit 200 determines whether a traveling plan of the current trip has been created. When the traveling plan of the current trip has been created, the electronic control unit 200 proceeds to a process of step S115. On the other hand, when the traveling plan of the current trip has not been created, the electronic control unit 200 proceeds to a process of step S120.

In step S115, the electronic control unit 200 determines whether the destination A of the current trip matches the predicted destination of the current trip which has been applied to creation of the traveling plan, used in the current trip. When the destination A of the current trip matches the predicted destination of the current trip, the electronic control unit 200 proceeds to a process of step S116. On the other hand, when the destination A of the current trip does not match the predicted destination of the current trip, the electronic control unit 200 proceeds to a process of step S119.

In step S116, the electronic control unit 200 determines whether the predicted destination of the current trip which has been applied to creation of the traveling plan used in the current trip has been set as the final destination. When the predicted destination of the current trip has been set as the final destination, the electronic control unit 200 determines that it is required to create the new traveling plan in which the next trip is the first trip and proceeds to a process of step S117. On the other hand, when the predicted destination of the current trip has not been set as the final destination, the electronic control unit 200 proceeds to a process of step S118 so that the traveling plan which is used in the current trip can be continuously used in the next trip.

In step S117, the electronic control unit 200 sets the traveling plan creation request flag F1 to 1 and the maintaining traveling plan flag F2 to zero. The traveling plan creation request flag F1 is set to 1 when it is required to create the new traveling plan in which the next trip is the first trip, and the initial value is set to zero. Moreover, the maintaining traveling plan flag F2 is set to 1 when the traveling plan used in the current trip is continuously used in the next trip, and the initial value is set to zero.

In step S118, the electronic control unit 200 sets the traveling plan creation request flag F1 to zero and the maintaining traveling plan flag F2 to 1 so that the traveling plan used in the current trip can be continuously used in the next trip.

In step S119, since the destination A of the current trip does not match the predicted destination of the current trip and thus the traveling plan used in the current trip cannot be used in the subsequent trips after the next trip, the electronic control unit 200 discards the traveling plan used in the current trip.

In step S120, the electronic control unit 200 determines whether it is possible to create the new traveling plan in which the next trip is the first trip. Specifically, the electronic control unit 200 determines whether the destination A of the current trip is a known destination that has been visited at least once.

When the destination A of the current trip is a new destination that has never been visited, the next trip starts at a new departure point at which no trip has started. Therefore, the learning data (for example, the conditional probability of the departure point B when the destination A is given) required for predicting the destination using Bayesian inference doesn't exist until the trip that has started at the new departure point is ended and the destination of the trip becomes known, and thus the destination prediction cannot be performed.

Thus, when the destination A of the current trip is a known destination that has been visited at least once, the electronic control unit 200 determines that it is possible to create the new traveling plan in which the next trip is the first trip and proceeds to a process of step S121. On the other hand, when the destination A of the current trip is a new destination that has never been visited, the electronic control unit 200 determines that it is not possible to create the new traveling plan in which the next trip is the first trip and proceeds to a process of step S122.

In step S121, since it is possible to create the new traveling plan in which the next trip is the first trip, the electronic control unit 200 sets the traveling plan creation request flag F1 to 1 and the maintaining traveling plan flag F2 to zero.

In step S122, since it is not possible to create the new traveling plan in which the next trip is the first trip, the electronic control unit 200 sets both the traveling plan creation request flag F1 and the maintaining traveling plan flag F2 to zero.

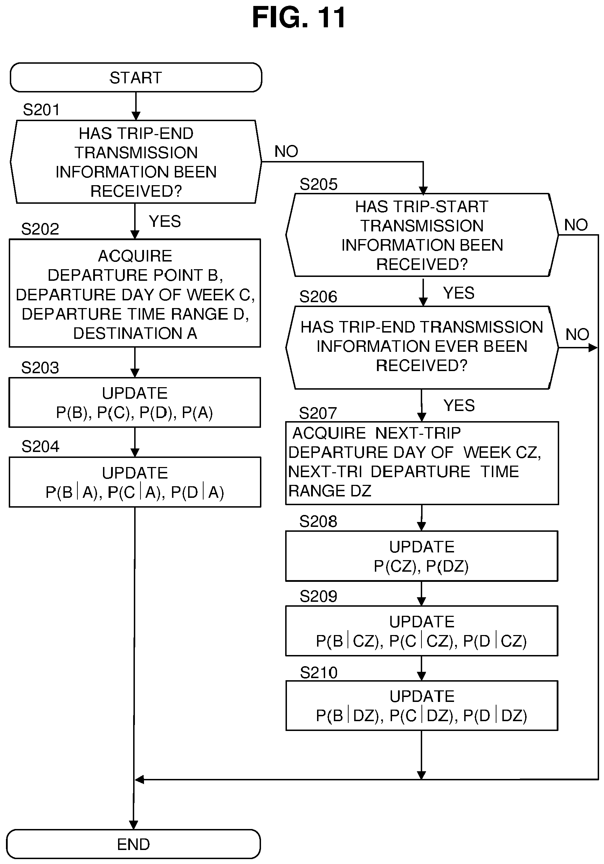

FIG. 11 is a flowchart describing control of the learning data creation, performed by the server 3 (in more detail, the control circuit 303 of the server 3).

In step S201, the server 3 determines whether it has received the trip-end transmission information from the vehicle 2 via the server-side communication device 301. When the server 3 has received the trip-end transmission information, the server 3 proceeds to a process of step S202. On the other hand, when the server 3 has not received the trip-end transmission information, the server 3 proceeds to a process of step S205.

In step S202, the server 3 acquires the departure point B, the departure day of the week C, the departure time range D, and the destination A that are included in the trip-end transmission information.

In step S203, the server 3 updates the probability distribution P(B) of the departure point B, the probability distribution P(C) of the departure day of the week C, the probability distribution P(D) of the departure time range D, and the probability distribution P(A) of the destination A, as illustrated in FIGS. 5A to 5D, based on the acquired departure point B, departure day of the week C, departure time range D, and destination A.

In step S204, the server 3 updates the conditional probability distributions of the respective departure point B, the departure day of the week, and the departure time range D when the destination A is given, as illustrated in FIGS. 6A to 6C, based on the acquired departure point B, departure day of the week C, departure time range D, and destination A. For example, when the acquired destination A is the destination ai, the respective conditional probability distributions P(B | $a_1$), P(C | $a_1$), and P(D | $a_1$) are updated.

In step S205, the server 3 determines whether it has received the trip-start transmission information from the vehicle 2 via the server-side communication device 301. When the server 3 has received the trip-start transmission information, the server 3 proceeds to a process of step S206. On the other hand, when the server 3 has not received the trip-start transmission information, the server 3 ends the current process.

In step S206, the server 3 determines whether it has ever received the trip-end transmission information. In other words, the server 3 determines whether the trip-start transmission information, which was determined in step S205 to have been received, is the trip-start transmission information transmitted at the start of the first trip, or the trip-start transmission information transmitted at the start of each subsequent trip after the second trip. Then, when the trip-start transmission information, which was determined in step S205 to have been received, is the trip-start transmission information transmitted at the start of each subsequent trip after the second trip, the server 3 determines that it has ever received the trip-end transmission information so far and proceeds to a process of step S207. On the other hand, when the trip-start transmission information, which was determined in step S205 to have been received, is the trip-start transmission information transmitted at the start of the first trip, the server 3 determines that it has never received the trip-end transmission information so far and ends the current process.

In step S207, the server 3 acquires the departure day of the week C and the departure time range D that are included in the trip-start transmission information as the next-trip departure day of the week CZ and the next-trip departure time range DZ.

In step S208, the server 3 updates the probability distribution P(CZ) of the next-trip departure day of the week CZ and the probability distribution P(DZ) of the next-trip departure time range DZ, as illustrated in FIGS. 5E and 5F, based on the acquired next-trip departure day of the week CZ and next-trip departure time range DZ.

In step S209, the server 3 updates the respective conditional probability distributions of the departure point B, the departure day of the week C, and the departure time range D when the next-trip departure day of the week CZ is given, as illustrated in FIGS. 7A to 7C, based on the acquired next-trip departure day of the week CZ, and the departure point B, departure day of the week C, and departure time range D that are included in the trip-end transmission information acquired in the latest trip. For example, when the acquired next-trip departure day of the week CZ is the departure day of the week $cz_1$, the respective conditional probability distributions P(B | $cz_1$), P(C | $cz_1$), and P(D | $cz_1$) are updated.

In step S210, the server 3 updates the respective conditional probability distributions of the departure point B, the departure day of the week C, and the departure time range D when the next-trip departure time range DZ is given, as illustrated in FIGS. 8A to 8C, based on the acquired next-trip departure time range DZ, and the departure point B, departure day of the week C, and departure time range D that are included in the trip-end transmission information acquired in the latest trip. For example, when the acquired next-trip departure time range DZ is the departure time range $dz_1$, the respective conditional probability distributions P(B | $dz_1$), P(C | $dz_1$), and P(D | $dz_1$) are updated.

FIG. 12 is a flowchart describing control of destination prediction, performed by the server 3 (in more detail, the control circuit 303 of the server 3).

In step S211, the server 3 determines whether it has received, from the vehicle 2 via the server-side communication device 301, the notification of the request for the destination prediction result, together with the information on the departure point B, the departure day of the week C, and the departure time range D at the start of the trip of the vehicle 2. When the server 3 has received the notification of the request for the destination prediction result, the server 3 proceeds to a process of step S212. On the other hand, when the server 3 has not received the notification of the request for the destination prediction result, the server 3 ends the current process.

In step S212, the server 3 sets the respective departure point B, departure day of the week C, and departure time range D transmitted together with the notification of the request for the destination prediction result as explanatory variables for destination prediction.

In step S213, the server 3 sets a current value of a trip number n to 1, which is an initial value.

In step S214, the server 3 predicts a destination of an n-th trip. In the present embodiment, based on the learning data, the server 3 calculates conditional probabilities of respective known destinations $a_1, a_2, ... , a_i$ when the explanatory variables for destination prediction, that is, the departure point B, the departure day of the week C, and the departure time range D, are given, and sets the destination having the highest one from among the calculated conditional probabilities as the predicted destination of the n-th trip.

In step S215, the server 3 determines whether the predicted destination of the n-th trip is the specific destination. When the predicted destination of the n-th trip is a specific destination, the server 3 proceeds to a process of step S216. On the other hand, when the predicted destination of the n-th trip is not a specific destination, the server 3 proceeds to a process of step S218.

In step S216, the server 3 sets the predicted destination of the n-th trip as a final destination.

In step S217, the server 3 transmits the prediction result information on the destination of each subsequent trip up until the n-th trip to the vehicle 2 via the server-side communication device 301. The prediction result information on the destination includes information on the predicted destination of each subsequent trip up until the n-th trip and information on whether the predicted destination of each subsequent trip is a via point or a final destination.

In step S218, the server 3 sets the predicted destination of the n-th trip as a via point and an (n + 1)-th trip departure point B.

In step S219, the server 3 predicts an (n + 1)-th trip departure day of the week CZ. In the present embodiment, based on the learning data, the server 3 calculates conditional probabilities of respective departure day of the week $cz_1$, $cz_2, ... , cz_k$ of the next trip when the explanatory variables for destination prediction, that is, the departure point B, the departure day of the week C, and the departure time range D, are given, and sets the departure day of the week having the highest one from among the calculated conditional probabilities as the (n + 1)-th trip departure day of the week CZ.

In step S220, the server 3 predicts an (n + 1)-th trip departure time range DZ. In the present embodiment, based on the learning data, the server 3 calculates conditional probabilities of respective departure time ranges $dz_1$, $dz_2, ... , dz_1$ of the next trip when the explanatory variables for destination prediction, that is, the departure point B, the departure day of the week C, and the departure time range D, are given, and sets the departure time range having the highest one from among the calculated conditional probabilities as the (n + 1)-th trip departure time range DZ.

In step S221, the server 3 updates the departure point B, the departure day of the week C, and the departure time range D as explanatory variables for destination prediction to the (n + 1)-th trip departure point B, the (n + 1)-th trip departure day of the week CZ, and the (n + 1)-th trip departure time range DZ, respectively.

In step S222, the server 3 updates the value of the trip number n by adding 1 to the current value of the trip number n, and repeats the processes of step S214 and the subsequent steps.

Next, based on the prediction result information on the destination (the predicted destination of each subsequent trip after the first trip) received from the server 3, a method of creating a traveling plan will be described with reference to FIGS. 13A to 15G.

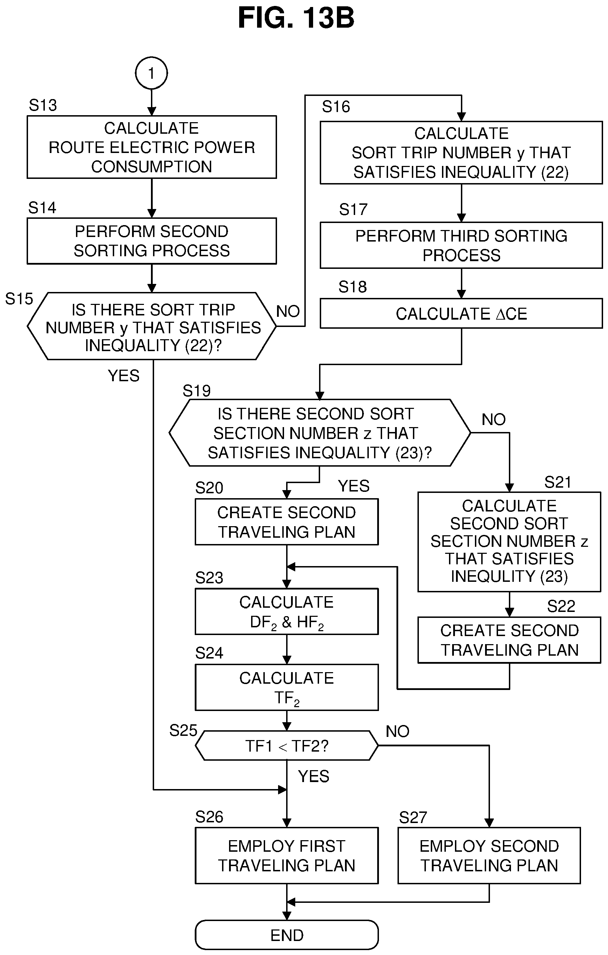

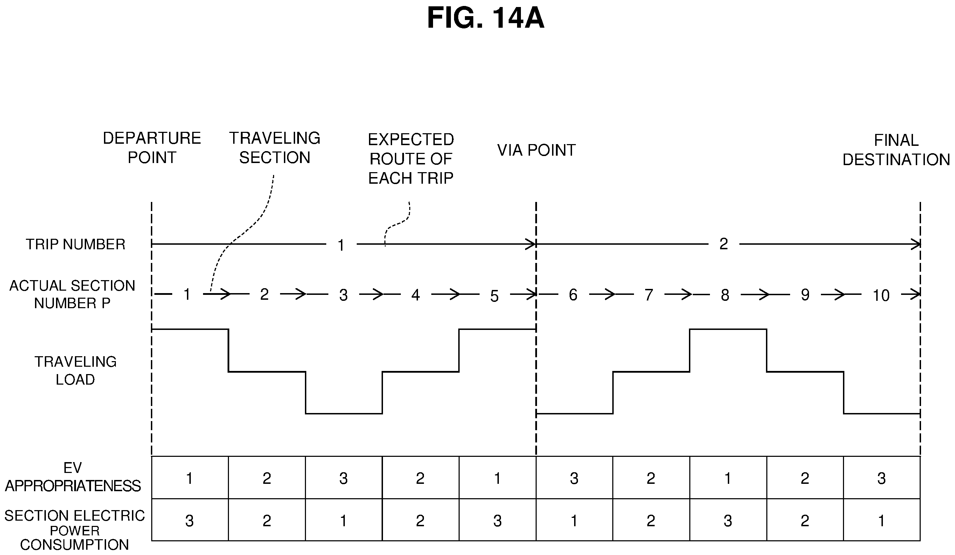

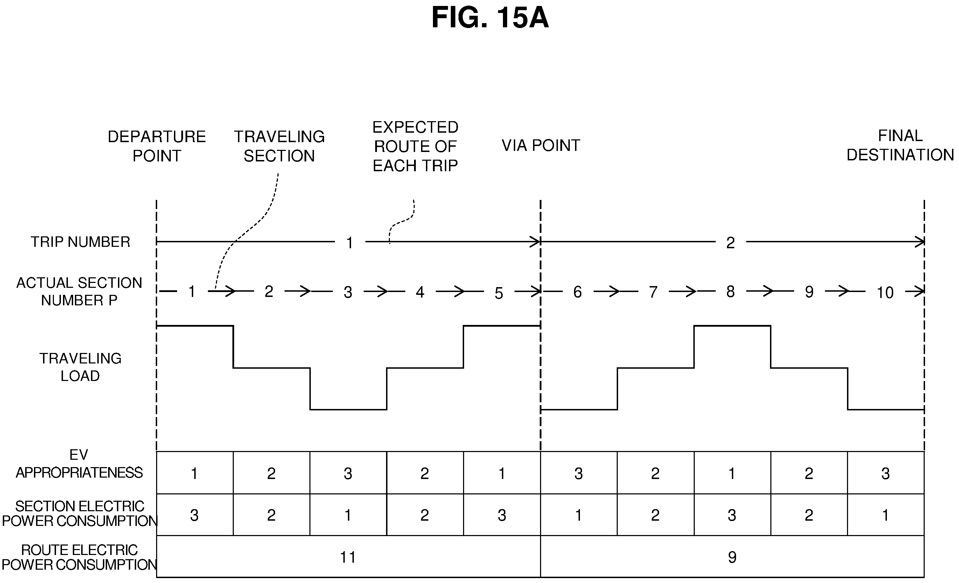

FIGS. 13A and 13B are flowcharts describing creation of a traveling plan according to the present embodiment. In addition, FIGS. 14A to 14C are diagrams describing the creation of a first traveling plan (a section traveling plan) in which an expected route of each trip is individually optimized without consideration of the fuel consumption for catalyst warm-up, and FIGS. 15A to 15G are diagrams describing creation of a second traveling plan (a route priority traveling plan) in which the entire expected route of the plurality of trips is optimized in consideration of the fuel consumption for catalyst warm-up.

In step S1, as illustrated in FIG. 14A, the electronic control unit 200 arranges each trip up until the n-th trip, in which a predicted destination is set as a final destination, in order from the first trip (the trip of which the trip number n is 1), based on the prediction result information on the destinations received from the server 3 via the vehicle-side communication device 90. Further, FIG. 14A illustrates an example in which a predicted destination of a second trip (the trip of which the trip number n is two) is set as a final destination. Therefore, the predicted destination of the first trip is set as a via point in FIG. 14A. Then, the electronic control unit 200 divides the expected route of each trip into a plurality of traveling sections, and sets an actual section number P (P = 1, ... , p ; p = 10 in the example illustrated in FIG. 14A) for each traveling section in order from the departure point.

In step S2, the electronic control unit 200 calculates the traveling load of each traveling section based on road information (for example, a gradient, a road type, a speed limit, an average curvature, and the like) of each traveling section. Then, as illustrated in FIG. 14A, based on the traveling load of each traveling section, the electronic control unit 200 calculates the EV appropriateness of each traveling section, and predicted electric power consumption (hereinafter referred to as "section electric power consumption") in each traveling section when traveling in the EV mode in each traveling section. The EV appropriateness is an index representing how appropriate each traveling section is for EV traveling, and is set to a higher value (the traveling section is appropriate for EV traveling) as the traveling load of each traveling section is lower.

In order to facilitate understanding of the invention, FIG. 14A illustrates a diagram in which the EV appropriateness is simplified by classifying the EV appropriateness from 1 (low EV appropriateness) to 3 (high EV appropriateness) based on the traveling load of each traveling section. In addition, FIG. 14A illustrates a diagram in which the section electric power consumption is simplified by classifying the section electric power consumption from 1 (low section electric power consumption) to 3 (high section electric power consumption) according to the amount thereof.

In step S3, based on the section electric power consumption of each traveling section, the electronic control unit 200 calculates predicted electric power consumption (hereinafter referred to as "total electric power consumption") TE when traveling from the departure point to the final destination in the EV mode.

In step S4, based on the battery charge amount, the electronic control unit 200 calculates the electric power amount of the battery 50 that can be used for EV traveling (hereinafter referred to as "usable electric power") CE, and determines whether the usable electric power CE is larger than or equal to the total electric power consumption TE. When the usable electric power CE is larger than or equal to the total electric power consumption TE, the electronic control unit 200 proceeds to a process of step S5. On the other hand, when the usable electric power CE is less than the total electric power consumption TE, the electronic control unit 200 proceeds to a process of step S6.

In step S5, since traveling from the departure point to the final destination in the EV mode is possible when the usable electric power CE is larger than or equal to the total electric power consumption TE, the electronic control unit 200 creates a traveling plan in which all the traveling sections are set as the EV sections, and controls switching of the traveling mode according to the traveling plan.

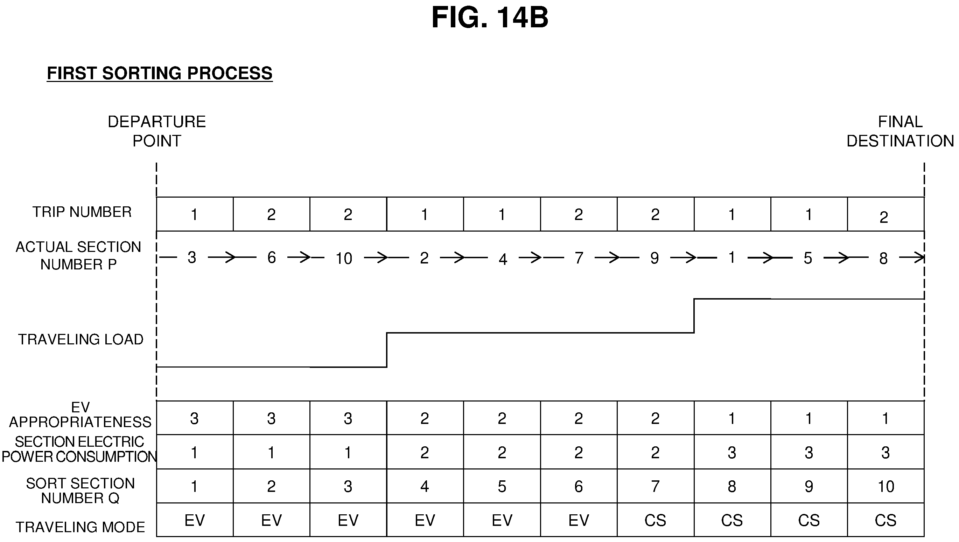

In step S6, as illustrated in FIG. 14B, the electronic control unit 200 rearranges the traveling sections by performing a first sorting process, and sets a sort section number Q (Q = 1, ... , q ; q = 10 in the example illustrated in FIG. 14B) for each traveling section in the rearranged order. Specifically, as illustrated in FIG. 14B, the electronic control unit 200 rearranges each traveling section in descending order of the EV appropriateness in disregard of the trip number, rearranges the traveling sections having the same EV appropriateness in ascending order of section electric power consumption, and further rearranges the traveling sections having the same EV appropriateness and the same section electric power consumption in ascending order of the actual section number.

In step S7, the electronic control unit 200 determines whether there is a sort section number x that satisfies the following inequality (21). The DE in the inequality (21) indicates an added value obtained by adding the section electric power consumption of the traveling sections in order from the traveling section having a high EV appropriateness and a low section electric power consumption. Therefore, in the inequality (21), $DE_x$ is the total value (added value) of the section electric power consumption of traveling sections having the sort section numbers Q from 1 to x respectively, and $DE_{x+1}$ is the total value (added value) of the section electric power consumption of traveling sections having the sort section numbers Q from 1 to x + 1 respectively.

$$DE_x \leq CE < DE_{x+1} \ldots (21)$$

When $DE_1$ (= the section electric power consumption of the traveling section having the sort section number Q of 1) is larger than the usable electric power CE, the electronic control unit 200 determines that there is no sort section number x that satisfies the inequality (21). In this case, the electronic control unit 200 determines that there is no traveling section in which traveling in the EV mode is possible, and proceeds to a process of step S8. On the other hand, when $DE_1$ is less than or equal to the usable electric power CE, the electronic control unit 200 determines that there is a sort section number x that satisfies the inequality (21), and proceeds to a process of step S9.

In step S8, the electronic control unit 200 creates a traveling plan in which all traveling sections are set as CS sections, and controls switching of the traveling mode according to the traveling plan.

In step S9, the electronic control unit 200 calculates a sort section number x that satisfies the inequality (21). In addition, in the description hereinbelow, a case in which the usable electric power CE calculated in step S4 is 9 is compared with a case in which the usable electric power CE calculated in step S4 is 10. In the example illustrated in FIG. 14B, since $DE_6$ (= total value of the section electric power consumptions of traveling sections having the sort section numbers Q from 1 to 6 respectively) is 9 and $DE_7$ (= total value of the section electric power consumptions of traveling sections having the sort section numbers Q from 1 to 7 respectively) is 11, the sort section number x that satisfies the inequality (21) is 6 regardless of whether the usable electric power CE is 9 or 10.

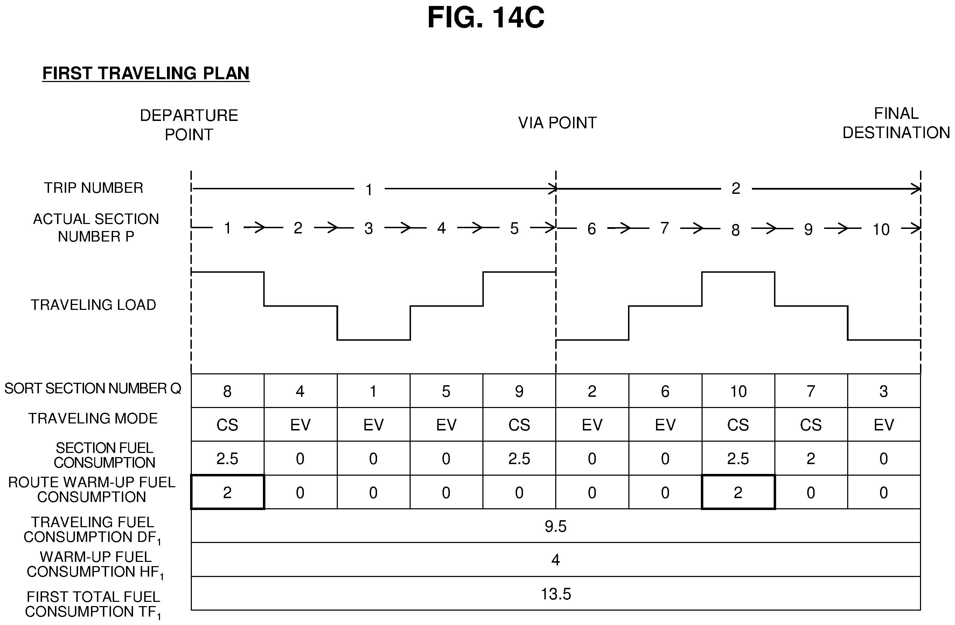

In step S10, as illustrated in FIG. 14B, the electronic control unit 200 sets the traveling sections having the sort section numbers Q from 1 to x respectively (x = 6 in the example illustrated in FIG. 14B) as the EV sections (where the traveling mode is set to the EV mode), and sets the traveling sections having the sort section numbers Q from x + 1 to q (q = 10 in the example illustrated in FIG. 14B) as the CS sections. Then, as illustrated in FIG. 14C, the electronic control unit 200 creates the first traveling plan (the section traveling plan) by rearranging the traveling sections again in order of actual section number P.

In step S11, as illustrated in FIG. 14C, the electronic control unit 200 calculates values of predicted fuel consumption for traveling in each CS section (hereinafter referred to as "section fuel consumption") consumed for traveling in the respective CS sections based on the road information of the traveling sections set as the CS sections in the first traveling plan, and calculates a traveling fuel consumption $DF_1$ in the first traveling plan, which is the sum of the calculated values.

Further, the electronic control unit 200 calculates values of predicted fuel consumption for catalyst warm-up in the respective trips where the CS sections are set in the first traveling plan (hereinafter referred to as a "route warm-up fuel consumption"), and calculates the warm-up fuel consumption $HF_1$ in the first traveling plan, which is the sum of the calculated values. In the present embodiment, as illustrated in FIG. 14C, fuel for catalyst warm-up is consumed in the traveling section in which the traveling mode is switched to the CS mode for the first time in each trip.

In step S12, the electronic control unit 200 calculates a value of predicted fuel consumption when traveling from the departure point to the final destination while switching the traveling mode according to the first traveling plan (hereinafter referred to as a "first total fuel consumption") $TF_1$. Specifically, as illustrated in FIG. 14C, the electronic control unit 200 calculates the first total fuel consumption $TF_1$ by adding the traveling fuel consumption $DF_1$ and the warm-up fuel consumption $HF_1$ in the first traveling plan.

In step S13, as illustrated in FIG. 15A, based on the section electric power consumption of each traveling section, the electronic control unit 200 calculates the predicted electric power consumption (hereinafter "route electric power consumption") of each trip when traveling in the EV mode in each trip. In FIG. 15A, the simplified total value of the section electric power consumption of each traveling section for each trip is described as the route electric power consumption.

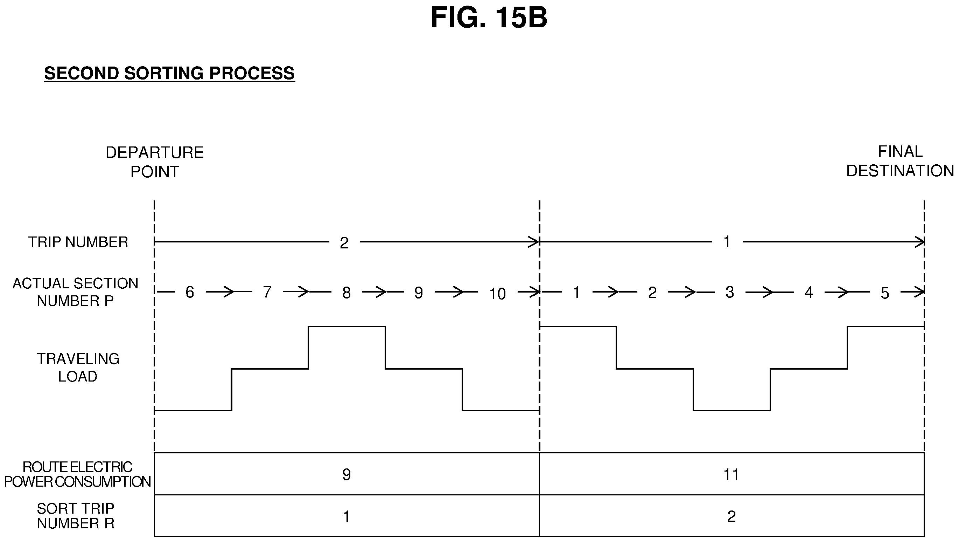

In step S14, as illustrated in FIG. 15B, the electronic control unit 200 rearranges each trip by performing a second sorting process, and sets sort trip numbers R (R = 1, ... , r ; r = 2 in the example illustrated in FIG. 15B) in order of rearranged trip. Specifically, as illustrated in FIG. 15B, the electronic control unit 200 rearranges each trip in ascending order of the route electric power consumption.

In step S15, the electronic control unit 200 determines whether there is a sort trip number y that satisfies the following inequality (22). The RE in the inequality (22) indicates an added value obtained by adding the route electric power consumption of the trips in order from the trip having a lower route electric power consumption. Therefore, in the inequality (22), $RE_y$ is the total value (added value) of the route electric power consumption of trips having the sort trip numbers R from 1 to y respectively, and $RE_{y+1}$ is the total value (added value) of the route electric power consumption of trips having the sort trip numbers R from 1 to y + 1 respectively.

$$RE_y \leq CE < RE_{y+1} \ldots (22)$$

When $RE_1$ (= the route electric power consumption of the trip having the sort trip number R of 1) is larger than the usable electric power CE, the electronic control unit 200 determines that there is no sort trip number y that satisfies the inequality (22). In this case, the electronic control unit 200 determines that there is no trip where traveling in the EV mode is possible, and proceeds to a process of step S26. On the other hand, when $RE_1$ is less than or equal to the usable electric power CE, the electronic control unit 200 determines that there is a sort trip number y that satisfies the inequality (22), and proceeds to a process of step S16.

In step S16, the electronic control unit 200 calculates a sort trip number y that satisfies the inequality (22). In the example illustrated in FIG. 15B, since $RE_1$ is 9 and $RE_2$ (= the total value of the route electric power consumption of trips having the sort trip numbers R from 1 to 2 respectively) is 20, the sort trip number y that satisfies the inequality (22) is 1 regardless of whether the usable electric power CE is 9 or 10.

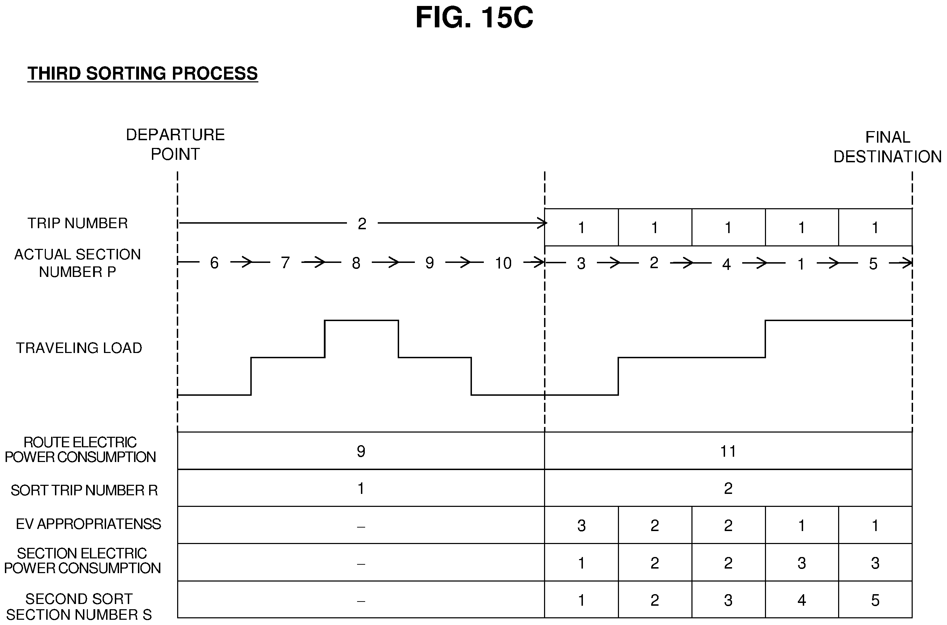

In step S17, as illustrated in FIG. 15C, the electronic control unit 200 rearranges the traveling sections by performing a third sorting process on each traveling section on each of the trips having the sort trip numbers R from y + 1 to r respectively (y = 1, r = 2 in the example illustrated in FIG. 15C), and sets a second sort section number S (S = 1, ... , s ; s = 5 in the example illustrated in FIG.15C) for each traveling section in the rearranged order. Specifically, as illustrated in FIG. 15C, the electronic control unit 200 rearranges each traveling section of each trip having the respective sort trip number R from y + 1 to r (since y = 1 and r = 2 in the example illustrated in FIG. 15C, the trip having the sort trip number of 2) in descending order of the EV appropriateness, rearranges the traveling sections having the same EV appropriateness in ascending order of the section electric power consumption, and rearranges the traveling sections having the same EV appropriateness and the same section electric power consumption in ascending order of the actual section number.

In step S18, the electronic control unit 200 calculates surplus electric power $\Delta CE$ of the battery 50 by subtracting the total value $RE_y$ of the respective route electric power consumption of the trips having the sort trip numbers R from 1 to y respectively from the usable electric power CE of the battery 50. Here, when the usable electric power CE calculated in step S4 is 9, $RE_1$ is 9 and thus the surplus electric power $\Delta CE$ is zero. In addition, when the usable electric power CE calculated in step S4 is 10, $RE_1$ is 9 and thus the surplus electric power $\Delta CE$ is 1.

In step S19, the electronic control unit 200 determines whether there is a second sort section number z that satisfies the following inequality (23). The EE of inequality (23) is an added value obtained by adding the section electric power consumption of the traveling sections in order from the traveling section having a higher EV appropriateness and a lower section electric power consumption in each of the trips having the sort trip numbers R from y + 1 to r respectively. Therefore, in inequality (23), $EE_z$ is a total value (added value) of the section electric power consumption of traveling sections having the second sort section numbers S from 1 to z respectively, and $EE_{z+1}$ is a total value of the section electric power consumption of traveling sections having the second sort section numbers S from 1 to z + 1 respectively.

$$EE_z \leq \Delta CE < EE_{z+1} \ldots (23)$$

When $EE_1$ (= the section electric power consumption of the traveling section having the second sort section number S of 1) is larger than the surplus electric power $\Delta CE$, the electronic control unit 200 determines that there is no second sort section number z that satisfies the inequality (23). In this case, the electronic control unit 200 determines that there is no traveling section where traveling in the EV mode is possible among the traveling sections of each of the trips having the sort trip numbers R from y + 1 to r respectively, and proceeds to a process of step S20. On the other hand, when $EE_1$ is less than or equal to the surplus electric power $\Delta CE$, the electronic control unit 200 determines that there is a second sort section number z that satisfies the inequality (23), and proceeds to a process of step S21.

In the example illustrated in FIG. 15C, $EE_1$ is 1. Therefore, when the usable electric power CE calculated in step S4 is 9, the surplus electric power $\Delta CE$ is zero as described above, and thus the electronic control unit 200 determines that there is no second sort section number z that satisfies the inequality (23) and proceeds to the process of step S20. On the other hand, when the usable electric power CE calculated in step S4 is 10, the surplus electric power $\Delta CE$ is 1 as described above, and thus the electronic control unit 200 determines that there is a second sort section number z that satisfies the inequality (23) and proceeds to the process of step S21.

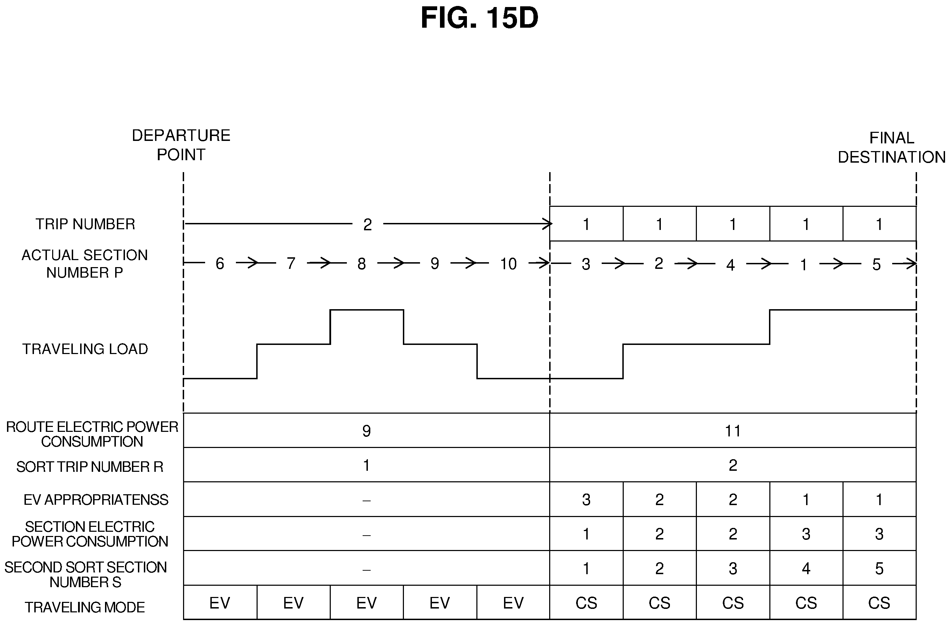

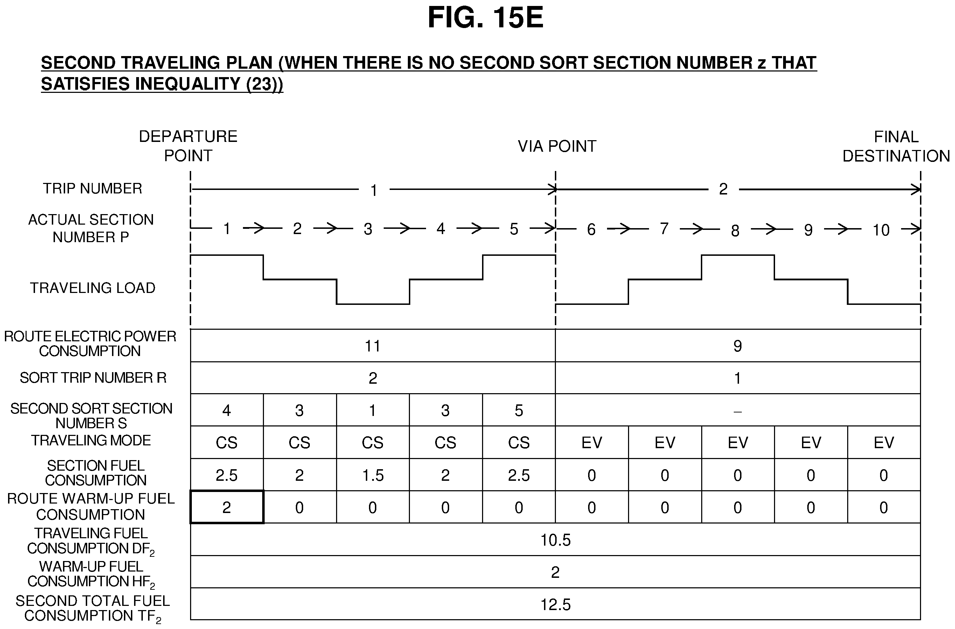

In step S20, as illustrated in FIG. 15D, the electronic control unit 200 sets each of the trips having the sort trip numbers R from 1 to y respectively (y = 1 in the example illustrated in FIG. 15D) as the EV route in which all traveling sections on the trip are EV sections, and sets each of the trips having the sort trip numbers R from y + 1 to r respectively (r = 2 in the example illustrated FIG. 15D) as the CS route in which all traveling sections on the trip are CS sections. Then, as illustrated in FIG. 15E, the electronic control unit 200 sets the second traveling plan (the route priority traveling plan) by rearranging each trip in order of trip number.

In step S21, the electronic control unit 200 calculates the second sort section number z that satisfies the inequality (23). In the example illustrated in FIG. 15C, $EE_1$ is 1, and $EE_2$ (= the total value of the section electric power consumption of the traveling sections having the second sort section numbers S from 1 to 2 respectively) is 3. Therefore, when the usable electric power CE calculated in step S4 is 10 and the surplus electric power $\Delta CE$ is 1, the second sort section number z that satisfies the inequality (23) is 1.

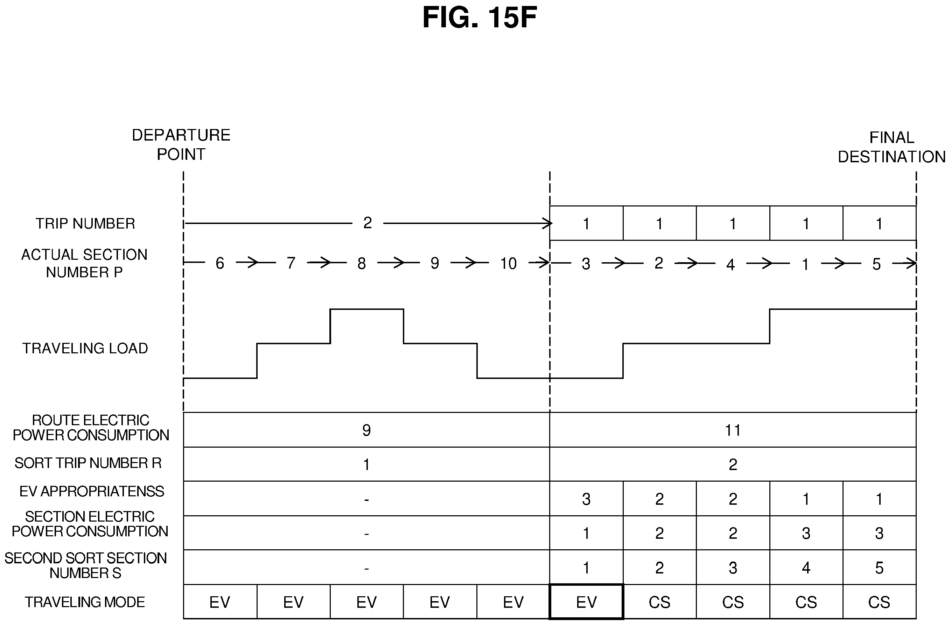

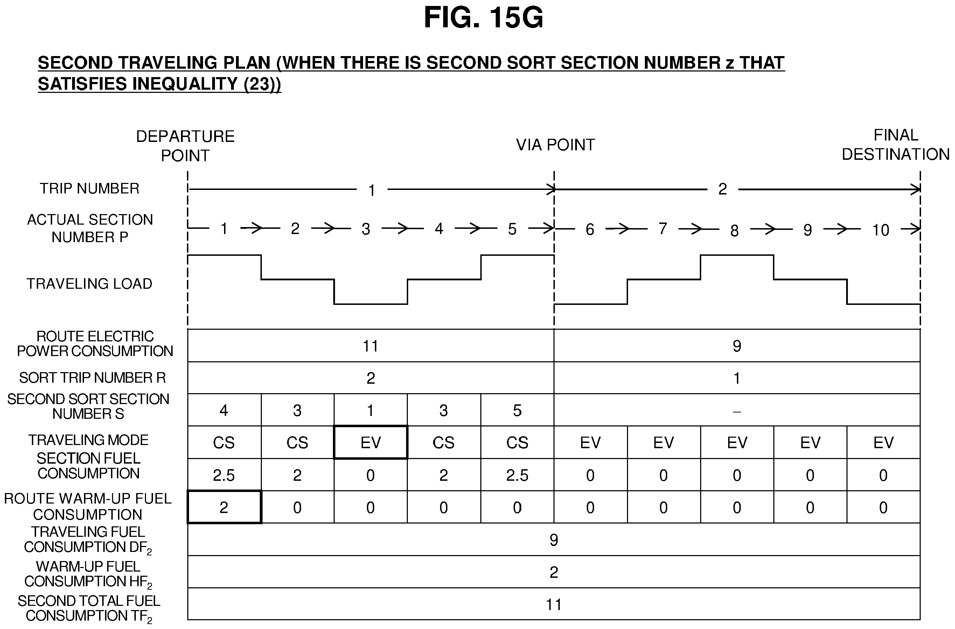

In step S22, as illustrated in FIG. 15F, the electronic control unit 200 sets each of the trips having the sort trip numbers R from 1 to y respectively (y = 1 in the example illustrated in FIG. 15F) as the EV route in which all traveling sections are EV sections. Then, on each traveling section of each of the trips having the sort trip numbers R from y + 1 to r respectively (r = 2 in the example illustrated FIG. 15F), the electronic control unit 200 sets each of the traveling sections having the second sort section numbers S from 1 to z respectively (z = 1 in the example illustrated in FIG. 15F) as the EV section and each of the traveling sections having the second sort section numbers S from z + 1 to s respectively (s = 5 in the example illustrated in FIG. 15F) as the CS section. Thereafter, as illustrated in FIG. 15G, the electronic control unit 200 sets the second traveling plan (the route priority traveling plan) by rearranging each traveling section in order of actual traveling section number.

In step S23, as illustrated in FIGS. 15E and 15G, the electronic control unit 200 calculates the section fuel consumption of each CS section based on the road information of the traveling section set as the CS section in the second traveling plan, and calculates a traveling fuel consumption $DF_2$ in the second traveling plan, which is a total value of the calculated section fuel consumptions.

In addition, the electronic control unit 200 calculates the route warm-up fuel consumption of the traveling route where the CS sections are set in the second traveling plan and calculates the warm-up fuel consumption $HF_2$ in the second traveling plan, which is a total value of the calculated route warm-up fuel consumptions. As illustrated in FIGS. 15E and 15G, in the second traveling plan according to the present embodiment, the route warm-up fuel consumption is generated only on the traveling route having the actual section number of 1.

In step S24, the electronic control unit 200 calculates a value of predicted fuel consumption when traveling from the departure point to the final destination while switching the traveling mode according to the second traveling plan (hereinafter referred to as a "second total fuel consumption") $TF_2$. Specifically, as illustrated in FIGS. 15E and 15G, the electronic control unit 200 calculates the second total fuel consumption $TF_2$ by adding the traveling fuel consumption $DF_2$ and the warm-up fuel consumption $HF_2$ in the second traveling plan.

In step S25, the electronic control unit 200 compares the first total fuel consumption TF$_1$ and the second total fuel consumption TF$_2$. When the first total fuel consumption TF$_1$ is lower, the electronic control unit 200 proceeds to a process of step S26. When the second total fuel consumption TF$_2$ is smaller, the electronic control unit 200 proceeds to a process of step S27. Further, when the first total fuel consumption TF$_1$ and the second total fuel consumption TF$_2$ are the same, the electronic control unit 200 may proceed to the process of step S26 or step S27, but in the present embodiment, proceeds to the process of step S27.

In step S26, the electronic control unit 200 employs the first traveling plan and controls switching of the traveling mode according to the first traveling plan.

In step S27, the electronic control unit 200 employs the second traveling plan and controls switching of the traveling mode according to the second traveling plan.

Here, when the usable electric power CE calculated in step S4 is 9, the first traveling plan illustrated in FIG. 14C and the second traveling plan illustrated in FIG. 15E are created. As illustrated in FIGS. 14C and 15E, the traveling fuel consumption DF$_1$ in the first traveling plan, created without consideration of the fuel consumption for catalyst warm-up, is lower than the traveling fuel consumption DF$_2$ in the second traveling plan in which traveling of a plurality of trips is optimized in consideration of the fuel consumption for catalyst warm-up. However, considering warm-up fuel consumptions HF$_1$, HF$_2$ in each traveling plan, since the catalyst warm-up is required two times in the first traveling plan, it is found that the first total fuel consumption TF$_1$ is larger than the second total fuel consumption TF$_2$.

Moreover, when the usable electric power CE calculated in step S4 is 10, the first traveling plan illustrated in FIG. 14C and the second traveling plan illustrated in FIG. 15G are created. In this case, it is found that both the traveling fuel consumption and the total fuel consumption in the second traveling plan are smaller than those of the first traveling plan.

The vehicle control system 1 according to the present embodiment described above includes the vehicle 2 (the hybrid vehicle) that can travel by an output from at least one of the internal combustion engine 10 and the second rotating electric machine 40 (the rotating electric machine) driven by electric power of the battery 50, the vehicle-side communication device 90 (an in-vehicle communication device) and the electronic control unit 200 (an in-vehicle control device) that are mounted on the vehicle 2, and the server 3 having the server-side communication device 301 (a communication circuit) that can wirelessly communicate with the vehicle-side communication device 90, and the control circuit 303.

The electronic control unit 200 is configured to transmit the traveling data of the vehicle 2 to the server-side communication device 301 via the vehicle-side communication device 90 at a predetermined time.

In addition, the control circuit 303 includes a learning data creation circuit that creates predetermined learning data based on the traveling data of the vehicle 2 which is received from the vehicle-side communication device 90 via the server-side communication device 301, a destination prediction circuit that sequentially predicts, based on the learning data, the destination of each subsequent trip after the first trip having a known place as a departure point until the destination of each subsequent trip after the first trip becomes a predetermined specific destination, and a prediction result transmission circuit that transmits, to the vehicle-side communication device 90 via the server-side communication device 301, the destination prediction result including information on the predicted destination of each subsequent trip after the first trip.

As such, the vehicle 2 can acquire information on the destination of each subsequent trip after the first trip, which starts traveling at a known point as a departure point, that is, information on the destination of each subsequent future trip performed after the first trip, which starts traveling at the known point as the departure point. Therefore, the electronic control unit 200 of the vehicle 2 can control, for example, traveling of the vehicle 2 using the information on the destination of each subsequent trip after the first trip.

Specifically, the destination prediction circuit according to the present embodiment is configured to calculate, based on the learning data, the conditional probability of each known destination when the explanatory variable is given, using the departure point of the trip of which the destination is to be predicted as at least the explanatory variable, and to set a destination having the highest conditional probability as the predicted destination of the trip of which the destination is to be predicted. Then, the destination prediction circuit is configured to set the predicted destination of the trip of which the predicted destination is set as the departure point of the next trip of the trip.

In addition, the destination prediction circuit according to the present embodiment is configured to further use the departure day of the week and the departure time range of the trip of which the destination is to be predicted as explanatory variables. As such, accuracy of the destination prediction can be improved by increasing the number of explanatory variables for the destination prediction.

Moreover, the electronic control unit 200 according to the present embodiment is configured to create a traveling plan that sets which traveling mode of an EV mode and a CS mode is used for the vehicle 2 to travel in each traveling section on an expected route of each subsequent trip after the first trip based on the prediction result of the destination of each subsequent trip after the first trip which is received via the vehicle-side communication device 90, and the second rotating electric machine 40 and cause the vehicle 2 to travel while switching the traveling mode according to the created traveling plan. The EV mode causes the vehicle 2 to travel by controlling the output from the second rotating electric machine 40, and the CS mode causes the vehicle 2 to travel by controlling the output from the internal combustion engine 10 and the second rotating electric machine 40.

As such, since it is possible to create a traveling plan in which traveling of the entire traveling route consisting of subsequent trips after the first trip, that is, a plurality of trips, is optimized, the fuel consumption of the vehicle 2 can be reduced compared to a case in which it is possible to create only a traveling plan in which traveling of subsequent trips after the first trip for each trip is optimized individually.

In addition, the electronic control unit 200 according to the present embodiment is configured to determine, when the trip in which the electronic control unit 200 is causing the vehicle 2 to travel while switching the traveling mode according to the traveling plan has been ended, whether the actual destination of the ended trip matches the predicted destination which was set as the destination of the ended trip in the traveling plan, and to determine whether the actual destination of the ended trip is a known destination that has been visited at least once when the actual destination of the ended trip does not match the predicted destination of the ended trip. In addition, the electronic control unit 200 is configured to request the server 3 via the vehicle-side communication device 90 to transmit a prediction result of a destination of each subsequent trip after the next trip of the ended trip when the actual destination of the ended trip is a known destination, to create the new traveling plan based on the prediction result of the destination of each subsequent trip after the next trip of the ended trip which is received via the vehicle-side communication device 90, and to cause the vehicle 2 to travel while switching the traveling mode according to the newly created traveling plan from the next trip of the ended trip.

As such, it is possible to create the new traveling plan when the destination prediction fails. Since the electronic control unit 200 causes the vehicle 2 to travel according to the newly created traveling plan from the next trip, the fuel consumption of the vehicle 2 can be reduced.

Further, since the electronic control unit 200 according to the present embodiment cannot predict the destination after the next trip of the ended trip, when the actual destination of the above-described ended trip is not a known destination, in the next trip of the ended trip, the electronic control unit 200 is configured to cause the vehicle 2 to travel by performing a regular traveling control of setting the traveling mode to the EV mode until the battery charge amount is lower than or equal to the predetermined switching charge amount, and to the CS mode after the battery charge amount is lower than or equal to the predetermined switching charge amount, without using the traveling plan.

Moreover, the electronic control unit 200 according to the present embodiment is configured to determine, when the regular trip in which the electronic control unit 200 is causing the vehicle 2 to travel by performing the regular traveling control without using the traveling plan, whether the actual destination of the ended regular trip is a known destination. In addition, the electronic control unit 200 is configured to request the server 3 via the vehicle-side communication device 90 to transmit the prediction result of the destination of each subsequent trip after the next trip of the regular trip when the actual destination of the regular trip is a known destination, to create the new traveling plan based on the prediction result of the destination of each subsequent trip after the next trip of the regular trip, which is received via the vehicle-side communication device 90, and to cause the vehicle 2 to travel while switching the traveling mode according to the newly created traveling plan from the next trip of the regular trip.

As such, it is possible to create the new traveling plan at a stage where the destination of each subsequent trip after the next trip can be predicted. Since the electronic control unit 200 causes the vehicle 2 to travel according to the newly created traveling plan from the next trip, the fuel consumption of the vehicle 2 can be reduced.

In addition, since the electronic control unit 200 according to the present embodiment cannot predict the destination after the next trip of the regular trip when the actual destination of the above-described regular trip is not the known destination, in the next trip of the regular trip, the electronic control unit 200 is configured to cause the vehicle 2 to travel by performing the regular traveling control without using the traveling plan.

In addition, the electronic control unit 200 according to the present embodiment is configured to determine whether the predicted destination of the above-described ended trip is a specific destination when the actual destination of the ended trip matches the predicted destination of the ended trip. In addition, the electronic control unit 200 is configured to request the server 3 via the vehicle-side communication device 90 to transmit the prediction result of the destination of each subsequent trip after the next trip of the ended trip when the predicted destination of the ended trip is a specific destination, to create the new traveling plan based on the prediction result of the destination of each subsequent trip after the next trip after the ended trip, which is received via the vehicle-side communication device 90, and to cause the vehicle 2 to travel while switching the traveling mode according to the newly created traveling plan from the next trip of the ended trip. The electronic control unit 200 according to the present embodiment is further configured to, when the predicted destination of the ended trip is not a specific destination, continuously cause the vehicle 2 to travel in the next trip of the ended trip while switching the traveling mode according to the traveling plan which has been used in the ended trip.

Further, the vehicle 2 according to the present embodiment is a plug-in hybrid vehicle chargeable from the outside. In the present embodiment, the specific destination is a place where plug-in charging is available. As such, since it is possible to create the traveling plan in which a traveling route from a place where the vehicle 2 can be charged to a next place where the vehicle 2 can be charged is optimized, fuel efficiency can be improved by appropriately using the electric power charged in the battery.

As the above, although an embodiment of the present invention has been described, the embodiment only shows a part of applications of the present invention, and does not intend to limit the technical scope of the present invention to a specific configuration of the above embodiment.

For example, although a plug-in hybrid vehicle having the battery 50 configured to be electrically connected to an external power source has been described as an example of the vehicle 2 in the above embodiment, a normal hybrid vehicle may be used.

Further, although 3 pieces of information, that is, the departure point, the departure day of the week, and the departure time range, are used as explanatory variables in the above embodiment, the present invention is not limited thereto, and, for example, the driver of the vehicle 2 may be used as an explanatory variable. This is because the usage of the vehicle 2 varies depending on a driver of the vehicle 2. In addition, when the driver of the vehicle 2 is used as an explanatory variable, the driver can be determined based on the information (driver identification information), and the like, transmitted from a mobile terminal owned by the driver.

Moreover, although a prediction method using the Bayesian inference, which is a type of machine learning, is described as an example of the destination prediction method in the above embodiment, the present invention is not limited thereto, and the destination may be predicted by, for example, a neural network by the input of the departure point, the departure day of the week, and the departure time range.

In addition, although the traveling plan is created by the electronic control unit 200 of the vehicle 2 in the above embodiment, the traveling plan may be created by the server 3.

Further, in the above embodiment, in step S16 of FIG. 13B, the trips having the sort trip numbers R from 1 to y respectively are set as an EV route in which all the traveling sections on the trip are EV sections. Moreover, with respect to each traveling section on each of the trips having the sort trip numbers R from y + 1 to r respectively, the traveling sections having the second sort section numbers S from 1 to z respectively are set as the EV section, and the traveling sections having the second sort section numbers S from z + 1 to s respectively are set as the CS section. Then, a second traveling plan is created by rearranging the traveling sections in order of actual section number.

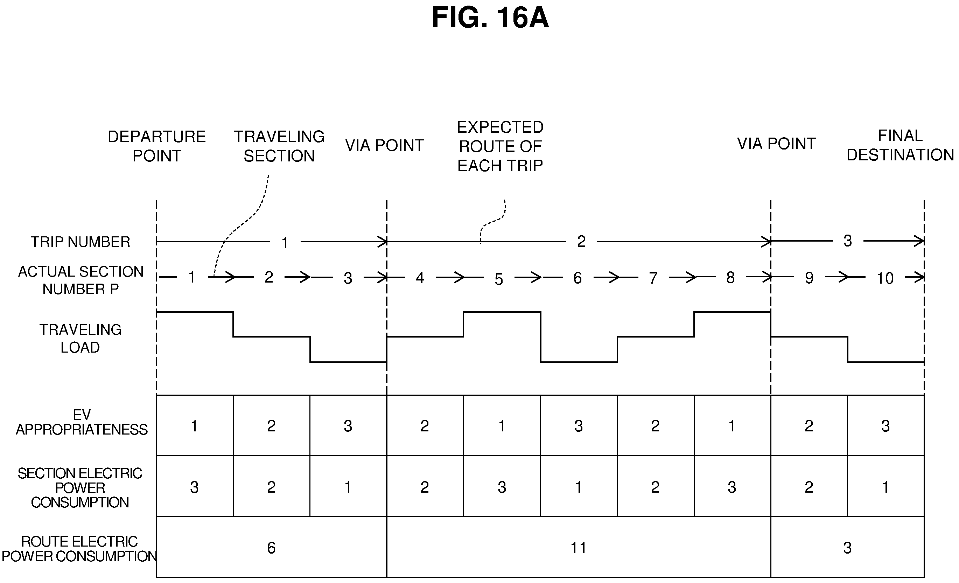

However, for example, when the sort trip numbers y that satisfy the inequality (22) in step S16 are two or more, in the processes from steps S17 to S22, a plurality (the number corresponding to the sort trip numbers y) of second traveling plans (route priority traveling plan) may be created as illustrated in FIGS. 16A to FIG 16F, and the one having the lowest second total fuel consumption $TF_2$ from among the created second traveling plans may be employed as the second traveling plan and compared with the first total fuel consumption $TF_1$ of the first traveling plan in step S25.

FIGS. 16A to 16F are diagrams describing creation of the second traveling plan according to a modified example of the present invention, in which the entire expected route of the plurality of trips is optimized in consideration of the fuel consumption for catalyst warm-up.

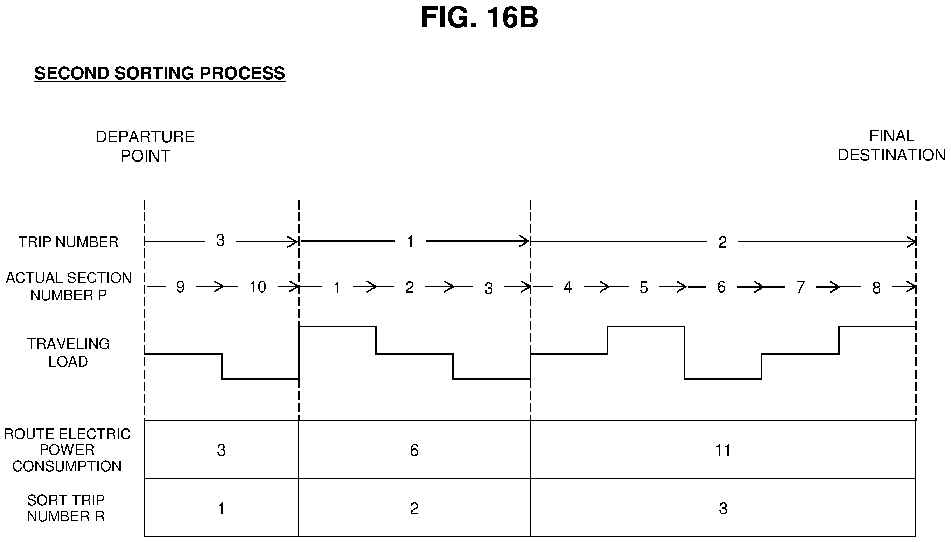

For example, in a case in which there are 3 trips (that is, there are 2 via points) as illustrated in FIG. 16A, the trips are rearranged in ascending order of route electric power consumption by performing the second sorting process, as illustrated in FIG. 16B.

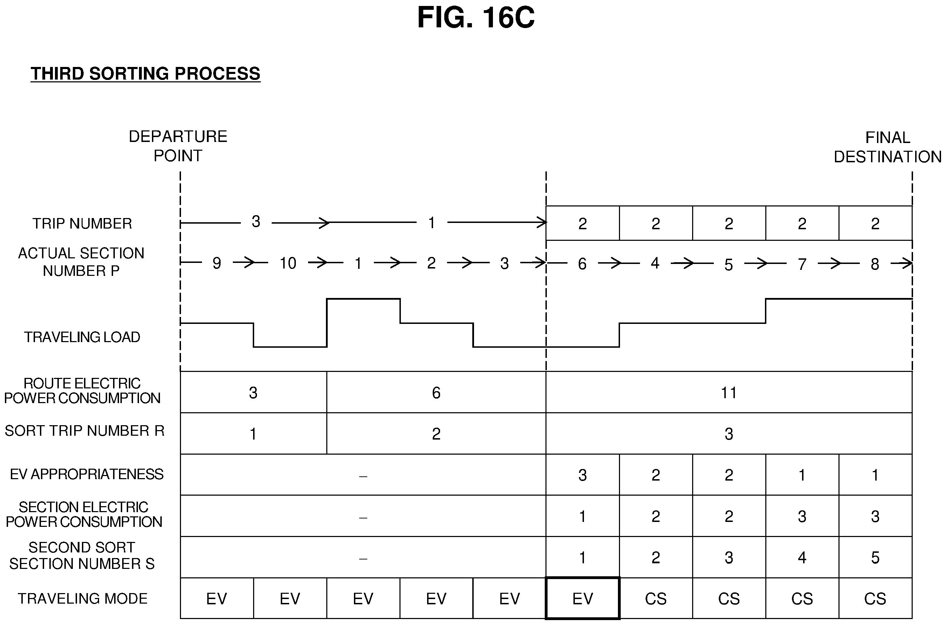

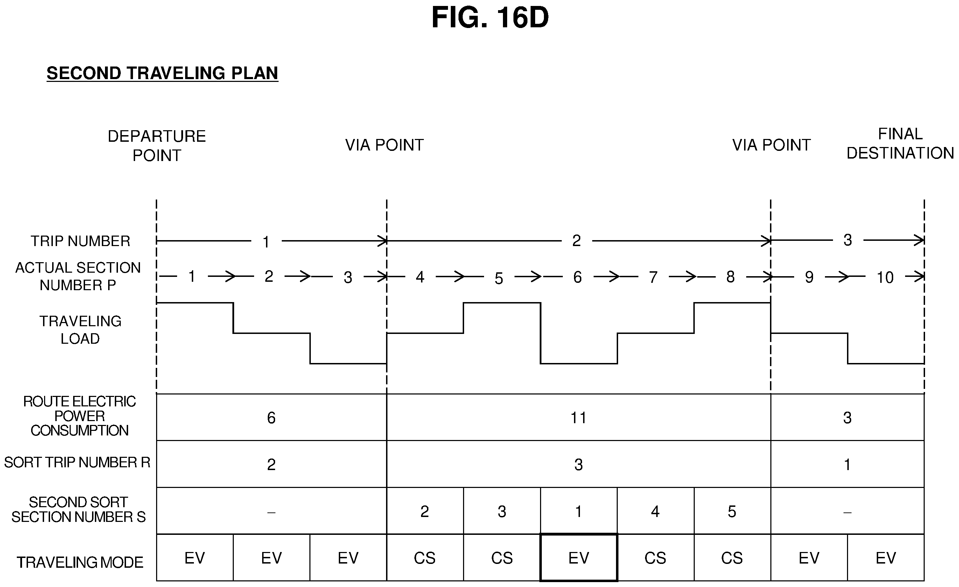

Here, for example, when the sort trip number y that satisfies the inequality (22) calculated in step S16 is 2, first, in a manner similar to the above embodiment, as illustrated in FIG. 16C, trips having the sort trip numbers R from 1 to y respectively (y = 2 are in the example shown in FIG. 16C) are set to an EV route in which all the traveling sections on the trip are EV sections. Then, with respect to each traveling section on each of trips having the sort trip numbers R from y + 1 to r respectively (r = 3 in the example illustrated in FIG. 16C), considering the surplus electric power $\Delta CE$ (= $CE - RE_2$) of the battery, traveling sections having the second sort section numbers S from 1 to z respectively (z = 1 in the example illustrated in FIG. 16C) that can be set as the EV section are set as the EV section, and traveling sections having the second sort section number S from z + 1 to s respectively (s = 5 in the example illustrated in FIG. 16C) are set as the CS section. Thereafter, as illustrated in FIG. 16D, a second traveling plan is set by rearranging each traveling section in order of actual section number as a second traveling plan.

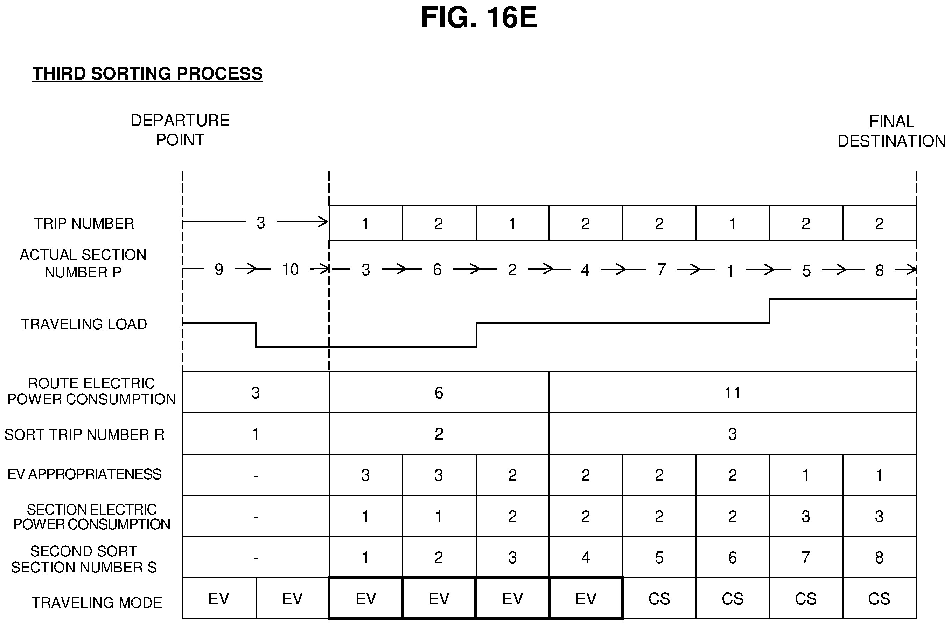

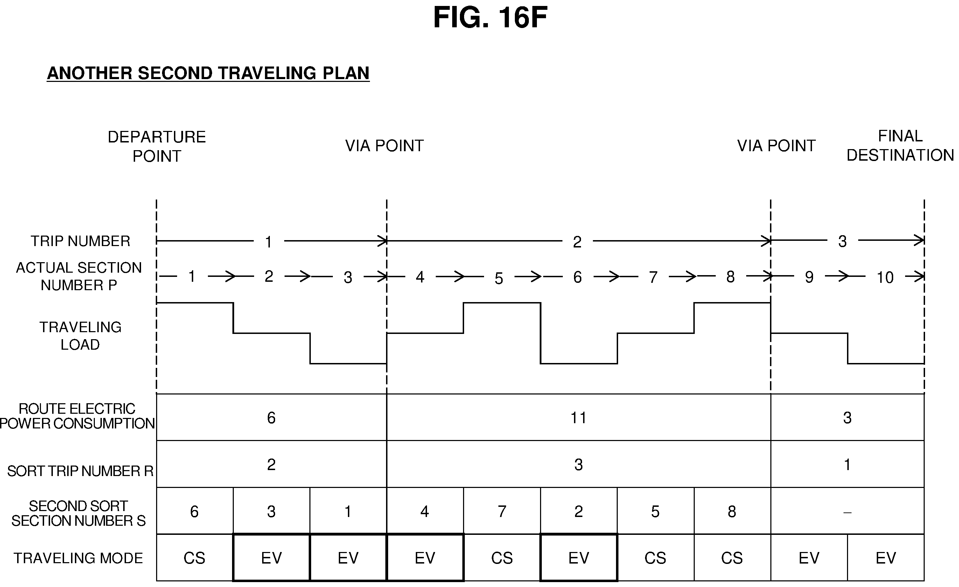

Next, unlike the above embodiment, as illustrated in FIG. 16E, the trip having the sort trip number R of 1 is set as an EV route in which all the traveling sections on the trip are EV sections. Then, with respect to each traveling section on each of trips having the sort trip numbers R from 2 to r respectively, considering the surplus electric power $\Delta CE$ (= $CE - RE_1$) of the battery, traveling sections having the second sort section numbers S from 1 to z respectively (z = 4 in the example illustrated in FIG. 16E) that can be set as the EV section are set as the EV section, and each traveling section on each of trips having the second sort section numbers from z + 1 to s respectively (s = 8 in the example illustrated in FIG. 16E) are set as the CS section. Thereafter, as illustrated in FIG. 16F, another second traveling plan is set by rearranging each traveling section in order of actual section number as another second traveling plan.

Then, the second total fuel consumption $TF_2$ of each second traveling plan created as above is calculated, and the one having the lowest second total fuel consumption $TF_2$ from among the calculated second total fuel consumptions may be employed as the second traveling plan and compared with the first total fuel consumption $TF_1$ of the first traveling plan in step S25.

**Claims**

1. A vehicle control system (1) comprising:

   a hybrid vehicle (2) including an internal combustion engine (10), a rotating electric machine (40) configured to be driven by electric power of a battery (50), an in-vehicle communication device (90), and an in-vehicle control device (200), the hybrid vehicle (2) configured to travel by an output from at least one of the internal combustion engine (10) and the rotating electric machine (40);
   a server (3) including a communication circuit (301) configured to wirelessly communicate with the in-vehicle communication device (90), and a control circuit (303), wherein:

      the in-vehicle control device (200) is configured to transmit traveling data of the hybrid vehicle (2) to the communication circuit (301) via the in-vehicle communication device (90) at a predetermined time;
      the control circuit (303) includes a learning data creation circuit, a destination prediction circuit, and a prediction result transmission circuit;
      the learning data creation circuit is configured to create predetermined learning data based on the traveling data of the hybrid vehicle (2), the traveling data being received from the in-vehicle communication device (90) via the communication circuit (301);
      the destination prediction circuit is configured to sequentially predict, based on the learning data, a first destination until the first destination becomes a predetermined specific destination, the first destination being a destination of each subsequent trip after a first trip having a known place as a departure point; and
      the prediction result transmission circuit is configured to transmit a first prediction result including information on a predicted destination of each subsequent trip after the first trip to the in-vehicle communication device (90) via the communication circuit (301).

2. The vehicle control system (1) according to claim 1, wherein the destination prediction circuit is configured to:

   calculate, based on the learning data, a conditional probability of each known destination when an explanatory variable is given, using the departure point of a second trip as at least the explanatory variable; and
   set a destination having a highest conditional probability as the predicted destination of the second trip.

3. The vehicle control system (1) according to claim 2, wherein the destination prediction circuit is configured to set the predicted destination of the second trip as the departure point of a next trip of the second trip.

4. The vehicle control system (1) according to claim 2 or 3, wherein the destination prediction circuit is configured to use a departure day of a week of the second trip and a departure time range of the second trip as the explanatory variables.

5. The vehicle control system (1) according to any one of claims 1 to 4, wherein:

   the in-vehicle control device (200) is configured to create, based on the first prediction result received via the in-vehicle communication device (90), a traveling plan that sets which traveling mode of an electric vehicle mode and a charge sustaining mode is used for the hybrid vehicle (2) to travel in each traveling section on an expected route of each subsequent trip after the first trip;
   the electric vehicle mode causes the hybrid vehicle (2) to travel by controlling the output from the rotating electric machine (40);
   the charge sustaining mode causes the hybrid vehicle (2) to travel by controlling the output from the internal combustion engine (10) and the output from the rotating electric machine (40); and
   the in-vehicle control device (200) is configured to cause the hybrid vehicle (2) to travel while switching the traveling mode according to the traveling plan.

6. The vehicle control system (1) according to claim 5, wherein the in-vehicle control device (200) is configured to:

   determine, when an end trip is ended, whether an actual destination of the end trip matches a predicted destination which is set as the destination of the end trip in the traveling plan, the end trip being a trip in which the in-vehicle control device (200) is causing the hybrid vehicle (2) to travel while switching the traveling mode according to the traveling plan;

determine, when the actual destination of the end trip does not match the predicted destination of the end trip, whether the actual destination of the end trip is a known destination that has been visited at least once;

request, when the actual destination of the end trip is the known destination, the server (3) via the in-vehicle communication device (90) to transmit a second prediction result, the second prediction result being a prediction result of the destination of each subsequent trip after a next trip of the end trip;

create a new traveling plan based on the second prediction result received via the in-vehicle communication device (90); and

cause the hybrid vehicle (2) to travel while switching the traveling mode according to the new traveling plan from the next trip of the end trip.

7. The vehicle control system (1) according to claim 6, wherein the in-vehicle control device (200) is configured to, when the actual destination of the end trip is not the known destination, cause the hybrid vehicle (2) to travel in the next trip of the end trip by performing a regular traveling control of setting the traveling mode to the electric vehicle mode until a battery charge amount is lower than or equal to a predetermined switching charge amount, and to the charge sustaining mode after the battery charge amount is lower than or equal to the predetermined switching charge amount, without using the traveling plan.

8. The vehicle control system (1) according to claim 7, wherein the in-vehicle control device (200) is configured to:

determine, when a regular trip is ended, whether the actual destination of the ended regular trip is the known destination, the regular trip being a trip in which in-vehicle control device (200) is causing the hybrid vehicle (2) to travel by performing the regular traveling control without using the traveling plan;

request, when the actual destination of the regular trip is the known destination, the server (3) via the in-vehicle communication device (90) to transmit a third prediction result, the third prediction result being a prediction result of the destination of each subsequent trip after a next trip of the regular trip;

create the new traveling plan based on the third prediction result received via the in-vehicle communication device (90); and

cause the hybrid vehicle (2) to travel while switching the traveling mode according to the new traveling plan from the next trip of the regular trip.

9. The vehicle control system (1) according to claim 8, wherein the in-vehicle control device (200) is configured to, when the actual destination of the regular trip is not the known destination, cause the hybrid vehicle (2) to travel in the next trip of the regular trip by performing the regular traveling control without using the traveling plan.

10. The vehicle control system (1) according to any one of claims 6 to 9, wherein the in-vehicle control device (200) is configured to:

determine, when the actual destination of the end trip matches the predicted destination of the end trip, whether the predicted destination of the end trip is the specific destination;

request, when the predicted destination of the end trip is the specific destination, the server (3) via the in-vehicle communication device (90) to transmit the second prediction result;

create the new traveling plan based on the second prediction result received via the in-vehicle communication device (90); and

cause the hybrid vehicle (2) to travel while switching the traveling mode according to the new traveling plan from the next trip of the end trip.

11. The vehicle control system (1) according to claim 10, wherein the in-vehicle control device (200) is configured to, when the predicted destination of the end trip is not the predetermined specific destination, continuously cause the hybrid vehicle (2) to travel in the next trip of the end trip while switching the traveling mode according to the traveling plan which has been used in the end trip.

12. The vehicle control system (1) according to any one of claims 1 to 11, wherein:

the hybrid vehicle (2) is a plug-in hybrid vehicle chargeable from an outside; and
the predetermined specific destination is a place where plug-in charging is available.

**13.** A server (3) comprising:

a communication circuit (301) configured to communicate with an in-vehicle communication device (90) mounted on a hybrid vehicle (2); and
a control circuit (303), wherein:

the control circuit (303) includes a learning data creation circuit, a destination prediction circuit, and a prediction result transmission circuit;
the learning data creation circuit is configured to create predetermined learning data based on traveling data of the hybrid vehicle (2), the traveling data being received from the in-vehicle communication device (90) via the communication circuit (301);
the destination prediction circuit is configured to sequentially predict, based on the learning data, a destination of each subsequent trip after a first trip until the destination of each subsequent trip after the first trip becomes a predetermined specific destination, the first trip having a known place as a departure point; and
the prediction result transmission circuit is configured to transmit, to the in-vehicle communication device (90) via the communication circuit (301), a destination prediction result including information on a predicted destination of each subsequent trip after the first trip.

**14.** A hybrid vehicle (2) comprising:

an internal combustion engine (10);
a rotating electric machine (40) driven by electric power of a battery (50);
an in-vehicle communication device (90) configured to communicate with a server (3); and
an in-vehicle control device (200),

wherein the in-vehicle control device (200) includes:

a receiver configured to receive, from the server (3) via the in-vehicle communication device (90), a prediction result of a destination of each subsequent trip after a first trip having a known place as a departure point; and
a transmitter configured to transmit traveling data of the hybrid vehicle (2) to the server (3) via the in-vehicle communication device (90) at a predetermined time, the traveling data being required for predicting the destination of each subsequent trip after the first trip on the server (3).

**15.** Anon-transitory storage medium storing instructions that are executable by one or more processors and that cause the one or more processors to perform functions comprising:

creating predetermined learning data based on traveling data of a hybrid vehicle (2), the traveling data being received via a communication circuit (301) configured to communicate with an in-vehicle communication device (90) mounted on the hybrid vehicle (2);
sequentially predicting, based on the learning data, a destination of each subsequent trip after a first trip until the destination of each subsequent trip after the first trip becomes a predetermined specific destination, the first trip having a known place as a departure point; and
transmitting, to the in-vehicle communication device (90) via the communication circuit (301), a destination prediction result including information on a predicted destination of each subsequent trip after the first trip.

# FIG. 1

# FIG. 2

# FIG. 3

**EXAMPLE OF TRAVELING PLAN**

# FIG. 4A

## EXAMPLE OF TRAVELING PLAN IN WHICH EXPECTED ROUTE OF EACH TRIP IS INDIVIDUALLY OPTIMIZED

DEPARTURE POINT
(OUTBOUND TRIP):
HOME

EXPECTED ROUTE
(OUTBOUND TRIP)

DESTINATION
(OUTBOUND TRIP) :
WORKPLACE
DEPARTURE POINT
(RETURN TRIP) :
WORKPLACE

EXPECTED ROUTE
(RETURN TRIP)

DESTINATION
(RETURN TRIP):
HOME

TRAVELING SECTION — 1 → 2 → 3 → 4 → 5 → 1 → 2 → 3 → 4 → 5 →

| TRAVELING MODE | CS | EV | EV | EV | CS | EV | EV | CS | CS | EV |
|---|---|---|---|---|---|---|---|---|---|---|

FUEL IS CONSUMED MORE THAN NEEDED FOR CATALYST WARM-UP IN EACH OF OUTBOUND TRIP AND RETURN TRIP

EP 3 712 006 A1

# FIG. 4B

**EXAMPLE OF TRAVELING PLAN IN WHICH ENTIRE EXPECTED ROUTE OF PLURALITY OF TRIPS IS OPTIMIZED**

DEPARTURE
POINT: HOME

ENTIRE EXPECTED
ROUTE INCLUDING
OUTBOUND TRIP
AND RETURN TRIP

VIA POINT:
WORKPLACE

DESTINATION:
HOME

TRAVELING
SECTION

1 → 2 → 3 → 4 → 5 → 6 → 7 → 8 → 9 → 10 →

| TRAVELING MODE | CS | CS | EV | EV | CS | EV | EV | EV | EV | EV |

NO FUEL IS CONSUMED FOR CATALYST WARM-UP
SINCE THERE IS NO CS SECTION IN RETURN TRIP

# FIG. 5A

PROBABILITY DISTRIBUTION OF DEPARTURE POINT B

| PROBABILITY DISTRIBUTION / DEPARTURE POINT B | $b_1$ | $b_2$ | $\cdots$ | $b_j$ | TOTAL |
|---|---|---|---|---|---|
| P(B) | $P(b_1)$ | $P(b_2)$ | $\cdots$ | $P(b_j)$ | 1 |

# FIG. 5B

PROBABILITY DISTRIBUTION OF DEPARTURE DAY OF WEEK C

| PROBABILITY DISTRIBUTION / DEPARTURE DAY OF WEEK C | $c_1$ | $c_2$ | $\cdots$ | $c_k$ | TOTAL |
|---|---|---|---|---|---|
| P(C) | $P(c_1)$ | $P(c_2)$ | $\cdots$ | $P(c_k)$ | 1 |

# FIG. 5C

PROBABILITY DISTRIBUTION OF DEPARTURE TIME RANGE D

| PROBABILITY DISTRIBUTION / DEPARTURE TIME RANGE D | $d_1$ | $d_2$ | $\cdots$ | $d_l$ | TOTAL |
|---|---|---|---|---|---|
| P(D) | $P(d_1)$ | $P(d_2)$ | $\cdots$ | $P(d_l)$ | 1 |

# FIG. 5D

PROBABILITY DISTRIBUTION OF DESTINATION A

| DESTINATION A / PROBABILITY DISTRIBUTION | $a_1$ | $a_2$ | $\cdots$ | $a_i$ | TOTAL |
|---|---|---|---|---|---|
| $P(A)$ | $P(a_1)$ | $P(a_2)$ | $\cdots$ | $P(a_i)$ | 1 |

# FIG. 5E

PROBABILITY DISTRIBUTION OF NEXT-TRIP DEPARTURE DAY OF WEEK CZ

| DEPARTURE DAY OF WEEK CZ / PROBABILITY DISTRIBUTION | $cz_1$ | $cz_2$ | $\cdots$ | $cz_k$ | TOTAL |
|---|---|---|---|---|---|
| $P(CZ)$ | $P(cz_1)$ | $P(cz_2)$ | $\cdots$ | $P(cz_k)$ | 1 |

# FIG. 5F

PROBABILITY DISTRIBUTION OF NEXT-TRIP DEPARTURE TIME RANGE DZ

| DEPARTURE TIME RANGE DZ / PROBABILITY DISTRIBUTION | $dz_1$ | $dz_2$ | $\cdots$ | $dz_l$ | TOTAL |
|---|---|---|---|---|---|
| $P(DZ)$ | $P(dz_1)$ | $P(dz_2)$ | $\cdots$ | $P(dz_l)$ | 1 |

# FIG. 6A

CONDITIONAL PROBABILITY DISTRIBUTION OF DEPARTURE POINT B
WHEN DESTINATION A IS GIVEN

| DEPARTURE POINT B / CONDITIONAL PROBABILITY DISTRIBUTION | $b_1$ | $b_2$ | $\cdots$ | $b_j$ | TOTAL |
|---|---|---|---|---|---|
| $P(B \mid a_1)$ | $P(b_1 \mid a_1)$ | $P(b_2 \mid a_1)$ | $\cdots$ | $P(b_j \mid a_1)$ | 1 |
| $P(B \mid a_2)$ | $P(b_1 \mid a_2)$ | $P(b_2 \mid a_2)$ | $\cdots$ | $P(b_j \mid a_2)$ | 1 |
| $\vdots$ | $\vdots$ | $\vdots$ | $\vdots$ | $\vdots$ | $\vdots$ |
| $P(B \mid a_i)$ | $P(b_1 \mid a_i)$ | $P(b_2 \mid a_i)$ | $\cdots$ | $P(b_j \mid a_i)$ | 1 |

# FIG. 6B

CONDITIONAL PROBABILITY DISTRIBUTION OF DEPARTURE DAY OF WEEK C
WHEN DESTINATION A IS GIVEN

| DEPARTURE DAY OF WEEK C / CONDITIONAL PROBABILITY DISTRIBUTION | $c_1$ | $c_2$ | $\cdots$ | $c_k$ | TOTAL |
|---|---|---|---|---|---|
| $P(C \mid a_1)$ | $P(c_1 \mid a_1)$ | $P(c_2 \mid a_1)$ | $\cdots$ | $P(c_k \mid a_1)$ | 1 |
| $P(C \mid a_2)$ | $P(c_1 \mid a_2)$ | $P(c_2 \mid a_2)$ | $\cdots$ | $P(c_k \mid a_2)$ | 1 |
| $\vdots$ | $\vdots$ | $\vdots$ | $\vdots$ | $\vdots$ | $\vdots$ |
| $P(C \mid a_i)$ | $P(c_1 \mid a_i)$ | $P(c_2 \mid a_i)$ | $\cdots$ | $P(c_k \mid a_i)$ | 1 |

# FIG. 6C

CONDITIONAL PROBABILITY DISTRIBUTION OF DEPARTURE TIME RANGE D
WHEN DESTINATION A IS GIVEN

| DEPARTURE TIME RANGE D / CONDITIONAL PROBABILITY DISTRIBUTION | $d_1$ | $d_2$ | $\cdots$ | $d_l$ | TOTAL |
|---|---|---|---|---|---|
| $P(D \mid a_1)$ | $P(d_1 \mid a_1)$ | $P(d_2 \mid a_1)$ | $\cdots$ | $P(d_l \mid a_1)$ | 1 |
| $P(D \mid a_2)$ | $P(d_1 \mid a_2)$ | $P(d_2 \mid a_2)$ | $\cdots$ | $P(d_l \mid a_2)$ | 1 |
| $\vdots$ | $\vdots$ | $\vdots$ | $\vdots$ | $\vdots$ | $\vdots$ |
| $P(D \mid a_i)$ | $P(d_1 \mid a_i)$ | $P(d_2 \mid a_i)$ | $\cdots$ | $P(d_l \mid a_i)$ | 1 |

# FIG. 7A

CONDITIONAL PROBABILITY DISTRIBUTION OF DEPARTURE POINT
B WHEN NEXT-TRIP DEPARTURE DAY OF WEEK CZ IS GIVEN

| DEPARTURE POINT B / CONDITIONAL PROBABILITY DISTRIBUTION | $b_1$ | $b_2$ | $\cdots$ | $b_j$ | TOTAL |
|---|---|---|---|---|---|
| $P(B \mid cz_1)$ | $P(b_1 \mid cz_1)$ | $P(b_2 \mid cz_1)$ | $\cdots$ | $P(b_j \mid cz_1)$ | 1 |
| $P(B \mid cz_2)$ | $P(b_1 \mid cz_2)$ | $P(b_2 \mid cz_2)$ | $\cdots$ | $P(b_j \mid cz_2)$ | 1 |
| $\vdots$ | $\vdots$ | $\vdots$ | $\vdots$ | $\vdots$ | $\vdots$ |
| $P(B \mid cz_k)$ | $P(b_1 \mid cz_k)$ | $P(b_2 \mid cz_k)$ | $\cdots$ | $P(b_j \mid cz_k)$ | 1 |

# FIG. 7B

CONDITIONAL PROBABILITY DISTRIBUTION OF DEPARTURE DAY OF WEEK C
WHEN NEXT-TRIP DEPARTURE DAY OF WEEK CZ IS GIVEN

| DEPARTURE DAY OF WEEK C / CONDITIONAL PROBABILITY DISTRIBUTION | $c_1$ | $c_2$ | $\cdots$ | $c_k$ | TOTAL |
|---|---|---|---|---|---|
| $P(C \mid cz_1)$ | $P(c_1 \mid cz_1)$ | $P(c_2 \mid cz_1)$ | $\cdots$ | $P(c_k \mid cz_1)$ | 1 |
| $P(C \mid cz_2)$ | $P(c_1 \mid cz_2)$ | $P(c_2 \mid cz_2)$ | $\cdots$ | $P(c_k \mid cz_2)$ | 1 |
| $\vdots$ | $\vdots$ | $\vdots$ | $\vdots$ | $\vdots$ | $\vdots$ |
| $P(C \mid cz_k)$ | $P(c_1 \mid cz_k)$ | $P(c_2 \mid cz_k)$ | $\cdots$ | $P(c_k \mid cz_k)$ | 1 |

# FIG. 7C

CONDITIONAL PROBABILITY DISTRIBUTION OF DEPARTURE TIME RANGE D
WHEN NEXT-TRIP DEPARTURE DAY OF WEEK CZ IS GIVEN

| DEPARTURE TIME RANGE D / CONDITIONAL PROBABILITY DISTRIBUTION | $d_1$ | $d_2$ | $\cdots$ | $d_l$ | TOTAL |
|---|---|---|---|---|---|
| $P(D \mid cz_1)$ | $P(d_1 \mid cz_1)$ | $P(d_2 \mid cz_1)$ | $\cdots$ | $P(d_l \mid cz_1)$ | 1 |
| $P(D \mid cz_2)$ | $P(d_1 \mid cz_2)$ | $P(d_2 \mid cz_2)$ | $\cdots$ | $P(d_l \mid cz_2)$ | 1 |
| $\vdots$ | $\vdots$ | $\vdots$ | $\vdots$ | $\vdots$ | $\vdots$ |
| $P(D \mid cz_k)$ | $P(d_1 \mid cz_k)$ | $P(d_2 \mid cz_k)$ | $\cdots$ | $P(d_l \mid cz_k)$ | 1 |

# FIG. 8A

CONDITIONAL PROBABILITY DISTRIBUTION OF DEPARTURE POINT B
WHEN NEXT-TRIP DEPARTURE TIME RANGE DZ IS GIVEN

| CONDITIONAL PROBABILITY DISTRIBUTION ╲ DEPARTURE POINT B | $b_1$ | $b_2$ | $\cdots$ | $b_j$ | TOTAL |
|---|---|---|---|---|---|
| $P(B \mid dz_1)$ | $P(b_1 \mid dz_1)$ | $P(b_2 \mid dz_1)$ | $\cdots$ | $P(b_j \mid dz_1)$ | 1 |
| $P(B \mid dz_2)$ | $P(b_1 \mid dz_2)$ | $P(b_2 \mid dz_2)$ | $\cdots$ | $P(b_j \mid dz_2)$ | 1 |
| $\vdots$ | $\vdots$ | $\vdots$ | $\vdots$ | $\vdots$ | $\vdots$ |
| $P(B \mid dz_l)$ | $P(b_1 \mid dz_l)$ | $P(b_2 \mid dz_l)$ | $\cdots$ | $P(b_j \mid dz_l)$ | 1 |

# FIG. 8B

CONDITIONAL PROBABILITY DISTRIBUTION OF DEPARTURE DAY OF WEEK C
WHEN NEXT-TRIP DEPARTURE TIME RANGE DZ IS GIVEN

| CONDITIONAL PROBABILITY DISTRIBUTION ╲ DEPARTURE DAY OF WEEK C | $c_1$ | $c_2$ | $\cdots$ | $c_k$ | TOTAL |
|---|---|---|---|---|---|
| $P(C \mid dz_1)$ | $P(c_1 \mid dz_1)$ | $P(c_2 \mid dz_1)$ | $\cdots$ | $P(c_k \mid dz_1)$ | 1 |
| $P(C \mid dz_2)$ | $P(c_1 \mid dz_2)$ | $P(c_2 \mid dz_2)$ | $\cdots$ | $P(c_k \mid dz_2)$ | 1 |
| $\vdots$ | $\vdots$ | $\vdots$ | $\vdots$ | $\vdots$ | $\vdots$ |
| $P(C \mid dz_l)$ | $P(c_1 \mid dz_l)$ | $P(c_2 \mid dz_l)$ | $\cdots$ | $P(c_k \mid dz_l)$ | 1 |

# FIG. 8C

CONDITIONAL PROBABILITY DISTRIBUTION OF DEPARTURE TIME RANGE D
WHEN NEXT-TRIP DEPARTURE TIME RANGE DZ IS GIVEN

| CONDITIONAL PROBABILITY DISTRIBUTION ╲ DEPARTURE TIME RANGE D | $d_1$ | $d_2$ | $\cdots$ | $d_l$ | TOTAL |
|---|---|---|---|---|---|
| $P(D \mid dz_1)$ | $P(d_1 \mid dz_1)$ | $P(d_2 \mid dz_1)$ | $\cdots$ | $P(d_l \mid dz_1)$ | 1 |
| $P(D \mid dz_2)$ | $P(d_1 \mid dz_2)$ | $P(d_2 \mid dz_2)$ | $\cdots$ | $P(d_l \mid dz_2)$ | 1 |
| $\vdots$ | $\vdots$ | $\vdots$ | $\vdots$ | $\vdots$ | $\vdots$ |
| $P(D \mid dz_l)$ | $P(d_1 \mid dz_l)$ | $P(d_2 \mid dz_l)$ | $\cdots$ | $P(d_l \mid dz_l)$ | 1 |

# FIG. 9

```
                    ┌─────────────────┐
                    │      START      │
                    └────────┬────────┘
         S101               │                          NO
         ┌───────────────────────────────┐──────────────────────┐
         │        HAS TRIP STARTED?       │                      │
         └───────────────┬────────────────┘                      │
         S102          YES│                                       │
         ┌─────────────────────────────┐                         │
         │         ACQUIRE             │                          │
         │    DEPARTURE POINT B,       │                          │
         │  DEPARTURE DAY OF WEEK C,   │                          │
         │  DEPARTURE TIME RANGE D     │                          │
         └──────────────┬──────────────┘                         │
         S103           │                                        │
         ┌─────────────────────────────┐                        │
         │        TRANSMIT TO          │                         │
         │   SERVER TRIP-START         │                         │
         │    TRANSMISSION             │                         │
         │    INFORMATION              │                         │
         └──────────────┬──────────────┘                        │
         S104           │                        NO              │
         ┌───────────────────────────────┐─────────┐            │
         │           F1 = 1?             │          │            │
         └───────────────┬───────────────┘          │            │
                       YES│                          │            │
         S105             │           S108           │     NO    │
         ┌──────────────────────┐   ┌──────────────────────────┐─┐│
         │   REQUEST SERVER    │   │          F2 = 1?          │ ││
         │    TO TRANSMIT      │   └──────────────┬───────────┘ ││
         │    PREDICTION       │               YES│             ││
         │     RESULT          │                  │             ││
         │  INFORMATION ON     │                  │             ││
         │   DESTINATION       │                  │             ││
         └──────────┬──────────┘                  │             ││
         S106       │                             │             ││
         ┌──────────────────────┐                 │             ││
         │   CREATE NEW         │                 │             ││
         │  TRAVELING PLAN      │                 │             ││
         └──────────┬──────────┘                  │             ││
         S107       │           S109              │  S110       ││
         ┌──────────────────┐  ┌──────────────────┐ ┌─────────────────┐
         │ START TRAVELING  │  │ START TRAVELING  │ │ START TRAVELING │
         │  ACCORDING TO    │  │  ACCORDING TO    │ │ WITHOUT CREATING│
         │ NEW TRAVELING    │  │ TRAVELING PLAN,  │ │ TRAVELING PLAN  │
         │     PLAN         │  │ CREATED BEFORE   │ └────────┬────────┘
         └────────┬─────────┘  │  PREVIOUS TRIP   │          │
                  │            └────────┬─────────┘          │
                  │                     │                    │
                  └─────────────────────┴────────────────────┘
                  │
         ┌─────────────────┐
         │       END       │
         └─────────────────┘
```

# FIG. 10

START

S111
HAS TRIP ENDED? — NO

S112 ↓YES
ACQUIRE DESTINATION A

S113
TRANSMIT TO SERVER
TRIP-END TRANSMISSION
INFORMATION

S114
HAS TRAVELING PLAN
OF CURRENT TRIP
BEEN CREATED? — NO

↓YES

S115
DOES DESTINATION A
OF CURRENT TRIP
MATCH PREDICTED
DESTINATION? — NO

↓YES

S119
DISCARD
TRAVELING PLAN

S116
HAS PREDICTED
DESTINATION BEEN
SET AS FINAL
DESTINATION? — NO

S120
IS DESTINATION
A OF CURRENT
TRIP KNOWN
DESTINATION? — NO

↓YES                      ↓YES

S117
F1 ← 1
F2 ← 0

S118
F1 ← 0
F2 ← 1

S121
F1 ← 1
F2 ← 0

S122
F1 ← 0
F2 ← 0

END

# FIG. 11

```
                    ┌─────────────────┐
                    │     START       │
                    └────────┬────────┘
                             │
  S201                       ▼
  ┌───────────────────────────────┐
  │       HAS TRIP-END            │        NO
  │      TRANSMISSION             ├──────────────────┐
  │   INFORMATION BEEN            │                  │
  │       RECEIVED?               │   S205           ▼
  └──────────────┬────────────────┘   ┌──────────────────────────┐
                 │ YES                 │    HAS TRIP-START       │   NO
  S202           ▼                     │     TRANSMISSION        ├────────┐
  ┌───────────────────────────────┐    │  INFORMATION BEEN       │        │
  │         ACQUIRE               │    │      RECEIVED?          │        │
  │    DEPARTURE POINT B,         │    └───────────┬─────────────┘        │
  │ DEPARTURE DAY OF WEEK C,      │   S206          │ YES                 │
  │ DEPARTURE TIME RANGE D,       │   ┌─────────────────────────────┐ NO  │
  │      DESTINATION A            │   │ HAS TRIP-END TRANSMISSION   ├──────┤
  └──────────────┬────────────────┘   │ INFORMATION EVER BEEN       │      │
  S203           ▼                     │      RECEIVED?              │      │
  ┌───────────────────────────────┐   └─────────────┬───────────────┘      │
  │         UPDATE                │   S207           │ YES                 │
  │   P(B), P(C), P(D), P(A)      │   ┌─────────────────────────────┐      │
  └──────────────┬────────────────┘   │ ACQUIRE NEXT-TRIP           │      │
  S204           ▼                     │ DEPARTURE DAY OF WEEK CZ,   │      │
  ┌───────────────────────────────┐   │ NEXT-TRI DEPARTURE TIME     │      │
  │         UPDATE                │   │ RANGE DZ                    │      │
  │ P(B│A), P(C│A), P(D│A)        │   └─────────────┬───────────────┘      │
  └──────────────┬────────────────┘   S208           ▼                     │
                 │                     ┌─────────────────────────────┐      │
                 │                     │         UPDATE              │      │
                 │                     │      P(CZ), P(DZ)           │      │
                 │                     └─────────────┬───────────────┘      │
                 │                     S209           ▼                     │
                 │                     ┌─────────────────────────────┐      │
                 │                     │         UPDATE              │      │
                 │                     │ P(B│CZ), P(C│CZ), P(D│CZ)   │      │
                 │                     └─────────────┬───────────────┘      │
                 │                     S210           ▼                     │
                 │                     ┌─────────────────────────────┐      │
                 │                     │         UPDATE              │      │
                 │                     │ P(B│DZ), P(C│DZ), P(D│DZ)   │      │
                 │                     └─────────────┬───────────────┘      │
                 │◄──────────────────────────────────┴─────────────────────┘
                 ▼
       ┌─────────────────┐
       │       END       │
       └─────────────────┘
```

# FIG. 12

START

S211
HAS NOTIFICATION
OF REQUEST FOR
DESTINATION
PREDICTION RESULT
BEEN RECEIVED?

NO →

YES ↓

S212
SET EXPLANATORY
VARIABLES FOR
DESTINATION PREDICTION

S213
$n \leftarrow 1$

S214
PREDICT DESTINATION
OF n-TH TRIP

S215
IS PREDICTED
DESTINATION
SPECIFIC
DESTINATION?

NO →

YES ↓

S216
SET PREDICTED
DESTINATION OF n-TH TRIP
AS FINAL DESTINATION

S217
TRANSMIT PREDICTION
RESULT INFORMATION ON
DESTINATION TO VEHICLE

END

S218
SET PREDICTED
DESTINATION OF n-TH TRIP
AS VIA POINT AND
(n + 1)-TH TRIP DEPARTURE
POINT B

S219
PREDICT (n + 1)-TH TRIP
DEPARTURE DAY OF WEEK CZ

S220
PREDICT (n + 1)-TH TRIP
DEPARTURE TIME RANGE
DZ

S221
UPDATE EXPLANATORY
VARIABLES FOR
DESTINATION PREDICTION

S222
$n \leftarrow n + 1$

# FIG. 13A

START

S1
SET
VIA POINT, ROUTE,
TRAVELING SECTION

S2
CALCULATE
EV APPROPRIATENESS,
SECTION ELECTRIC POWER
CONSUMPTION

S3
CALCULATE TE

S4
$CE \geq TE$?

NO

YES

S6
PERFORM FIRST
SORTING PROCESS

S7
IS THERE SORT SECTION
NUMBER x THAT SATISFIES
INEQUALITY (21)?

NO

YES

S5
SET ALL
TRAVELING
SECTIONS AS EV
SECTIONS

S8
SET ALL
TRAVELING
SECTIONS AS CS
SECTIONS

S9
CALCULATE SORT
SECTION NUMBER x
THAT SATISFIES
INEQUALITY (21)

END

S10
CREATE FIRST
TRAVELING PLAN

S11
CALCULATE
$DF_1$ & $HF_1$

S12
CALCULATE $TF_1$

1

# FIG. 13B

```
                          ( 1 )

  S13                              S16
  CALCULATE                        CALCULATE
  ROUTE ELECTRIC POWER             SORT TRIP NUMBER y THAT
  CONSUMPTION                      SATISFIES INEQUALITY (22)

  S14                              S17
  PERFORM SECOND                   PERFORM THIRD SORTING
  SORTING PROCESS                  PROCESS

  S15                              S18
  IS THERE SORT TRIP      NO       CALCULATE ΔCE
  NUMBER y THAT SATISFIES
  INEQUALITY (22)?

         YES

                    S19
                    IS THERE SECOND SORT        NO
                    SECTION NUMBER z THAT
                    SATISFIES INEQUALITY (23)?

              S20            YES                       S21
              CREATE SECOND                            CALCULATE
              TRAVELING PLAN                           SECOND SORT
                                                       SECTION NUMBER z
                                                       THAT SATISFIES
              S23                                      INEQULITY (23)
              CALCULATE
              DF₂ & HF₂
                                                           S22
              S24                                          CREATE SECOND
              CALCULATE                                    TRAVELING PLAN
              TF₂

  S25                                 NO
         TF1 < TF2?

                 YES

  S26                                  S27
  EMPLOY FIRST                         EMPLOY SECOND
  TRAVELING PLAN                       TRAVELING PLAN

                         END
```

# FIG. 14A

# FIG. 14B

**FIRST SORTING PROCESS**

| | DEPARTURE POINT | | | | | | | | | FINAL DESTINATION |
|---|---|---|---|---|---|---|---|---|---|---|
| TRIP NUMBER | 1 | 2 | 2 | 1 | 1 | 2 | 2 | 1 | 1 | 2 |
| ACTUAL SECTION NUMBER P | 3 → | 6 → | 10 → | 2 → | 4 → | 7 → | 9 → | 1 → | 5 → | 8 → |
| TRAVELING LOAD | | | | | | | | | | |
| EV APPROPRIATENESS | 3 | 3 | 3 | 2 | 2 | 2 | 2 | 1 | 1 | 1 |
| SECTION ELECTRIC POWER CONSUMPTION | 1 | 1 | 1 | 2 | 2 | 2 | 2 | 3 | 3 | 3 |
| SORT SECTION NUMBER Q | 1 | 2 | 3 | 4 | 5 | 6 | 7 | 8 | 9 | 10 |
| TRAVELING MODE | EV | EV | EV | EV | EV | EV | CS | CS | CS | CS |

EP 3 712 006 A1

# FIG. 14C

**FIRST TRAVELING PLAN**

|  | DEPARTURE POINT | | | | | VIA POINT | | | | FINAL DESTINATION |
|---|---|---|---|---|---|---|---|---|---|---|
| TRIP NUMBER | 1 | | | | | 2 | | | | |
| ACTUAL SECTION NUMBER P | 1 | 2 | 3 | 4 | 5 | 6 | 7 | 8 | 9 | 10 |
| TRAVELING LOAD | | | | | | | | | | |
| SORT SECTION NUMBER Q | 8 | 4 | 1 | 5 | 9 | 2 | 6 | 10 | 7 | 3 |
| TRAVELING MODE | CS | EV | EV | EV | CS | EV | EV | CS | CS | EV |
| SECTION FUEL CONSUMPTION | 2.5 | 0 | 0 | 0 | 2.5 | 0 | 0 | 2.5 | 2 | 0 |
| ROUTE WARM-UP FUEL CONSUMPTION | 2 | 0 | 0 | 0 | 0 | 0 | 0 | 2 | 0 | 0 |
| TRAVELING FUEL CONSUMPTION $DF_1$ | 9.5 | | | | | | | | | |
| WARM-UP FUEL CONSUMPTION $HF_1$ | 4 | | | | | | | | | |
| FIRST TOTAL FUEL CONSUMPTION $TF_1$ | 13.5 | | | | | | | | | |

EP 3 712 006 A1

# FIG. 15A

| | | | | | |
|---|---|---|---|---|---|
| DEPARTURE POINT | TRAVELING SECTION | EXPECTED ROUTE OF EACH TRIP | VIA POINT | | FINAL DESTINATION |

TRIP NUMBER — 1 → — 2 →

ACTUAL SECTION NUMBER P: — 1 → 2 → 3 → 4 → 5 → 6 → 7 → 8 → 9 → 10 →

TRAVELING LOAD

| EV APPROPRIATENESS | 1 | 2 | 3 | 2 | 1 | 3 | 2 | 1 | 2 | 3 |
|---|---|---|---|---|---|---|---|---|---|---|
| SECTION ELECTRIC POWER CONSUMPTION | 3 | 2 | 1 | 2 | 3 | 1 | 2 | 3 | 2 | 1 |
| ROUTE ELECTRIC POWER CONSUMPTION | 11 | | | | | 9 | | | | |

EP 3 712 006 A1

# FIG. 15B

**SECOND SORTING PROCESS**

# FIG. 15C

**THIRD SORTING PROCESS**

| | DEPARTURE POINT | | | | | FINAL DESTINATION | | | | |
|---|---|---|---|---|---|---|---|---|---|---|
| TRIP NUMBER | 2 | | | | | 1 | 1 | 1 | 1 | 1 |
| ACTUAL SECTION NUMBER P | 6 → 7 → 8 → 9 → 10 → | | | | | 3 → | 2 → | 4 → | 1 → | 5 → |
| TRAVELING LOAD | | | | | | | | | | |
| ROUTE ELECTRIC POWER CONSUMPTION | 9 | | | | | 11 | | | | |
| SORT TRIP NUMBER R | 1 | | | | | 2 | | | | |
| EV APPROPRIATENSS | – | | | | | 3 | 2 | 2 | 1 | 1 |
| SECTION ELECTRIC POWER CONSUMPTION | – | | | | | 1 | 2 | 2 | 3 | 3 |
| SECOND SORT SECTION NUMBER S | – | | | | | 1 | 2 | 3 | 4 | 5 |

EP 3 712 006 A1

# FIG. 15D

| | DEPARTURE POINT | | | | | | | | | FINAL DESTINATION |
|---|---|---|---|---|---|---|---|---|---|---|
| TRIP NUMBER | 2 | | | | | 1 | 1 | 1 | 1 | 1 |
| ACTUAL SECTION NUMBER P | 6 → | 7 → | 8 → | 9 → | 10 → | 3 → | 2 → | 4 → | 1 → | 5 → |
| ROUTE ELECTRIC POWER CONSUMPTION | 9 | | | | | 11 | | | | |
| SORT TRIP NUMBER R | 1 | | | | | 2 | | | | |
| EV APPROPRIATENSS | – | | | | | 3 | 2 | 2 | 1 | 1 |
| SECTION ELECTRIC POWER CONSUMPTION | – | | | | | 1 | 2 | 2 | 3 | 3 |
| SECOND SORT SECTION NUMBER S | – | | | | | 1 | 2 | 3 | 4 | 5 |
| TRAVELING MODE | EV | EV | EV | EV | EV | CS | CS | CS | CS | CS |

# FIG. 15E

EP 3 712 006 A1

**SECOND TRAVELING PLAN (WHEN THERE IS NO SECOND SORT SECTION NUMBER z THAT SATISFIES INEQUALITY (23))**

| | DEPARTURE POINT → ... → VIA POINT → ... → FINAL DESTINATION |
|---|---|

| | | | | | | | | | | |
|---|---|---|---|---|---|---|---|---|---|---|
| TRIP NUMBER | 1 | | | | | 2 | | | | |
| ACTUAL SECTION NUMBER P | 1 → | 2 → | 3 → | 4 → | 5 → | 6 → | 7 → | 8 → | 9 → | 10 → |
| TRAVELING LOAD | | | | | | | | | | |
| ROUTE ELECTRIC POWER CONSUMPTION | 11 | | | | | 9 | | | | |
| SORT TRIP NUMBER R | 2 | | | | | 1 | | | | |
| SECOND SORT SECTION NUMBER S | 4 | 3 | 1 | 3 | 5 | – | | | | |
| TRAVELING MODE | CS | CS | CS | CS | CS | EV | EV | EV | EV | EV |
| SECTION FUEL CONSUMPTION | 2.5 | 2 | 1.5 | 2 | 2.5 | 0 | 0 | 0 | 0 | 0 |
| ROUTE WARM-UP FUEL CONSUMPTION | 2 | 0 | 0 | 0 | 0 | 0 | 0 | 0 | 0 | 0 |
| TRAVELING FUEL CONSUMPTION $DF_2$ | 10.5 | | | | | | | | | |
| WARM-UP FUEL CONSUMPTION $HF_2$ | 2 | | | | | | | | | |
| SECOND TOTAL FUEL CONSUMPTION $TF_2$ | 12.5 | | | | | | | | | |

# FIG. 15F

| | DEPARTURE POINT | | | | | | | | | FINAL DESTINATION |
|---|---|---|---|---|---|---|---|---|---|---|

| | | | | | | | | | | |
|---|---|---|---|---|---|---|---|---|---|---|
| TRIP NUMBER | 2 → | | | | | 1 | 1 | 1 | 1 | 1 |
| ACTUAL SECTION NUMBER P | 6 → | 7 → | 8 → | 9 → | 10 → | 3 → | 2 → | 4 → | 1 → | 5 → |
| ROUTE ELECTRIC POWER CONSUMPTION | 9 | | | | | 11 | | | | |
| SORT TRIP NUMBER R | 1 | | | | | 2 | | | | |
| EV APPROPRIATENSS | - | | | | | 3 | 2 | 2 | 1 | 1 |
| SECTION ELECTRIC POWER CONSUMPTION | - | | | | | 1 | 2 | 2 | 3 | 3 |
| SECOND SORT SECTION NUMBER S | - | | | | | 1 | 2 | 3 | 4 | 5 |
| TRAVELING MODE | EV | EV | EV | EV | EV | EV | CS | CS | CS | CS |

(TRAVELING LOAD shown as a step graph between ACTUAL SECTION NUMBER P and ROUTE ELECTRIC POWER CONSUMPTION rows)

EP 3 712 006 A1

# FIG. 15G

**SECOND TRAVELING PLAN (WHEN THERE IS SECOND SORT SECTION NUMBER z THAT SATISFIES INEQUALITY (23))**

EP 3 712 006 A1

| | DEPARTURE POINT | | | | | VIA POINT | | | | FINAL DESTINATION |
|---|---|---|---|---|---|---|---|---|---|---|
| TRIP NUMBER | 1 | | | | | 2 | | | | |
| ACTUAL SECTION NUMBER P | 1 | 2 | 3 | 4 | 5 | 6 | 7 | 8 | 9 | 10 |
| TRAVELING LOAD | | | | | | | | | | |
| ROUTE ELECTRIC POWER CONSUMPTION | 11 | | | | | 9 | | | | |
| SORT TRIP NUMBER R | 2 | | | | | 1 | | | | |
| SECOND SORT SECTION NUMBER S | 4 | 3 | 1 | 3 | 5 | – | | | | |
| TRAVELING MODE | CS | CS | EV | CS | CS | EV | EV | EV | EV | EV |
| SECTION FUEL CONSUMPTION | 2.5 | 2 | 0 | 2 | 2.5 | 0 | 0 | 0 | 0 | 0 |
| ROUTE WARM-UP FUEL CONSUMPTION | 2 | 0 | 0 | 0 | 0 | 0 | 0 | 0 | 0 | 0 |
| TRAVELING FUEL CONSUMPTION $DF_2$ | 9 | | | | | | | | | |
| WARM-UP FUEL CONSUMPTION $HF_2$ | 2 | | | | | | | | | |
| SECOND TOTAL FUEL CONSUMPTION $TF_2$ | 11 | | | | | | | | | |

# FIG. 16A

| | DEPARTURE POINT | TRAVELING SECTION | | VIA POINT | EXPECTED ROUTE OF EACH TRIP | | | | | VIA POINT | | FINAL DESTINATION |
|---|---|---|---|---|---|---|---|---|---|---|---|---|
| TRIP NUMBER | | 1 | | | | 2 | | | | | 3 | |
| ACTUAL SECTION NUMBER P | 1 | 2 | 3 | 4 | 5 | 6 | 7 | 8 | | 9 | 10 | |
| TRAVELING LOAD | | | | | | | | | | | | |
| EV APPROPRIATENESS | 1 | 2 | 3 | 2 | 1 | 3 | 2 | 1 | | 2 | 3 | |
| SECTION ELECTRIC POWER CONSUMPTION | 3 | 2 | 1 | 2 | 3 | 1 | 2 | 3 | | 2 | 1 | |
| ROUTE ELECTRIC POWER CONSUMPTION | | 6 | | | | 11 | | | | | 3 | |

EP 3 712 006 A1

# FIG. 16B

**SECOND SORTING PROCESS**

| | DEPARTURE POINT | | FINAL DESTINATION |
|---|---|---|---|
| TRIP NUMBER | 3 → | 1 → | 2 → |
| ACTUAL SECTION NUMBER P | 9 → 10 → | 1 → 2 → 3 → | 4 → 5 → 6 → 7 → 8 → |
| TRAVELING LOAD | | | |
| ROUTE ELECTRIC POWER CONSUMPTION | 3 | 6 | 11 |
| SORT TRIP NUMBER R | 1 | 2 | 3 |

EP 3 712 006 A1

# FIG. 16C

**THIRD SORTING PROCESS**

DEPARTURE POINT ... FINAL DESTINATION

| | | | | | | | | | |
|---|---|---|---|---|---|---|---|---|---|
| TRIP NUMBER | 3 → | | 1 → | | 2 | 2 | 2 | 2 | 2 |
| ACTUAL SECTION NUMBER P | 9 → | 10 → | 1 → | 2 → | 3 → | 6 → | 4 → | 5 → | 7 → 8 → |
| TRAVELING LOAD | | | | | | | | | |
| ROUTE ELECTRIC POWER CONSUMPTION | 3 | | 6 | | | 11 | | | |
| SORT TRIP NUMBER R | 1 | | 2 | | | 3 | | | |
| EV APPROPRIATENESS | – | | | | | 3 | 2 | 2 | 1 | 1 |
| SECTION ELECTRIC POWER CONSUMPTION | – | | | | | 1 | 2 | 2 | 3 | 3 |
| SECOND SORT SECTION NUMBER S | – | | | | | 1 | 2 | 3 | 4 | 5 |
| TRAVELING MODE | EV | EV | EV | EV | EV | EV | CS | CS | CS | CS |

EP 3 712 006 A1

# FIG. 16D

**SECOND TRAVELING PLAN**

| | DEPARTURE POINT | | | VIA POINT | | | | | VIA POINT | FINAL DESTINATION |
|---|---|---|---|---|---|---|---|---|---|---|
| TRIP NUMBER | 1 | | | 2 | | | | | 3 | |
| ACTUAL SECTION NUMBER P | 1 | 2 | 3 | 4 | 5 | 6 | 7 | 8 | 9 | 10 |
| ROUTE ELECTRIC POWER CONSUMPTION | 6 | | | 11 | | | | | 3 | |
| SORT TRIP NUMBER R | 2 | | | 3 | | | | | 1 | |
| SECOND SORT SECTION NUMBER S | – | | | 2 | 3 | 1 | 4 | 5 | – | |
| TRAVELING MODE | EV | EV | EV | CS | CS | EV | CS | CS | EV | EV |

EP 3 712 006 A1

# FIG. 16E

**THIRD SORTING PROCESS**

DEPARTURE POINT | | | | | | | | | FINAL DESTINATION

| | | | | | | | | | |
|---|---|---|---|---|---|---|---|---|---|
| TRIP NUMBER | 3 → | | 1 | 2 | 1 | 2 | 2 | 1 | 2 | 2 |
| ACTUAL SECTION NUMBER P | 9 → 10 → | 3 → | 6 → | 2 → | 4 → | 7 → | 1 → | 5 → | 8 → |
| TRAVELING LOAD | | | | | | | | | |
| ROUTE ELECTRIC POWER CONSUMPTION | 3 | 6 | 11 | | | | | | |
| SORT TRIP NUMBER R | 1 | 2 | 3 | | | | | | |
| EV APPROPRIATENESS | - | 3 | 3 | 2 | 2 | 2 | 2 | 1 | 1 |
| SECTION ELECTRIC POWER CONSUMPTION | - | 1 | 1 | 2 | 2 | 2 | 2 | 3 | 3 |
| SECOND SORT SECTION NUMBER S | - | 1 | 2 | 3 | 4 | 5 | 6 | 7 | 8 |
| TRAVELING MODE | EV | EV | EV | EV | EV | EV | CS | CS | CS | CS |

EP 3 712 006 A1

# FIG. 16F

**ANOTHER SECOND TRAVELING PLAN**

|  | DEPARTURE POINT | | | VIA POINT | | | | | VIA POINT | FINAL DESTINATION |
|---|---|---|---|---|---|---|---|---|---|---|
| TRIP NUMBER | 1 | | | 2 | | | | | 3 | |
| ACTUAL SECTION NUMBER P | 1 | 2 | 3 | 4 | 5 | 6 | 7 | 8 | 9 | 10 |
| TRAVELING LOAD | | | | | | | | | | |
| ROUTE ELECTRIC POWER CONSUMPTION | 6 | | | 11 | | | | | 3 | |
| SORT TRIP NUMBER R | 2 | | | 3 | | | | | 1 | |
| SECOND SORT SECTION NUMBER S | 6 | 3 | 1 | 4 | 7 | 2 | 5 | 8 | – | |
| TRAVELING MODE | CS | EV | EV | EV | CS | EV | CS | CS | EV | EV |

EP 3 712 006 A1

Europäisches
Patentamt
European
Patent Office
Office européen
des brevets

# EUROPEAN SEARCH REPORT

**Application Number**

EP 20 16 3360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/120888 A1 (JINNO KUNIHIKO [JP]) 4 May 2017 (2017-05-04) | 1-4, 13-15 | INV. B60L53/00 |
| Y | * paragraph [0005] * | 5-11 | B60W10/06 |
| | * paragraph [0011] * | | B60W10/08 |
| | * paragraph [0029] - paragraph [0049] * | | B60W20/12 |
| | * figures 1-6 * | | B60W50/00 |
| | ----- | | |
| X | US 2018/345951 A1 (SAITO KAN [JP]) 6 December 2018 (2018-12-06) | 1,12-15 | |
| | * paragraph [0046] - paragraph [0050] * | | |
| | * paragraph [0058] * | | |
| | * paragraph [0072] * | | |
| | * paragraph [0098] * | | |
| | * figure 1 * | | |
| | ----- | | |
| Y | US 2017/120890 A1 (PAYNE JOSHUA D [US]) 4 May 2017 (2017-05-04) | 5-11 | |
| | * paragraph [0016] - paragraph [0017] * | | |
| | * paragraph [0027] * | | |
| | * paragraph [0030] * | | |
| | * figures 4, 6 * | | |
| | ----- | | TECHNICAL FIELDS SEARCHED (IPC) |
| | | | B60L B60W |

The present search report has been drawn up for all claims

| Place of search | Date of completion of the search | Examiner |
|---|---|---|
| The Hague | 6 August 2020 | Lutz, Tobias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 16 3360

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2020

| Patent document cited in search report | | Publication date | Patent family member(s) | | Publication date |
|---|---|---|---|---|---|
| US 2017120888 | A1 | 04-05-2017 | CN<br>JP<br>US | 106891884 A<br>2017081416 A<br>2017120888 A1 | 27-06-2017<br>18-05-2017<br>04-05-2017 |
| US 2018345951 | A1 | 06-12-2018 | BR<br>CN<br>EP<br>JP<br>KR<br>US | 102018010623 A2<br>108974012 A<br>3412498 A1<br>2018206008 A<br>20180132539 A<br>2018345951 A1 | 26-03-2019<br>11-12-2018<br>12-12-2018<br>27-12-2018<br>12-12-2018<br>06-12-2018 |
| US 2017120890 | A1 | 04-05-2017 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2008238972 A